# EUROPÄISCHE PATENTSCHRIFT

(11) **EP 3 829 807 B1**
(45) Veröffentlichungstag und Bekanntmachung des Hinweises auf die Patenterteilung: **19.03.2025**
(21) Anmeldenummer: 19752085.1
(22) Anmeldetag: 24.07.2019
(51) Int. Cl.: B23K 9/16, B23K 9/29, B23K 10/02, B23K 26/70, B23K 26/00, B23K 37/00, B23K 26/14, B23K 9/32, F16J 9/00, F16J 15/06

(54) **VERBINDUNGSTEILE FÜR EINEN BEARBEITUNGSKOPF ZUR THERMISCHEN MATERIALBEARBEITUNG, INSBESONDERE FÜR EINEN PLASMABRENNERKOPF**
CONNECTION PARTS FOR A MACHINING HEAD FOR THERMAL MATERIAL MACHINING, IN PARTICULAR FOR A PLASMA TORCH HEAD
PIÈCES DE LIAISON D'UNE TÊTE DE TRAITEMENT DESTINÉE À UN TRAITEMENT THERMIQUE DE MATÉRIAU, EN PARTICULIER D'UNE TÊTE DE CHALUMEAU À PLASMA

(30) Priorität: 27.07.2018 DE 102018005914; 17.10.2018 DE 102018125772
(43) Veröffentlichungstag der Anmeldung: 09.06.2021
(73) Patentinhaber: Kjellberg-Stiftung, 03238 Finsterwalde (DE)
(72) Erfinder: GÜNTHER, Vadim, 03238 Finsterwalde (DE); GRUNDKE, Timo, 03238 Finsterwalde (DE); LAURISCH, Frank, 03238 Finsterwalde (DE); KRINK, Volker, 03238 Finsterwalde (DE)
(74) Vertreter: Manasse, Uwe
(86) Internationale Anmeldenummer: PCT/DE2019/100680
(87) Internationale Veröffentlichungsnummer: WO 2020/020415

(56) Entgegenhaltungen:
- EP-A1- 2 942 144
- CN-A- 103 133 691
- DE-A1- 102009 060 849
- US-A- 4 649 257
- US-A1- 2005 082 263

## Beschreibung

Die vorliegende Erfindung betrifft Verbindungsteile für einen Bearbeitungskopf zur thermischen Materialbearbeitung entsprechend dem Oberbegriff der Ansprüche 1 und 5 (siehe z.B. EP 2 942 144 A1).

Bearbeitungsköpfe zur thermischen Materialbearbeitung, beispielsweise Plasmabrennerköpfe, Laserköpfe und Plasma-Laser-Köpfe, werden ganz allgemein zur thermischen Bearbeitung von Materialien unterschiedlichster Art, wie metallischer und nichtmetallischer Werkstoffe, so z. B. zum Schneiden, Schweißen, Beschriften oder ganz allgemein zum Erhitzen, eingesetzt.

Plasmabrenner bestehen üblicherweise aus einem Brennerkörper, einer Elektrode, einer Düse und einer Halterung dafür. Moderne Plasmabrenner verfügen zusätzlich über eine über der Düse angebrachte Düsenschutzkappe. Oft wird eine Düse mittels einer Düsenkappe fixiert.

Die durch den Betrieb des Plasmabrenners infolge der durch den Lichtbogen verursachten hohen thermischen Belastung verschleißenden Bauteile sind je nach Plasmabrennertyp insbesondere die Elektrode, die Düse, die Düsenkappe, die Düsenschutzkappe, die Düsenschutzkappenhalterung und die Plasmagasführungs- und Sekundärgasführungsteile. Diese Bauteile können durch einen Bediener leicht gewechselt werden und somit als Verschleißteile bezeichnet werden.

Die Plasmabrenner sind über Leitungen an eine Stromquelle und eine Gasversorgung angeschlossen, die den Plasmabrenner versorgen. Weiterhin kann der Plasmabrenner an einer Kühleinrichtung für ein Kühlmedium, wie zum Beispiel eine Kühlflüssigkeit, angeschlossen sein.

Besonders bei Plasmaschneidbrennern treten hohe thermische Belastungen auf. Das hat seine Ursache in der starken Einschnürung des Plasmastrahls durch die Düsenbohrung. Hier werden kleine Bohrungen verwendet, damit hohe Stromdichten von 50 bis 150 A/mm² in der Düsenbohrung, hohe Energiedichten von ca. 2×10⁶ W/cm² und hohe Temperaturen von bis zu 30.000 K erzeugt werden. Weiterhin werden im Plasmaschneidbrenner höhere Gasdrücke, in der Regel bis zu 12 bar, verwendet. Die Kombination aus hoher Temperatur und großer kinetischer Energie des durch die Düsenbohrung strömenden Plasmagases führen zum Aufschmelzen des Werkstücks und zum Austreiben der Schmelze. Es entsteht eine Schnittfuge und das Werkstück wird getrennt. Beim Plasmaschneiden werden oft oxidierende Gase, um un- oder niedriglegierte Stähle zu schneiden, und nichtoxidierende Gase eingesetzt, um hochlegierte Stähle oder Nichteisenmetalle zu schneiden.

Zwischen der Elektrode und der Düse strömt ein Plasmagas. Das Plasmagas wird durch ein Gasführungsteil, geführt. Dadurch kann das Plasmagas gezielt gerichtet werden. Oftmals ist es durch einen radialen und/oder axialen Versatz der Öffnungen in dem Plasmagasführungsteil in Rotation um die Elektrode versetzt. Das Plasmagasführungsteil besteht aus elektrisch isolierendem Material, da die Elektrode und die Düse voneinander elektrisch isoliert sein müssen. Dies ist notwendig, da die Elektrode und die Düse unterschiedliche elektrische Potentiale während des Betriebs des Plasmaschneidbrenners haben. Zum Betreiben des Plasmaschneidbrenners wird ein Lichtbogen zwischen der Elektrode und der Düse und/oder dem Werkstück erzeugt, der das Plasmagas ionisiert. Zum Zünden des Lichtbogens kann eine Hochspannung zwischen der Elektrode und Düse angelegt werden, die für eine Vorionisation der Strecke zwischen der Elektrode und Düse und somit für die Ausbildung eines Lichtbogens sorgt. Der zwischen Elektrode und Düse brennende Lichtbogen wird auch als Pilotlichtbogen bezeichnet.

Der Pilotlichtbogen tritt durch die Düsenbohrung aus und trifft auf das Werkstück und ionisiert die Strecke zum Werkstück. Dadurch kann sich der Lichtbogen zwischen Elektrode und Werkstück ausbilden. Dieser Lichtbogen wird auch als Hauptlichtbogen bezeichnet. Während des Hauptlichtbogens kann der Pilotlichtbogen abgeschaltet werden. Er kann aber auch weiterbetrieben werden. Beim Plasmaschneiden wird dieser oft abgeschaltet, um die Düse nicht noch zusätzlich zu belasten.

Insbesondere die Elektrode und die Düse werden thermisch hoch beansprucht und müssen gekühlt werden. Zugleich müssen sie auch den elektrischen Strom, der zur Ausbildung des Lichtbogens benötigt wird, leiten. Deshalb werden dafür gut Wärme und elektrisch gut leitende Werkstoffe, in der Regel Metalle, zum Beispiel Kupfer, Silber, Aluminium, Zinn, Zink, Eisen oder Legierungen, in denen zumindest eines dieser Metalle enthalten ist, verwendet.

Die Elektrode besteht oft aus einem Elektrodenhalter und einem Emissionseinsatz, der aus einem Werkstoff hergestellt ist, der eine hohe Schmelztemperatur ≥ 2000°C) und eine geringere Elektronenaustrittsarbeit als der Elektrodenhalter aufweist. Als Werkstoffe für den Emissionseinsatz werden beim Einsatz nicht oxidierende Plasmagase, wie bspw. Argon, Wasserstoff, Stickstoff, Helium und Gemische derselben, Wolfram und beim Einsatz oxidierender Gase, wie zum Beispiel Sauerstoff, Luft und Gemische derselben, Stickstoff-Sauerstoff-Gemisch und Gemische mit anderen Gasen, Hafnium oder Zirkonium eingesetzt. Der Hochtemperaturwerkstoff kann in einen Elektrodenhalter, der aus gut Wärme und elektrisch gut leitendem Werkstoff besteht, eingepasst, zum Beispiel mit Form- und/oder Kraftschluss, eingepresst werden.

Die Kühlung der Elektrode und Düse kann durch Gas, zum Beispiel das Plasmagas oder ein Sekundärgas, das an der Außenseite der Düse entlangströmt, erfolgen. Effektiver ist jedoch die Kühlung mit einer Flüssigkeit, zum Beispiel Wasser. Dabei werden die Elektrode und/oder die Düse oft direkt mit der Flüssigkeit gekühlt, d.h. die Flüssigkeit befindet sich in direktem Kontakt mit der Elektrode und/oder der Düse. Um die Kühlflüssigkeit um die Düse zu führen, befindet sich um die Düse eine Düsenkappe, deren Innenfläche mit der Außenfläche der Düse einen Kühlmittelraum bildet, in dem das Kühlmittel strömt.

Bei modernen Plasmaschneidbrennern befindet sich außerhalb der Düse und/oder der Düsenkappe zusätzlich eine Düsenschutzkappe. Die Innenfläche der Düsenschutzkappe und die Außenfläche der Düse oder der Düsenkappe bilden einen Raum, durch den ein Sekundär- oder Schutzgas strömt. Das Sekundär- oder Schutzgas tritt aus der Bohrung der Düsenschutzkappe aus und umhüllt den Plasmastrahl und sorgt für eine definierte Atmosphäre um denselben. Zusätzlich schützt das Sekundärgas die Düse und die Düsenschutzkappe vor Lichtbögen, die sich zwischen diesem und dem Werkstück ausbilden können. Diese werden als Doppellichtbögen bezeichnet und können zur Beschädigung der Düse führen. Insbesondere beim Einstechen in das Werkstück werden die Düse und die Düsenschutzkappe durch heißes Hochspritzen von Material stark belastet. Das Sekundärgas, dessen Volumenstrom beim Einstechen gegenüber dem Wert beim Schneiden erhöht sein kann, hält das hochspritzende Material von der Düse und der Düsenschutzkappe fern und schützt so vor Beschädigung.

Die Düsenschutzkappe wird ebenfalls thermisch hoch beansprucht und muss gekühlt werden. Deshalb werden dafür gut Wärme und elektrisch gut leitende Werkstoffe, in der Regel Metalle, zum Beispiel Kupfer, Silber, Aluminium, Zinn, Zink, Eisen oder Legierungen, in denen zumindest eines dieser Metalle enthalten ist, verwendet.

Die Elektrode und die Düse können auch indirekt gekühlt werden. Dabei stehen sie mit einem Bauteil, das aus einem gut Wärme und elektrisch gut leitendem Werkstoff, in der Regel ein Metall, zum Beispiel Kupfer, Silber, Aluminium, Zinn, Zink, Eisen oder Legierungen, in denen zumindest eines dieser Metalle enthalten ist, besteht, durch Berührung in Kontakt. Dieses Bauteil wird wiederum direkt gekühlt, d.h., dass es sich mit dem meist strömenden Kühlmittel direkt in Kontakt befindet. Diese Bauteile können gleichzeitig als Halterung oder Aufnahme für die Elektrode, die Düse, die Düsenkappe oder die Düsenschutzkappe dienen und die Wärme ab- und den Strom zuführen.

Es besteht auch die Möglichkeit, dass nur die Elektrode oder nur die Düse mit Flüssigkeit gekühlt werden.

Die Düsenschutzkappe wird meist nur durch das Sekundärgas gekühlt. Es sind auch Anordnungen bekannt, bei denen die Sekundärgaskappe direkt oder indirekt durch eine Kühlflüssigkeit gekühlt wird.

Laserköpfe bestehen im Wesentlichen aus einem Körper, einem optischen System in dem Körper zur Fokussierung des Laserstrahls, Anschlüssen für die Laserlichtzuführung bzw. den Lichtwellenleiter, Gas (Schneidgas und Sekundärgas) und Kühlmedium und einer Düse mit einer Öffnung, die den Gasstrahl des Gases formt und durch die auch der Laserstrahl aus dem Laserkopf austritt. Der Laserstrahl trifft auf ein Werkstück und wird absorbiert.

Beim Laserschneiden wird in Kombination mit dem Schneidgas das erhitzte Werkstück aufgeschmolzen und ausgetrieben (Laserschmelzschneiden) oder oxidiert (Laserbrennschneiden).

Es ist beim Laserschneidkopf möglich, dass sich zusätzlich außerhalb der Düse eine Düsenschutzkappe befindet. Die Innenfläche der Düsenschutzkappe und die Außenfläche der Düse oder der Düsenkappe bilden einen Raum, durch den ein Sekundär- oder Schutzgas strömt. Das Sekundär- oder Schutzgas tritt aus der Bohrung der Düsenschutzkappe aus und umhüllt den Laserstrahl und sorgt für eine definierte Atmosphäre um denselben. Zusätzlich schützt das Sekundärgas die Düse. Insbesondere beim Einstechen in das Werkstück wird die Düse durch heißes Hochspritzen von Material stark belastet. Das Sekundärgas, dessen Volumenstrom beim Einstechen gegenüber dem Wert beim Schneiden erhöht sein kann, hält das hochspritzende Material von der Düse fern und schützt so vor Beschädigung.

Bearbeitungsköpfe, in denen sowohl das Plasma- als auch Laserverfahren gleichzeitig zum Einsatz kommen, sogenannte Plasma-Laser-Schneidköpfe, weisen Merkmale des Plasmbrennerkopfes und des Laserkopfes auf. Hier werden die Merkmale und damit auch die Vorteile beider Verfahren miteinander kombiniert.

Mit dem Plasmaverfahren und dem Laserverfahren und der Kombination kann Material grundsätzlich geschnitten, geschweißt, beschriftet, abgetragen oder allgemein erwärmt werden.

In Plasmabrennern oder Bearbeitungsköpfen für thermische Verfahren, beispielsweise zum Schneiden oder Schweißen, werden oftmals Teile ineinandergefügt, die mit Fluiden (Gase, Flüssigkeiten) in Berührung kommen. Dabei strömen diese Fluide an Flächen der Brennerteile entlang oder Durchströmen diese durch Öffnungen (Bohrungen, Kanäle). Dabei kann es sich um Einzelteile, bspw. Verschleißteile, handeln, die während des Betriebes verschleißen und öfters vom Bediener ausgetauscht werden müssen.

Es kann sich aber auch um aus mehreren Teilen zusammengebaute Baugruppen, z. B. einen Brennerkopf handeln, der öfter gewechselt werden soll.

Dies soll möglichst einfach und sicher erfolgen können. Dabei kommt es darauf an, dass möglichst wenig Kraft für das Einfügen insbesondere der Verschleißteile in die Verschleißteilhalterung oder der Verschleißteile ineinander benötigt und dennoch eine dichte Verbindung gewährleistet wird. Dicht bedeutet dabei, dass kein Fluid, also kein Gas und/oder keine Flüssigkeit bis zu einem Druck, bspw. bis 20 bar, durch die Dichtstelle vom inneren Bereich nach außen oder von außen nach innen dringt.

Zusätzlich ist oftmals gleichzeitig eine genaue axiale, radiale oder rotatorische Positionierung der Verschleißteile zueinander oder der Verschleißteile zu einer Verschleißteilhalterung notwendig.

Die bislang bekannten Anordnungen bestehen aus einer sich auf der zylindrischen Außen- oder der Innenfläche auf einem kreisringförmigen Umfang erstreckenden Nut, in der sich ein O-Ring befindet und einer gegenüberliegenden ebenfalls zylindrischen Innen- oder Außenfläche der Verschleißteilhalterung oder eines anderen Verschleißteils, die sich ebenfalls auf einem kreisringförmigen Umfang erstreckt. Der O-Ring ragt auf seinem Umfang aus der Nut heraus und wird beim Fügen durch die Berührung mit der gegenüberliegenden Fläche in die Nut gepresst und dabei verformt. Der O-Ring besteht aus elastisch verformbarem Material, bspw. einem Elastomer. Der Querschnitt der Nut sollte mindestens die Größe des Querschnittes der Schnur des O-Rings haben.

Die gegenüberliegende Fläche der Verschleißteilhalterung oder des Verschleißteils besteht meistens aus einem elastisch nicht oder nur wenig verformbaren Material bspw. einem Metall, Keramik oder einem harten Kunststoff. Die Oberfläche des O-Rings berührt dabei während des Fügens auf ihrem gesamten Umfang die gegenüberliegende Fläche, bevor die Verformung des Rundrings einsetzt. Dadurch ist ein hoher Kraftaufwand beim Fügen notwendig.

Zusätzlich ist oftmals eine eindeutige rotatorische Positionierung um eine Längsachse eines Verbindungsteils zwischen den Verbindungsteilen oder den Verschleißteilen und einer Verschleißteilhalterung oder auch zwischen den Verschleißteilen notwendig. Auch dies ist mit der bekannten Anordnung nicht möglich.

Es ist das Ziel der vorliegenden Erfindung, die zum Fügen benötigte Kraft zu reduzieren und/oder nach Möglichkeit eine eindeutige axiale, radiale und rotatorische Positionierung zu einer Längsachse zwischen den Verbindungsteilen, bspw. Verschleißteilen, zu gewährleisten.

Diese Aufgabe wird durch ein Verbindungsteil 100, 200 für einen Bearbeitungskopf zur thermischen Materialbearbeitung entsprechend Anspruch 1 gelöst, das Verbindungsteil umfassend einen Körper 106, 206, der sich entlang einer Längsachse L erstreckt, mit einer Außenfläche 110, 112, 120, 212 und/oder Innenfläche 140, 240, 244 mit einem vorderen Ende 102, 202 und einem hinteren Ende 104, 204, wobei die Außenfläche 110 und/oder die Innenfläche 240 zumindest eine sich in Umfangsrichtung erstreckende Nut 130, 230 mit einer Nuttiefe T130, T112, T120, T230 aufweist, wobei der Nutboden 116, 216 der Nut 130, 230 entlang des Umfangs unterschiedliche sich durch die Längsachse L und senkrecht zur Längsachse L erstreckende Abstände D116 zwischen den gegenüberliegenden Abschnitten des Nutbodens 116, 216 der Nut 130, 230 aufweist und/oder wobei zumindest eine Außenfläche 112 und/oder 120 entlang des Umfangs unterschiedliche sich durch die Längsachse L und senkrecht zur Längsachse L erstreckende Abstände D112, D120 zwischen den gegenüberliegenden Abschnitten der Außenfläche 112, 120 aufweist und/oder dass zumindest eine Innenfläche 244 entlang des Umfangs unterschiedliche sich durch die Längsachse L und senkrecht zur Längsachse L erstreckende Abstände D244 zwischen den gegenüberliegenden Abschnitten der Innenfläche 244 aufweist. Die Außenfläche und/oder die Innenfläche ist somit nicht kreisförmig, bspw. elliptisch.

Diese Aufgabe wird weiter durch ein Verbindungsteil 100, 200 für einen Bearbeitungskopf zur thermischen Materialbearbeitung entsprechend Anspruch 5 gelöst, das Verbindungsteil umfassend einen Körper 106, 206 der sich entlang einer Längsachse L erstreckt, mit einer Außenfläche 110, 112, 120, 212 und/oder Innenfläche 140, 240, 244 mit einem vorderen Ende 102, 202 und einem hinteren Ende 104, 204, wobei die Außenfläche 110 und/oder die Innenfläche 240 zumindest eine sich in Umfangsrichtung erstreckende Nut 130, 230 mit einer Nutbreite B130, B230 und einer Nuttiefe T130, T112, T120, T230 mit einem O-Ring 132, 232 oder Profilring mit einer Schnurstärke Sa aufweist, wobei die innerste zur Längsachse L gerichtete Fläche 132i des O-Rings 132, 232 entlang des Umfangs unterschiedliche sich durch die Längsachse L und senkrecht zur Längsachse L erstreckende Abstände D132i zwischen den gegenüberliegenden Abschnitten der innersten Fläche 132i des O-Rings aufweist und/oder wobei die äußerste Fläche 132a des O-Rings 132, 232 entlang des Umfangs unterschiedliche sich durch die Längsachse L und senkrecht zur Längsachse L erstreckende Abstände D132a zwischen den gegenüberliegenden Abschnitten der äußersten Fläche 132a des O-Rings aufweist. Die innerste zur Längsachse gerichtete Fläche und/oder die äußerste Fläche des O-Rings nicht kreisförmig, zum Beispiel elliptisch.

Zumindest in einer besonderen Ausführungsform werden die Vorteile der Erfindung auch bei recht geringer Veränderung der Baugröße erzielt, um platzsparende Anordnungen, insbesondere bei Verschleißteilen, zu realisieren.

Dabei zeigt/zeigen:
- Figur 1: einer Seitenansicht von einem Verbindungsteil;
- Figuren 1a bis 1c: beispielhaft unterschiedliche Nutformen;
- Figur 1d: das Verbindungsteil von Figur 1 mit einem O-Ring 1 in Schnittansicht;
- Figur 2: eine Schnittansicht von einem weiteren Verbindungsteil;
- Figuren 3a und 3b: die Verbindung aus dem Verbindungsteil von Figur 1d und dem Verbindungsteil von Figur 2 in unterschiedlich gefügten Zuständen in Schnittansicht;
- Figur 4: eine Seitenansicht von einem weiteren besonderen Verbindungsteil;
- Figur 4a: das Verbindungsteil von Figur 4 mit einem O-Ring;
- Figuren 5a und 5b: die Verbindung aus dem Verbindungsteil von Figur 4a und dem Verbindungsteil von Figur 2 in unterschiedlich gefügten Zuständen in Schnittansicht;
- Figur 6: eine Schnittansicht eines weiteren besonderen Verbindungsteils;
- Figur 6a: das Verbindungsteil von Figur 6 mit einem O-Ring in Schnittansicht;
- Figur 7: eine Seitenansicht von einem weiteren besonderen Verbindungsteil;
- Figuren 8a und 8b: die Verbindung aus dem Verbindungsteil von Figur 7 und dem Verbindungsteil von Figur 6a in unterschiedlich gefügten Zuständen in Schnittansicht;
- Figur 9: eine Schnittansicht eines weiteren besonderen Verbindungsteils;
- Figur 9a: das Verbindungsteil von Figur 9 mit einem O-Ring in Schnittansicht;
- Figur 10: eine Seitenansicht eines weiteren besonderen Verbindungsteils;
- Figuren 11a und 11b: die Verbindung aus dem Verbindungsteil von Figur 10 und dem Verbindungsteil von Figur 9a in unterschiedlich gefügten Zuständen in Schnittansicht;
- Figur 12: eine Seitenansicht von einem weiteren besonderen Verbindungsteil;
- Figur 12a: die Ansicht A des Verbindungsteils von Figur 12;
- Figur 12b: den Schnitt B-B des Verbindungsteils von Figur 12;
- Figur 12c: das Verbindungsteil von Figur 12 mit einem O-Ring in Schnittansicht;
- Figur 12d: den Schnitt C-C des Verbindungsteils von Figur 12c;
- Figur 13: eine Schnittansicht eines weiteren besonderen Verbindungsteils;
- Figur 13a: die geschnittene Ansicht C-C des Verbindungsteils von Figur 13;
- Figur 13b: die Ansicht B des Verbindungsteils von Figur 13;
- Figur 14a und 14b: die Verbindung aus dem Verbindungsteil von Figur 12c und dem Verbindungsteil von Figur 13 in unterschiedlich gefügten Zuständen in Schnittansicht;
- Figur 15: eine Seitenansicht eines weiteren besonderen Verbindungsteils;
- Figur 15a: die Ansicht A des Verbindungsteils von Figur 15;
- Figur 15b: den Schnitt B-B des Verbindungsteils von Figur 15;
- Figur 15c: das Verbindungsteil von Figur 15 mit einem O-Ring in Schnittansicht;
- Figur 15d: den Schnitt C-C des Verbindungsteils von Figur 15c;
- Figur 16: eine geschnittene Ansicht eines weiteren besonderen Verbindungsteils;
- Figur 16a: die geschnittene Ansicht C-C des Verbindungsteils von Figur 16;
- Figur 16b: die Ansicht B des Verbindungsteils von Figur 16;
- Figuren 17a und 17b: die Verbindung aus dem Verbindungsteil von Figur 15 bzw. 15c und dem Verbindungsteil von Figur 16 in unterschiedlich gefügten Zuständen in Schnittansicht;
- Figur 18: eine Seitenansicht eines weiteren besonderen Verbindungsteils;
- Figur 18a: die Ansicht A des Verbindungsteils von Figur 18;
- Figur 18b: den Schnitt B-B des Verbindungsteils von Figur 18;
- Figur 18c: das Verbindungsteil von Figur 18 mit einem O-Ring in Schnittansicht;
- Figur 18d: den Schnitt C-C des Verbindungsteils von Figur 18c;
- Figur 19: eine geschnittene Ansicht eines weiteren besonderen Verbindungsteils;
- Figur 19a: die geschnittene Ansicht C-C des Verbindungsteils von Figur 19;
- Figur 19b: die Ansicht B des Verbindungsteils von Figur 19a;
- Figuren 20a und 20b: die Verbindung aus dem Verbindungsteil von Figur 18c und dem Verbindungsteil von Figur 19 in unterschiedlich gefügten Zuständen in Schnittansicht;
- Figur 21: eine Düse für einen Plasmabrenner;
- Figur 21a: die Düse von Figur 21 mit einem O-Ring in Schnittansicht; und
- Figur 22: Bestandteile eines Plasmabrennerkopfs

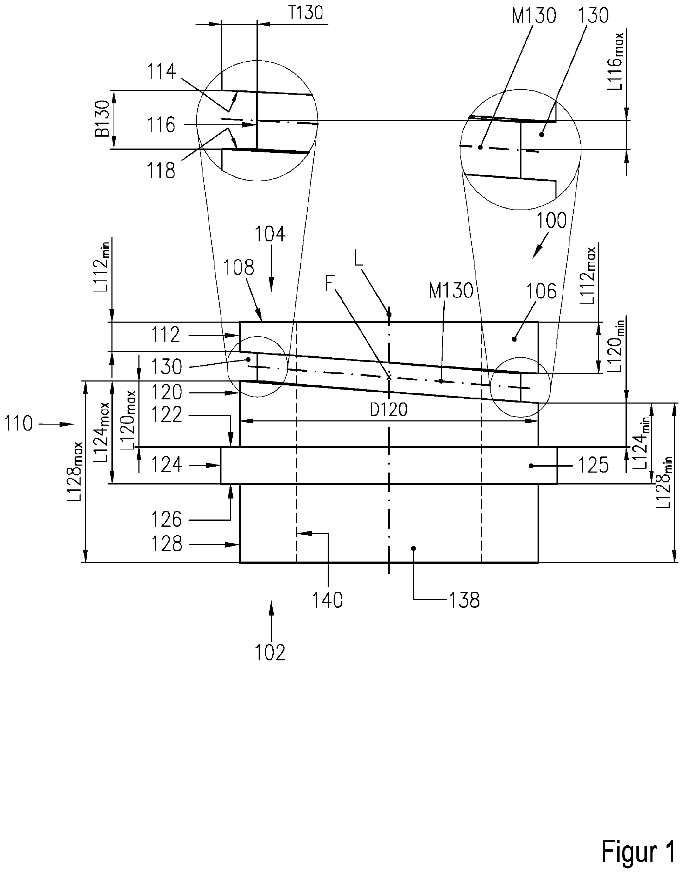

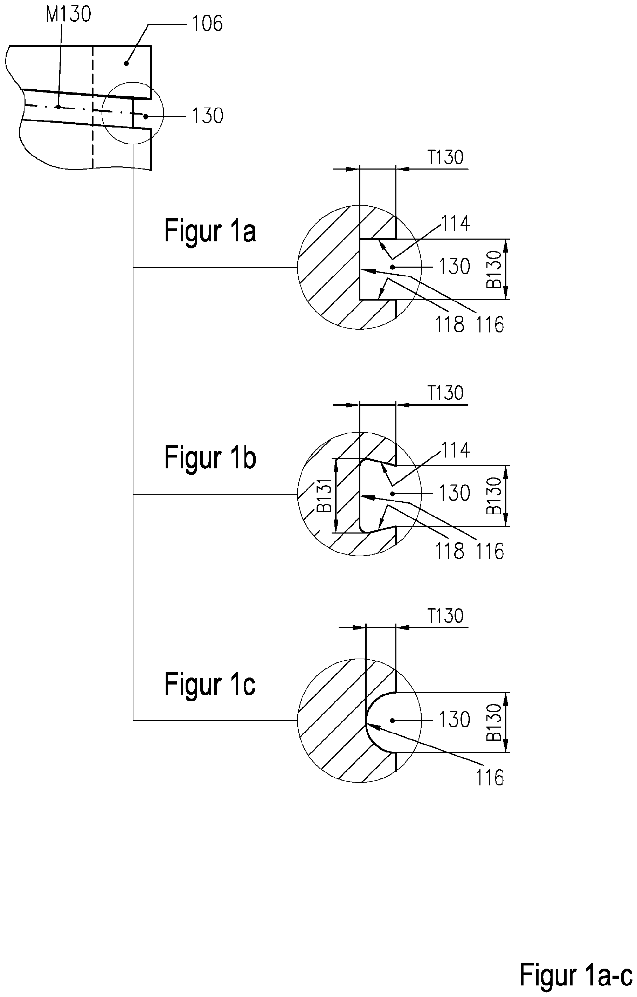

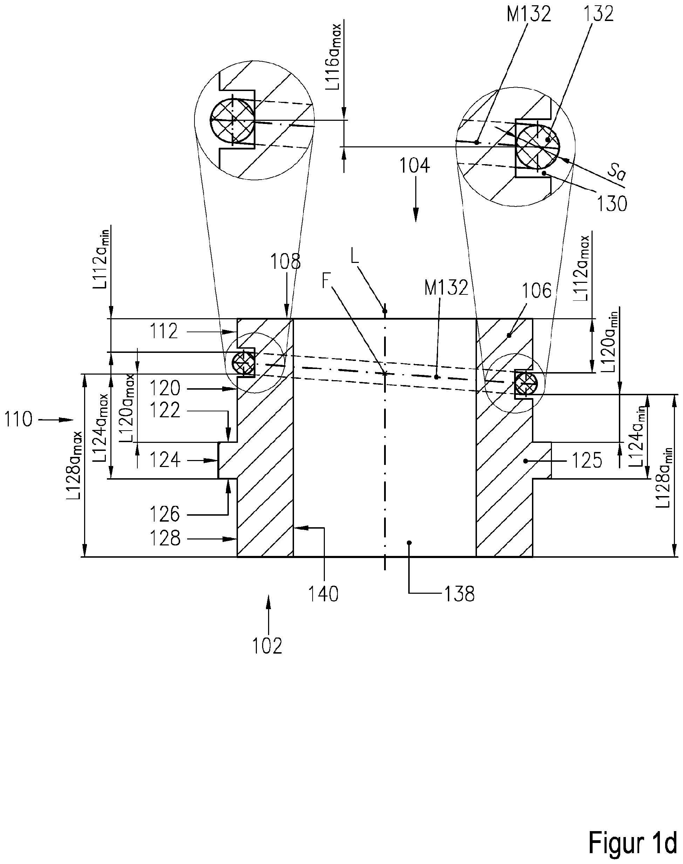

in Schnittansicht. **Figur 1** zeigt ein erstes Verbindungsteil 100, umfassend einen Körper 106, der sich entlang einer Längsachse L erstreckt, mit einem vorderen Ende 102 und einem hinteren Ende 104, mit einer Innenfläche 140 und mit einer Außenfläche 110, die mehrere Flächen 108, 112, 114, 116, 118, 120, 122, 124, 126 und 128 umfasst.

Die Außenfläche 110 weist einen umlaufende Nut 130 auf. Die Nut 130 wird begrenzt durch seitlichen Flächen 114 (zum hinteren Ende 104 gewandt) und 118 (zum vorderen Ende 102 gewandt) sowie einen Nutboden 116. Die Nut 130 hat eine Nutbreite B130 und eine Nuttiefe T130 und ist geeignet, einen O-Ring oder einen Profilring aufzunehmen. Die Nut 130 erstreckt sich über den Umfang derart, weist aber zu einem virtuellen Fixpunkt F auf der Längsachse L umlaufend in Bezug zu einer virtuelle Mittellinie M130 auf dem Nutboden 116 unterschiedliche Abstände L116 parallel zur Längsachse L auf. Ein maximaler Abstand L116ₘₐₓ beträgt hier die Hälfte der Nutbreite B130. Im Beispiel beträgt die Nutbreite 2 mm, also beträgt L116ₘₐₓ 1 mm.

Weiterhin befindet sich auf der Außenfläche 110 ein Flansch 125, der durch die Flächen (Außenflächen) 122 (zum hinteren Ende gewandt), 124 und 126 (zum vorderen Ende gewandt) begrenzt wird.

Das hintere Ende 104 hat eine Fläche (Außenfläche) 108.

Die erste seitliche Begrenzung der Nut 130, die Fläche 114, hat parallel zur Längsachse L zum hinteren Ende 104 des Verbindungsteils 100 unterschiedliche Abstände L112. Der minimale Abstand ist mit L112ₘᵢₙ und der maximale Abstand mit L112ₘₐₓ bezeichnet.

Die zweite seitliche Begrenzung der Nut 130, die Fläche 118, hat parallel zur Längsachse L zum vorderen Ende 102 des Verbindungsteils 100 unterschiedliche Abstände L128, zur Fläche 122 des Flansches 125 unterschiedliche Abstände L120 und zur Fläche 126 des Flansches 125 unterschiedliche Abstände L124. Die in der Figur 1 gezeigten minimalen Abstände von L128, L124 und L120 sind mit L128ₘᵢₙ, L124ₘᵢₙ und L120ₘᵢₙ und die maximalen Abstände mit L128ₘₐₓ, L124ₘₐₓ und L120ₘₐₓ bezeichnet.

Die seitliche Begrenzungen - die Flächen 114 und 118 - der Nut 130 haben ebenso unterschiedlich große parallel zur Längsachse L verlaufende Abstände zum hinteren Ende 104 und zum vorderen Ende 102 sowie zu den Flächen 122 und 126 des Flansches 125. Die Differenz zwischen dem größten und dem kleinsten Abstand zwischen ein und derselben seitlichen Begrenzung der Nut, der Seitenfläche 114 bzw. 118, und dem hinteren Ende 104 oder dem vorderen Ende 102 oder einer Fläche 122 oder 126 des Flansches 125 entspricht in diesem Beispiel der Hälfte der Nutbreite von 2 mm und ist hier 1 mm.

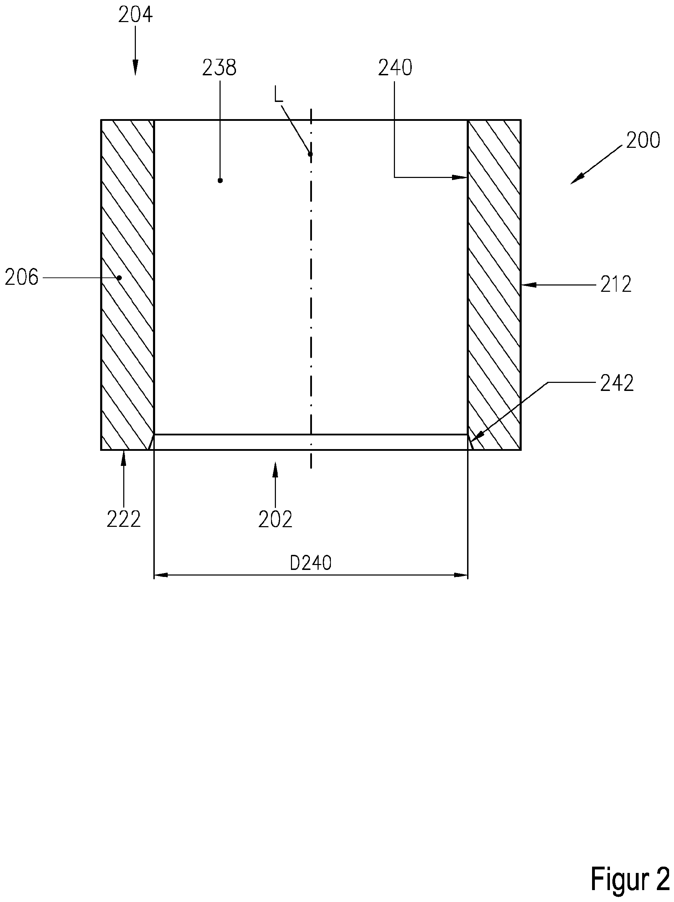

Die Fläche 122 des Flansches 125 kann als axialer Anschlag bzw. zur Positionierung axial zur Längsachse L in einem anderen Verbindungsteil, beispielsweise einem in der Figur 2 gezeigten Verbindungsteil 200 dienen.

Die Außenflächen 112, 120 und 124 können zur Zentrierung radial zur Längsachse L dienen, wenn das Verbindungsteil 100 beispielsweise in das in der Figur 2 gezeigte Verbindungsteil 200 eingesetzt wird.

Das Verbindungsteil 100 hat im Inneren entlang der Längsachse L eine durchgehende Öffnung 138 mit einer Innenfläche 140. Durch diese Öffnung 138 kann im eingebauten Zustand ein Fluid strömen.

Die **Figuren 1a bis 1c** zeigen beispielhaft unterschiedliche Nutformen der Nut 130, Figur 1a eine Rechtecknut, die Figur 1b eine sogenannte Trapeznut und die Figur 1c eine Rundnut. In der Mitte des Nutbodens 116 verläuft umlaufend eine virtuelle Mittellinie M130 der Nut 130. Auch diese virtuelle Mittellinie weist auf dem Umfang umlaufend unterschiedliche Abstände zum Fixpunkt F auf.

**Figur 1d** zeigt das Verbindungsteil 100 aus Figur 1 mit einem O-Ring 132 in der Nut 130.

Der O-Ring 132 hat in diesem Beispiel eine Schnurstärke Sa von 1,5 mm. In der Mitte der Schnur befindet sich eine virtuelle Mittellinie M132. Der O-Ring 132 erstreckt sich über den Umfang in der Nut 130. Eine virtuelle Mittellinie M132 weist aber zu einem Fixpunkt F auf der Längsachse L umlaufend unterschiedliche Abstände L116a parallel zur Längsachse L auf. Der maximale Abstand L116aₘₐₓ beträgt in diesem Beispiel 2/3 der Schnurstärke Sa. Im Beispiel beträgt die Schnurstärke Sa 1,5 mm, also beträgt der maximale Abstand L116aₘₐₓ 1 mm.

Die in Richtung zum hinteren Ende 104 gewandte Außenfläche des O-Rings 132 hat parallel zur Längsachse L zum hinteren Ende 104 unterschiedliche Abstände L112a. Der minimale Abstand ist mit L112aₘᵢₙ und der maximale Abstand mit L112aₘₐₓ bezeichnet.

Die in Richtung zum vorderen Ende 102 zugewandte Außenfläche des O-Rings 132 hat parallel zur Längsachse L zum vorderen Ende 102 unterschiedliche Abstände L128a, zur Fläche 122 des Flansches 125 unterschiedliche Abstände L120a und zur Fläche 126 des Flansches 125 unterschiedliche Abstände L124a. Die in der Figur 1d gezeigten minimalen Abstände von L128a, 124a und L120a sind mit L128aₘᵢₙ, 124aₘᵢₙ und L120aₘᵢₙ und die maximalen Abstände mitL128aₘₐₓ, L124aₘₐₓ und L120aₘₐₓ bezeichnet.

Die jeweiligen dem näheren Ende zugewandten Außenflächen des O-Rings 132 haben also parallel zur Längsachse L unterschiedlich große axiale Abstände zum hinteren Ende 104 und zum vorderen Ende 102 sowie zu den Flächen 122 und 126 des Flansches 125.

Die Differenz zwischen dem größten und dem kleinsten Abstand zwischen der zum hinteren Ende 104 gewandten Außenfläche des O-Rings 132 und dem hinteren Ende 104 und die Differenz zwischen dem größten und dem kleinsten Abstand zwischen der zum vorderen Ende 102 gewandten Außenfläche des O-Rings 132 und dem vorderen Ende 102 oder einer Fläche 122 oder 126 des Flansches entspricht in diesem Beispiel 2/3 der Schnurstärke Sa, hier 1 mm.

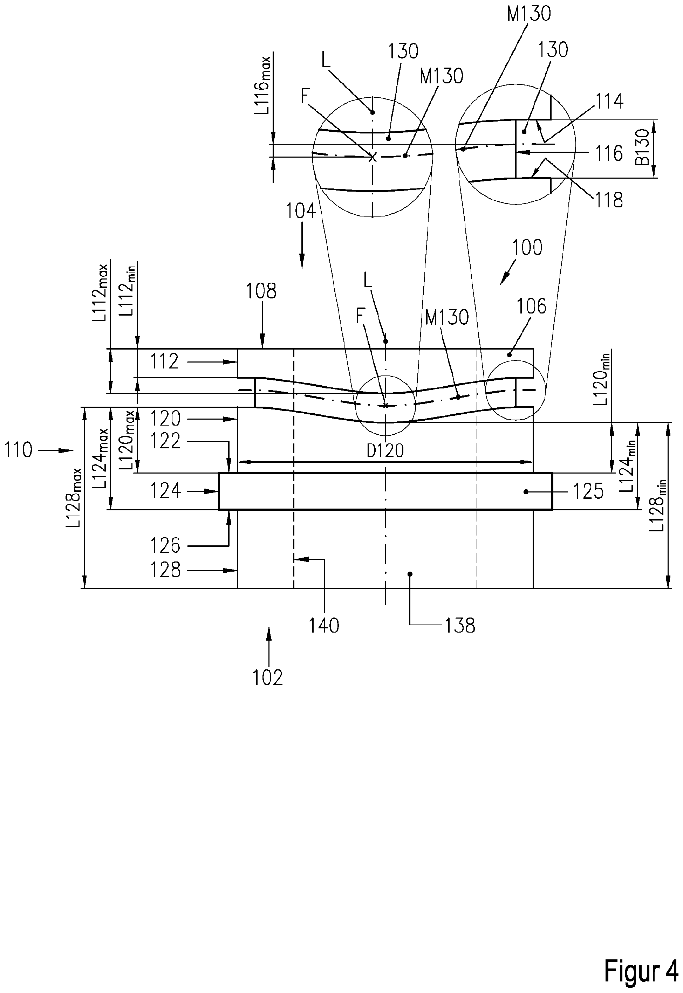

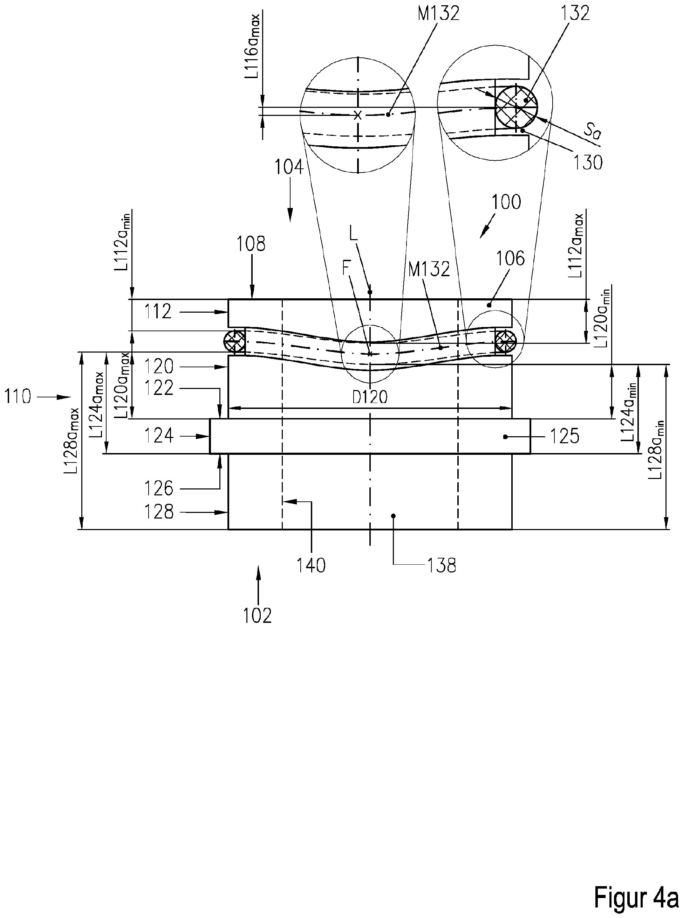

**Figur 2** zeigt beispielhaft ein zweites Verbindungsteil 200, in das das Verbindungsteil 100 aus Figur 1d und Figur 4a gesteckt bzw. gefügt werden kann. Es umfasst einen Körper 206, der sich entlang einer Längsachse L erstreckt, mit einem vorderen Ende 202 und einem hinteren Ende 204, mit einer Außenfläche 212 und einer Innenfläche 240. Zwischen dem vorderen Ende 202 und dem hinteren Ende 204 erstreckt sich eine Öffnung 238. Am vorderen Ende 202 befindet sich eine Fläche 222, die als Anschlagfläche für die Fläche 122 des Verbindungsteils 100 aus Figur 1 dienen kann und eine Fase 242, die das Einfügen des Verbindungsteils 100 in die Öffnung 238 des Verbindungsteils 200 erleichtert.

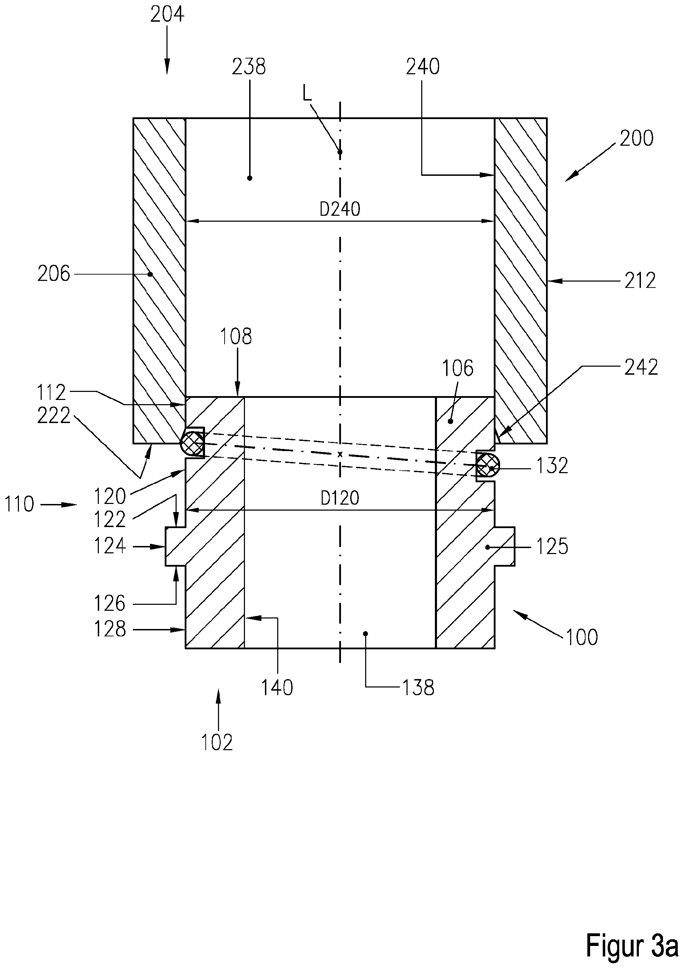

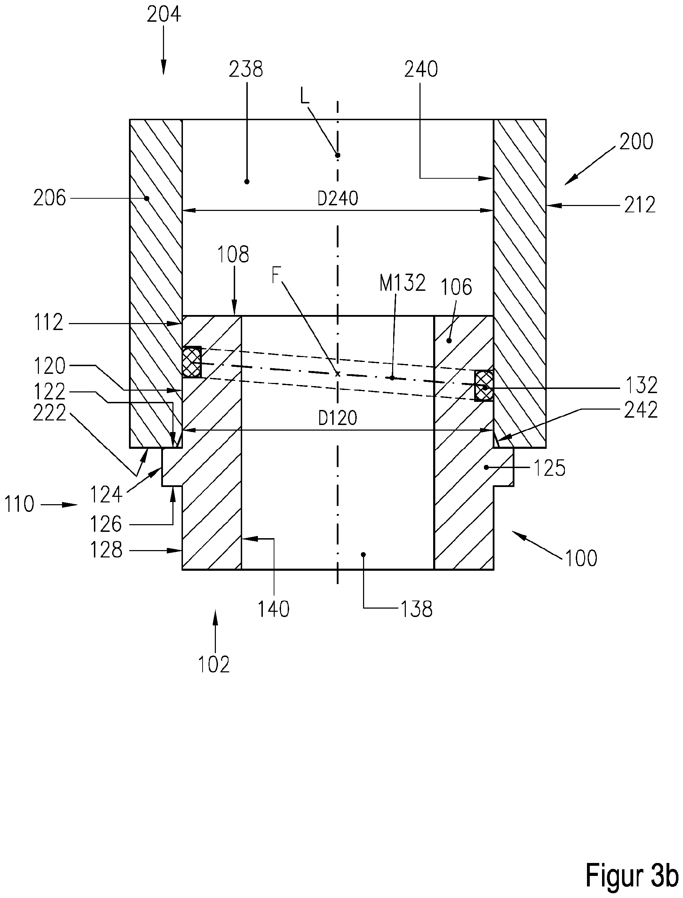

Die **Figuren 3a** **und** **3b** zeigen beispielhaft die Verbindung aus dem ersten Verbindungsteil 100 aus Figur 1d und dem zweiten Verbindungsteil 200 aus Figur 2 in unterschiedlich gefügten Zuständen.

In **Figur 3a** beginnt gerade eine Berührung des O-Rings 132 mit der Oberfläche der Fase 242 an einer Stelle (links zu sehen).

Es muss nicht gleich zu Beginn des Fügens der O-Ring 132 auf seinem gesamten Umfang verformt werden, sondern es beginnt zunächst an einer Stelle und "wandert" dann auf dem Umfang entlang. Somit wird die benötigte Kraft reduziert und das Ineinanderstecken erleichtert.

**Figur 3b** zeigt beispielhaft die vollständig gefügten bzw. ineineinander gesteckten Verbindungsteile 100 und 200. Die Verbindungsstelle bzw. -linie ist durch das Ineinanderstecken des ersten Verbindungsteils 100 in das zweite Verbindungsteil 200 und den O-Ring(132 in Kombination mit der Innenfläche 240 für ein Fluid, das durch die Innenöffnungen 138 und 238 strömen kann, dicht. Die Verbindungsteile 100 und 200 werden radial zur Längsachse L über eine enge Tolerierung, beispielsweise eine Passung H7/h6 oder H7/h7 nach DIN ISO 286, der Innenfläche 240 mit einem Durchmesser D240 zur Außenfläche 120 mit einem Außendurchmesser D120 ausgerichtet. Die axiale Ausrichtung zur Längsachse L der Verbindungsteile zueinander erfolgt durch eine Berührung der Fläche 122 des ersten Verbindungsteils 100 und der Fläche 222 des zweiten Verbindungsteils 200.

Somit sind ein einfaches Fügen und eine eindeutige axiale und radiale Positionierung mit geringer Toleranz bei gleichzeitig dichter Verbindung möglich.

**Figur 4** zeigt wiederum beispielhaft ein Verbindungsteil 100, ähnlich wie in Figur 1. Im Gegensatz zur Figur 1 hat die Nut 130 auf dem Umfang nicht nur einen parallel zur Längsachse L verlaufenden maximalen Abstand und einen minimalen Abstand, sondern mehrere maximale und minimale Abstände. Konkret heißt dies in diesem Beispiel:
Die Nut 130 erstreckt sich über den Umfang. Eine virtuelle Mittellinie M130 auf dem Nutboden 116 weist aber zu einem virtuellen Fixpunkt F auf der Längsachse L umlaufend wiederum unterschiedliche Abstände L116 parallel zur Längsachse L auf. Ein maximaler Abstand L116ₘₐₓ, der in dem hier gezeigten Beispiel zweimal, zudem in diesem Beispiel äquidistant, auf dem Umfang auftritt, beträgt hier die Hälfte der Nutbreite B130. Im Beispiel beträgt die Nutbreite 2 mm, also beträgt L116ₘₐₓ 1 mm.

Eine erste seitliche Begrenzung der Nut 130, die Fläche 114, hat parallel zur Längsachse L zum hinteren Ende 104 unterschiedliche Abstände L112. Ein minimaler Abstand ist mit L112ₘᵢₙ und ein maximaler Abstand mit L112ₘₐₓ bezeichnet. Die minimalen und die maximalen Abstände sind hier jeweils zweimal vorhanden.

Eine zweite seitliche Begrenzung der Nut 130, die Fläche 118, hat parallel zur Längsachse L zum vorderen Ende 102 unterschiedliche Abstände L128, zur Fläche 122 des Flansches 125 unterschiedliche Abstände L120 und zur Fläche 126 des Flansches 125 unterschiedliche Abstände L124. Die in der Figur 4 gezeigten minimalen Abstände von L128, L124 und L120 sind mit L128ₘᵢₙ, L124ₘᵢₙ und L120ₘᵢₙ und die maximalen Abstände mit L128ₘₐₓ, L124ₘₐₓ und L120ₘₐₓ bezeichnet. Die minimalen und die maximalen Abstände sind hier jeweils zweimal vorhanden.

Die seitliche Begrenzungen - die Flächen 114 und 118 - der Nut 130 haben ebenso unterschiedlich große parallel zur Längsachse L verlaufende Abstände zum hinteren Ende 104 und zum vorderen Ende 102 sowie zu den Flächen 122 und 126 des Flansches 125. Es können natürlich noch mehr als zwei minimale und maximale Abstände realisiert werden.

Die Differenz zwischen dem größten und dem kleinsten Abstand zwischen ein und derselben Begrenzung der Nut, der Seitenfläche 114, 118 und dem hinteren Ende 104 oder dem vorderen Ende 102 oder einer Fläche 122 oder 126 des Flansches entspricht in diesem Beispiel der Hälfte der Nutbreite von 2 mm und ist hier 1 mm.

Die Fläche 122 des Flansches 125 kann als axialer Anschlag bzw. zur Positionierung axial zur Längsachse L in einem anderen Verbindungsteil, wie z.B. dem Verbindungsteil 200 aus Figur 2 dienen.

Die Flächen 112, 120 und 124 sind Außenflächen und können zur Zentrierung radial zur Längsachse L dienen, wenn das Verbindungsteil 100 in beispielsweise das in der Figur 2 gezeigte Verbindungsteil 200 eingesetzt wird.

Das Verbindungsteil 100 hat im Inneren entlang der Längsachse L eine durchgehende Öffnung 138 mit einer Innenfläche 140. Durch diese Öffnung 138 kann im eingebauten Zustand ein Fluid strömen.

**Figur 4a** zeigt beispielhaft das Verbindungsteil aus Figur 4 mit einem O-Ring 132 in der Nut 130.

Der O-Ring hat in diesem Beispiel eine Schnurstärke Sa von 1,5mm. In der Mitte der Schnur befindet sich die virtuelle Mittellinie M132. Der O-Ring 132 erstreckt sich über den Umfang in der Nut 130. Eine virtuelle Mittellinie M132 weist aber zu einem Fixpunkt F auf der Längsachse L umlaufend unterschiedliche Abstände L116a parallel zur Längsachse L auf. Der maximale Abstand L116aₘₐₓ beträgt in diesem Beispiel 2/3 der Schnurstärke Sa. Im Beispiel beträgt die Schnurstärke Sa 1,5 mm, also beträgt der maximale Abstand L116aₘₐₓ 1 mm.

Die in Richtung zum hinteren Ende 104 zgewandte Außenfläche des O-Rings 132 hat parallel zur Längsachse L zum hinteren Ende 104 unterschiedliche Abstände L112a. Der minimale Abstand ist mit L112aₘᵢₙ und der maximale Abstand mit L112aₘₐₓ bezeichnet. Die in Richtung zum vorderen Ende 102 zugewandte Außenfläche des O-Rings 132 hat parallel zur Längsachse L zum vorderen Ende 102 unterschiedliche Abstände L128a, zur Fläche 122 des Flansches 125 unterschiedliche Abstände L120a und zur Fläche 126 des Flansches 125 unterschiedliche Abstände L124a. Die in der Figur 4a gezeigten minimalen Abstände von L128a, 124a und L120a sind mit L128aₘᵢₙ, 124aₘᵢₙ und L120aₘᵢₙ und die maximalen Abstände mit L128aₘₐₓ, L124aₘₐₓ und L120aₘₐₓ bezeichnet. Die jeweiligen dem näheren Ende zugewandten Außenflächen des O-Rings 132 haben also parallel zur Längsachse L unterschiedlich große Abstände zum hinteren Ende 104 und zum vorderen Ende 102 sowie zu den Flächen 122 und 126 des Flansches 125.

Die Differenz zwischen dem größten und dem kleinsten Abstand zwischen der zum hinteren Ende 104gewandten Außenfläche des O-Rings 132 und dem hinteren Ende 104 und die Differenz zwischen dem größten und dem kleinsten Abstand zwischen der zum vorderen Ende 102 gewandten Außenfläche des O-Rings 132 und dem vorderen Ende 102 oder einer Fläche 122 oder 126 des Flansches entspricht in diesem Beispiel 2/3 der Schnurstärke Sa, hier 1 mm.

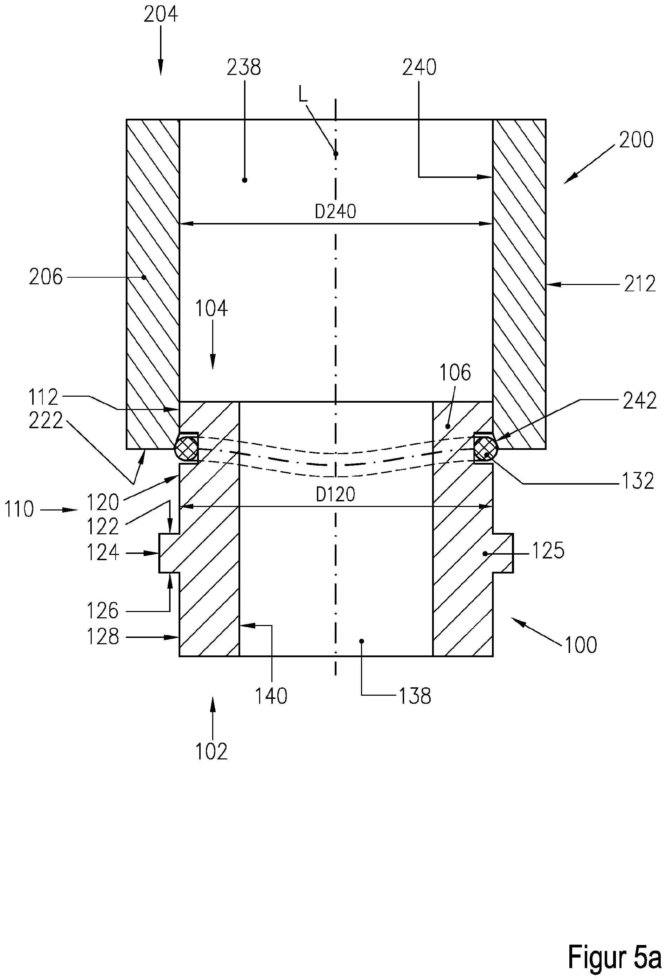

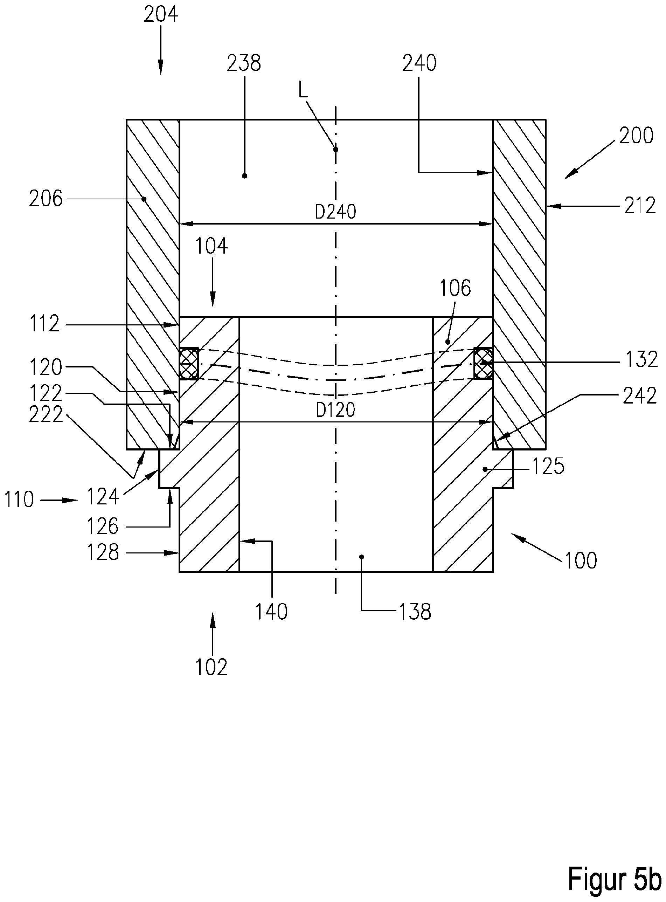

Die **Figuren 5a** **und** **5b** zeigen beispielhaft die Verbindung aus dem ersten Verbindungsteil 100 aus Figur 4a und dem zweiten Verbindungsteil 200 aus Figur 2 in unterschiedlich gefügten Zuständen.

**In** **Figur 5a** beginnt gerade die Berührung des O-Rings 132 mit der Oberfläche der Fase 242 an zwei Stellen (links und rechts zu sehen).

Es muss nicht gleich zu Beginn des Fügens der O-Ring 132 auf seinem gesamten Umfang verformt werden, sondern hier beginnt es an zwei Stellen, die auf dem Umfang gegenüberliegend angeordnet sind, und je nach Fügezustand erfolgt die Verformung über den gesamten Umfang nach und nach. Somit wird die benötigte Kraft reduziert und das Ineinanderstecken erleichtert. Vorteil gegenüber der Figur 3 ist, dass durch das Auftreffen des O-Rings auf die Fase 242 an zwei Stellen gleichzeitig die Gefahr des Verkantens reduziert wird.

Vorteilhaft gegen das Verkanten ist der Beginn des Verformens zumindest an drei Stellen gleichzeitig.

Nachteil ist, dass mit wachsender Zahl der Berührungspunkte zu Beginn des Fügens wieder mehr Kraft für das Fügen benötigt wird.

**Figur 5b** zeigt beispielhaft die vollständig gefügten bzw. ineineinander gesteckten Verbindungsteile 100 und 200. Die Verbindungsstelle bzw. -linie ist durch das Ineinanderstecken des ersten Verbindungsteils 100 in das zweite Verbindungsteil 200 und den O-Ring 132 in Kombination mit der Innenfläche 240 für ein Fluid, das durch die Innenöffnungen 138 und 238 strömen kann, dicht. Die Verbindungsteile 100 und 200 werden radial zur Längsachse L über eine enge Tolerierung, beispielsweise eine Passung H7/h6 oder H7/h7 nach DIN ISO 286, der Innenfläche 240 mit dem Durchmesser D240 zur Außenfläche 120 mit dem Außendurchmesser D120 ausgerichtet. Die axiale Ausrichtung zur Längsachse L der Verbindungsteile zueinander erfolgt durch die Berührung der Fläche 122 des ersten Verbindungsteils 100 und der Fläche 222 des zweiten Verbindungsteils 200.

Somit sind ein einfaches Fügen und eine eindeutige axiale und radiale Positionierung zur Längsachse L mit geringer Toleranz bei gleichzeitig dichter Verbindung der Verbindungsteile möglich.

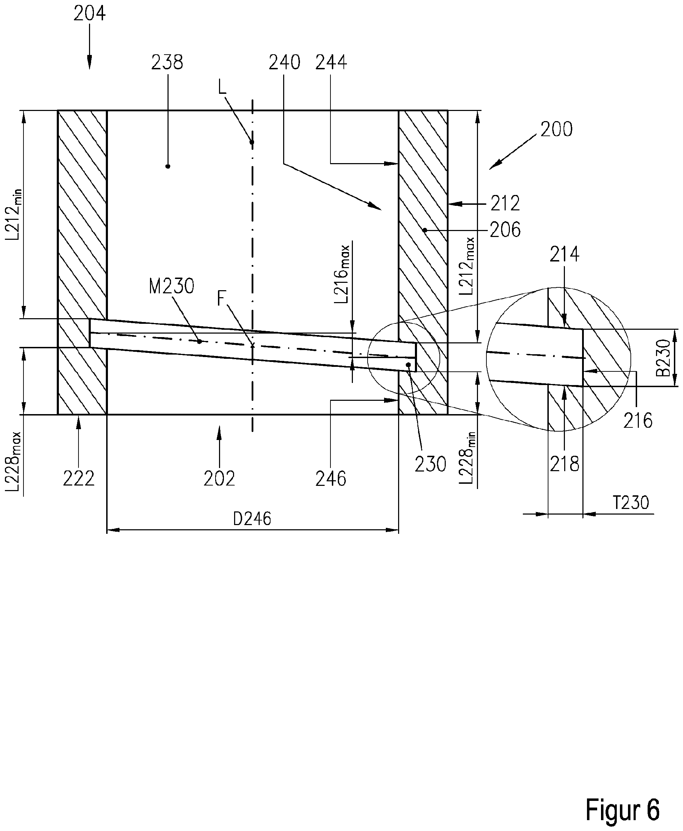

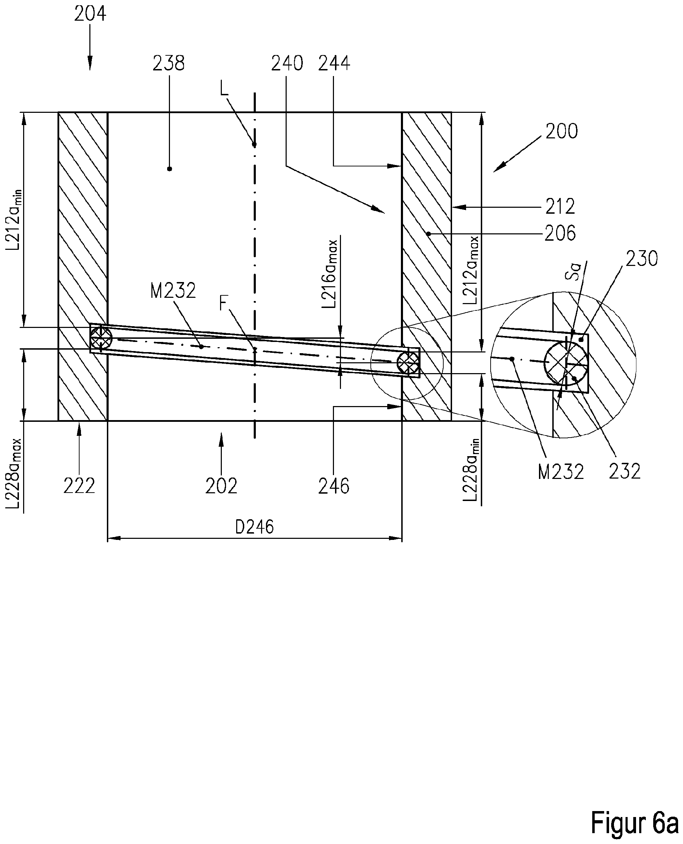

**Figur 6** zeigt ein zweites Verbindungsteil 200, umfassend einen Körper 206, der sich entlang einer Längsachse L erstreckt, mit einem vorderen Ende 202 und einem hinteren Ende 204, einer Außenfläche 212 und mit einer Innenfläche 240, die mehrere Flächen 214, 216, 218, 244 und 246 umfasst.

Die Innenfläche 240 weist eine umlaufende Nut 230 auf. Die Nut 230 wird durch seitliche Flächen 214 und 218 sowie einen Nutboden 216 begrenzt. Die Nut 230 hat eine Nutbreite B230 und eine Nuttiefe T230 und ist geeignet, einen O-Ring oder einen Profilring aufzunehmen. Die Nut 230 erstreckt sich über den Umfang. Eine virtuelle Mittellinie M230 auf dem Nutboden 216 weist aber zu einem Fixpunkt F auf der Längsachse L umlaufend unterschiedliche Abstände L216 parallel zur Längsachse L auf. Ein maximaler Abstand L216ₘₐₓ beträgt in diesem Beispiel die Hälfte der Nutbreite B230. Im Beispiel beträgt die Nutbreite 2 mm, also beträgt L216ₘₐₓ 1 mm.

Die erste seitliche Begrenzung der Nut 230, die Fläche 214, hat parallel zur Längsachse L zum hinteren Ende 204 des Verbindungsteils 200 unterschiedliche Abstände L212. Der minimale Abstand ist mit L212ₘᵢₙ und der maximale Abstand mit L212ₘₐₓ bezeichnet.

Die zweite seitliche Begrenzung der Nut 230, die Fläche 218, hat parallel zur Längsachse L zum vorderen Ende 202 des Verbindungsteils 200 unterschiedliche Abstände L228. Der minimale Abstand ist mit L228ₘᵢₙ und der maximale Abstand mit L228ₘₐₓ bezeichnet.

Die seitliche Begrenzungen - die Flächen 214 und 218 - der Nut 230 haben also unterschiedlich große parallel zur Längsachse L verlaufende Abstände zum hinteren Ende 204 und zum vorderen Ende 202.

Die Differenz zwischen dem größten und dem kleinsten Abstand zwischen ein und derselben Begrenzung der Nut, der seitlichen Fläche 214 oder 218 und dem hinteren Ende 204 oder dem vorderen Ende 202 entspricht in diesem Beispiel der Hälfte der Nutbreite von 2 mm und ist hier 1 mm.

**Figur 6a** zeigt beispielhaft das Verbindungsteil 200 aus Figur 6 mit einem O-Ring 232 in der Nut 230.

Der O-Ring 232 hat in diesem Beispiel eine Schnurstärke Sa von 1,5mm. In der Mitte der Schnur befindet sich eine virtuelle Mittellinie M232. Der O-Ring 232 erstreckt sich über den Umfang in der Nut 230. Eine virtuellen Mittellinie M232 weist aber zu einem Fixpunkt F auf der Längsachse L umlaufend unterschiedliche Abstände L216a parallel zur Längsachse L auf. Der maximale Abstand L216aₘₐₓ beträgt in diesem Beispiel 2/3 der Schnurstärke Sa. Im Beispiel beträgt die Schnurstärke Sa 1,5 mm, also beträgt der maximale Abstand L216aₘₐₓ 1 mm.

Die in Richtung zum hinteren Ende 204 zugewandte Außenfläche des O-Rings 232 hat parallel zur Längsachse L zum hinteren Ende 204 unterschiedliche Abstände L212a. Der minimale Abstand ist mit L212aₘᵢₙ und der maximale Abstand mit L212aₘₐₓ bezeichnet.

Die in Richtung zum vorderen Ende 202 gewandte Außenfläche des O-Rings 232 hat parallel zur Längsachse L zum vorderen Ende 202 unterschiedliche Abstände L228a. Der minimale Abstand ist mit L228aₘᵢₙ und der maximale Abstand mit L228aₘₐₓ bezeichnet.

Die jeweiligen dem näheren Ende zugewandten Außenflächen des O-Rings 232 haben also parallel zur Längsachse L unterschiedlich große axiale Abstände zum hinteren Ende 204 und zum vorderen Ende 202.

Die Differenz zwischen dem größten und dem kleinsten Abstand zwischen der zum hinteren Ende 204 gewandten Außenfläche des O-Rings 232 und dem hinteren Ende 204 und die Differenz zwischen dem größten und dem kleinsten Abstand zwischen der zum vorderen Ende 202 gewandten Außenfläche des O-Rings 232 und dem vorderen Ende 202 entspricht in diesem Beispiel 2/3 der Schnurstärke Sa, hier 1 mm.

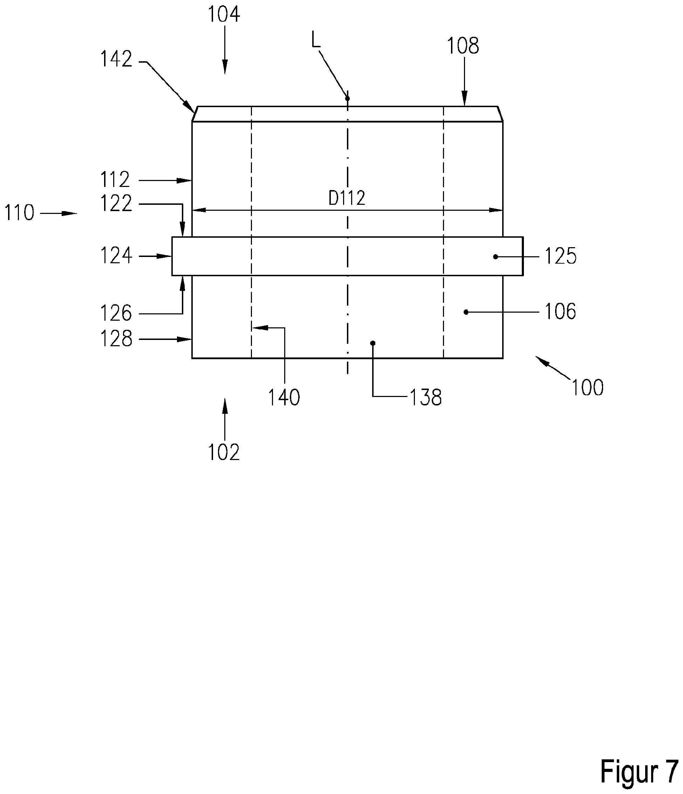

**Figur 7** zeigt beispielhaft ein erstes Verbindungsteil 100, das in das Verbindungsteil 200 aus Figur 6a gesteckt bzw. gefügt werden kann. Es umfasst einen Körper 106, der sich entlang einer Längsachse L erstreckt, mit einem vorderen Ende 102 und einem hinteren Ende 104, mit einer Außenfläche 110, die mehrere Flächen 112, 122, 124, 126 und 128 umfasst, und einer Innenfläche 140. Zwischen dem vorderen Ende 102 und dem hinteren Ende 104 erstreckt sich eine Öffnung 138. Am hinteren Ende 104 befindet sich eine Fase 142, die das Einfügen des Verbindungsteils 100 in die Öffnung 238 des Verbindungsteils 200 erleichtert.

Weiterhin befindet sich auf der Außenfläche 110 ein Flansch 125, der durch die Flächen (Außenflächen) 122, 124 und 126 begrenzt wird.

Das hintere Ende 104 hat eine Außenfläche 108.

Die Außenfläche 122 des Flansches 125 kann als axialer Anschlag bzw. zur Positionierung axial zur Längsachse L beispielsweise in dem in der Figur 6a gezeigten Verbindungsteil 200 dienen.

Die Außenfläche 112 kann zur Zentrierung radial zur Längsachse L dienen, wenn das Verbindungsteil beispielsweise in dem in der Figur 6 gezeigten Verbindungsteil 200 eingesetzt wird.

Das Verbindungsteil 100 hat im Inneren entlang der Längsachse L eine durchgehende Öffnung 138 mit einer Innenfläche 140. Durch diese Öffnung 138 kann im eingebauten Zustand ein Fluid strömen.

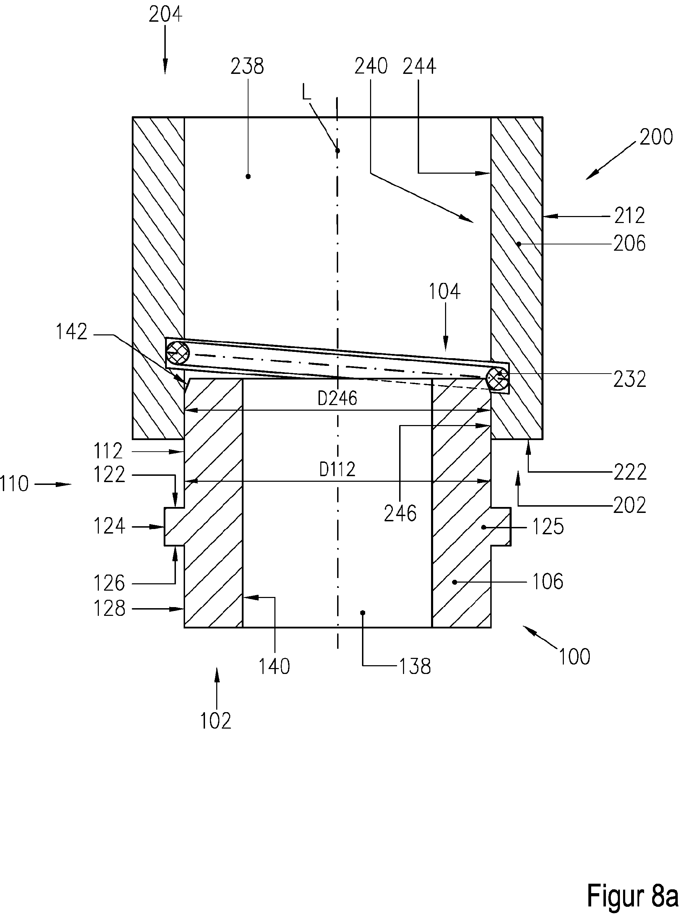

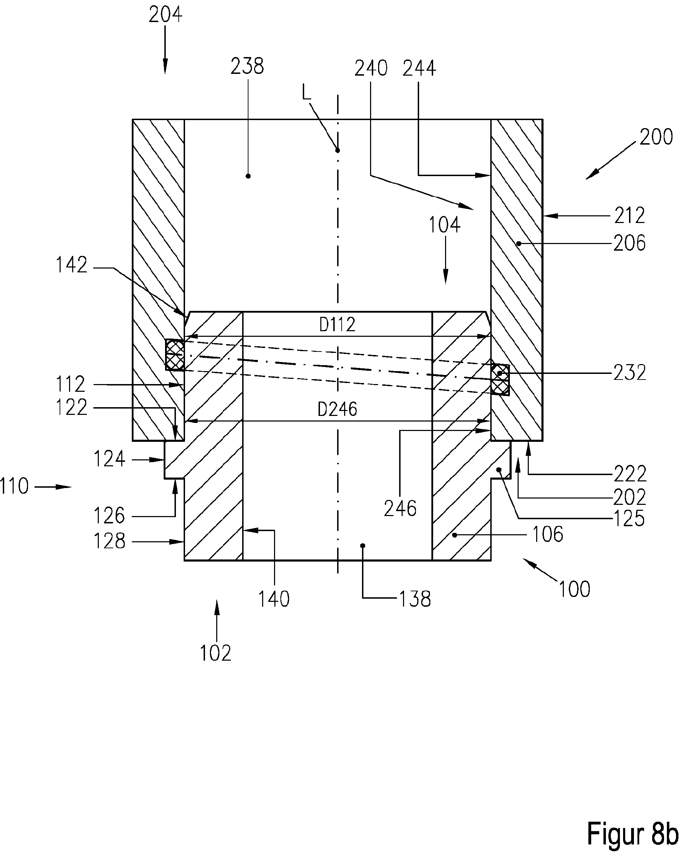

Die **Figuren 8a** **und** **8b** zeigen beispielhaft die Verbindung aus dem ersten Verbindungsteil 100 aus Figur 7 und dem zweiten Verbindungsteil 200 aus Figur 6a in unterschiedlich gefügten Zuständen.

In **Figur 8a** beginnt gerade die Berührung des O-Rings 132 mit der Oberfläche der Fase 142 an einer Stelle (rechts zu sehen).

Es muss nicht gleich zu Beginn des Fügens der O-Ring 132 auf seinem gesamten Umfang verformt werden, sondern es beginnt zunächst an einer Stelle und "wandert" dann auf dem Umfang entlang. Somit wird die benötigte Kraft reduziert und das Ineinanderstecken erleichtert.

**Figur 8b** zeigt beispielhaft die vollständig gefügten bzw. ineineinander gesteckten Verbindungsteile 100 und 200. Die Verbindungsstelle bzw. -linie ist durch das Ineinanderstecken des ersten Verbindungsteils 100 in das zweite Verbindungsteil 200 und den O-Ring 132 in Kombination mit der Fläche 112, die eine Außenfläche ist, für ein Fluid, das durch die Innenöffnungen 138 und 238 strömen kann, dicht. Die Verbindungsteile 100 und 200 werden radial zur Längsachse L über eine enge Tolerierung, beispielsweise eine Passung H7/h6 oder H7/h7 nach DIN ISO 286, der Innenfläche 246, die eine Innenfläche ist, mit dem Durchmesser D246 zur Fläche 112, die eine Außenfläche ist, mit dem Durchmesser D112 ausgerichtet. Die axiale Ausrichtung zur Längsachse L der Verbindungsteile zueinander erfolgt durch eine Berührung der Fläche 122 des ersten Verbindungsteils 100 und der Fläche 222 des zweiten Verbindungsteils 200.

Somit sind ein einfaches Fügen und eine eindeutige axiale und radiale Positionierung mit geringer Toleranz bei gleichzeitig dichter Verbindung möglich.

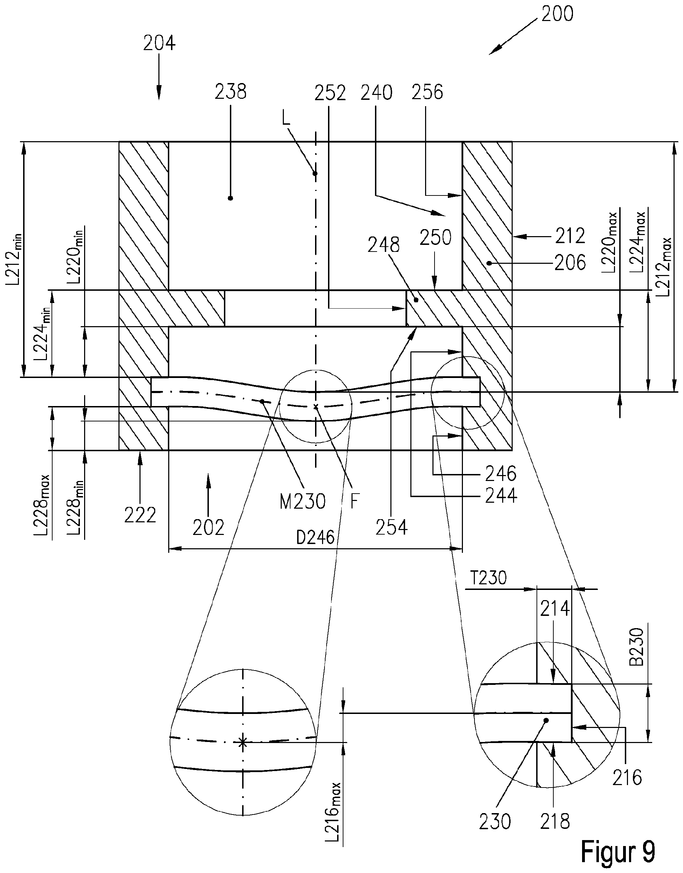

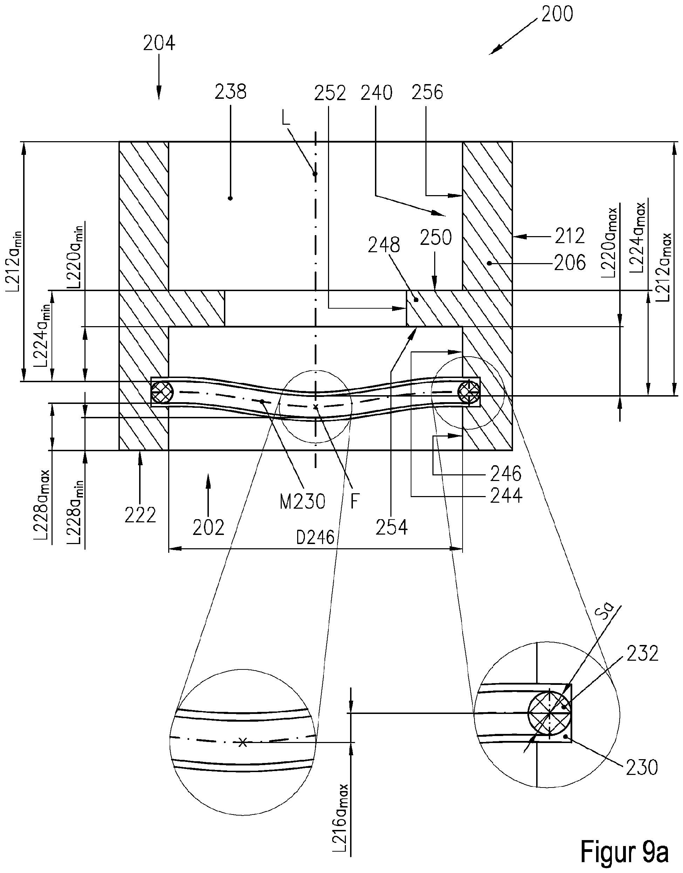

**Figur 9** zeigt beispielhaft ein zweites Verbindungsteil 200, umfassend einen Körper 206, der sich entlang einer Längsachse L erstreckt, mit einem vorderen Ende 202 und einem hinteren Ende 204, mit einer Außenfläche 212 und einer Innenfläche 240, die mehrere Flächen 214, 216, 218, 244 , 246, 250, 252, 254 und 256 umfasst.

Die Innenfläche 240 weist eine umlaufende Nut 230 auf. Die Nut 230 wird durch seitliche Flächen 214 und 218 sowie den Nutboden 216 begrenzt. Die Nut 230 hat eine Nutbreite B230 und eine Nuttiefe T230 und ist geeignet, einen O-Ring oder einen Profilring aufzunehmen. Die Nut 230 erstreckt sich über den Umfang. Eine virtuelle Mittellinie M230 weist aber zu einem Fixpunkt F auf der Längsachse L umlaufend unterschiedliche Abstände L216 in Richtung der Längsachse L auf. Der maximale Abstand L216ₘₐₓ beträgt in diesem Beispiel die Hälfte der Nutbreite B230. Im Beispiel beträgt die Nutbreite 2 mm, also beträgt L216ₘₐₓ 1 mm.

Die zweite seitliche Begrenzung der Nut 230, die Fläche 218, hat parallel zur Längsachse L zum vorderen Ende 202 des Verbindungteils 200 unterschiedliche Abstände L228. Der minimale Abstand ist mit L228ₘᵢₙ und der maximale Abstand mit L228ₘₐₓ bezeichnet. Die minimalen und die maximalen Abstände sind hier jeweils zweimal vorhanden.

Die erste seitliche Begrenzung der Nut 230, die Fläche 214, hat parallel zur Längsachse L zum hinteren Ende 204 unterschiedliche Abstände L212, zur Fläche 254 des Flansches 248 unterschiedliche Abstände L220 und zur Fläche 250 des Flansches 248 unterschiedliche Abstände L224. Die in der Figur 9 gezeigten minimalen Abstände von L212, L224 und L220 sind mit L212ₘᵢₙ, L224ₘᵢₙ und L220ₘᵢₙ und die maximalen Abstände mit L212ₘₐₓ, L224ₘₐₓ und L220ₘₐₓ bezeichnet. Die minimalen und die maximalen Abstände sind hier jeweils zweimal vorhanden.

Es können natürlich noch mehr als zwei minimale und maximale Abstände realisiert werden.

Die seitliche Begrenzungen - die Flächen 214 und 218 - der Nut 230 haben also unterschiedlich große parallel zur Längsachse L verlaufende Abstände zum hinteren Ende 204 und zum vorderen Ende 202.

Die Differenz zwischen dem größten und dem kleinsten Abstand zwischen ein und derselben Begrenzung der Nut, der seitlichen Fläche 214, 218 und dem hinteren Ende 204 oder dem vorderen Ende 202 oder einer Fläche 250 oder 254 des Flansches 248 entspricht beispielsweise der Hälfte der Nutbreite von beispielsweise 2 mm und ist hier 1 mm.

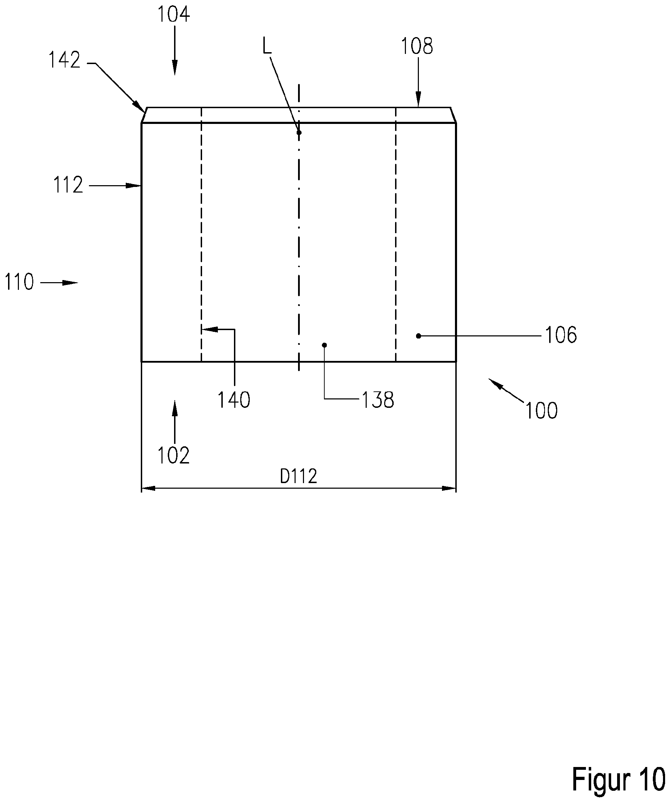

Die Fläche 254 des Flansches 248 kann als axialer Anschlag bzw. zur Positionierung axial zur Längsachse L beispielsweise in dem in der Figur 10 gezeigten Verbindungsteil 100 dienen.

Die Innenflächen 244 und 246 können zur Zentrierung radial zur Längsachse L dienen, wenn in das Verbindungsteil 200 beispielsweise in das in der Figur 10 gezeigte Verbindungsteil (100) eingesetzt wird.

**Figur 9a** zeigt beispielhaft das Verbindungsteil 200 aus Figur 9 mit einem O-Ring 232 in der Nut 230.

Der O-Ring 232 hat in diesem Beispiel eine Schnurstärke Sa von 1,5mm. In der Mitte der Schnur befindet sich eine virtuelle Mittellinie M232. Der O-Ring 232 erstreckt sich über den Umfang in der Nut 230. Eine virtuelle Mittellinie M232 weist aber zu einem Fixpunkt F auf der Längsachse L umlaufend unterschiedliche Abstände L216a parallel zur Längsachse L auf. Der maximale Abstand L216aₘₐₓ beträgt in diesem Beispiel 2/3 der Schnurstärke Sa. Im Beispiel beträgt die Schnurstärke Sa 1,5 mm, also beträgt der maximale Abstand L216aₘₐₓ 1 mm.

Die in Richtung zum hinteren Ende 204 gewandte Außenfläche des O-Rings 232 hat parallel zur Längsachse L zum hinteren Ende 204 unterschiedliche Abstände L212a. Der minimale Abstand ist mit L212aₘᵢₙ und der maximale Abstand mit L212aₘₐₓ bezeichnet.

Die in Richtung zum vorderen Ende 202 gewandte Außenfläche des O-Rings 232 hat parallel zur Längsachse L zum vorderen Ende 202 unterschiedliche Abstände L228a. Der minimale Abstand ist mit L228aₘᵢₙ und der maximale Abstand mit L228aₘₐₓ bezeichnet.

Die jeweiligen dem näheren Ende zugewandten Außenflächen des O-Rings 232 haben also parallel zur Längsachse L unterschiedlich große axiale Abstände zum hinteren Ende 204 und zum vorderen Ende 202.

Die minimalen und die maximalen Abstände sind hier jeweils zweimal vorhanden.

Die Differenz zwischen dem größten und dem kleinsten Abstand zwischen der zum hinteren Ende 204 gewandten Außenfläche des O-Rings 232 und dem hinteren Ende 204 und die Differenz zwischen dem größten und dem kleinsten Abstand zwischen der zum vorderen Ende 202 gewandten Außenfläche des O-Rings 232 und dem vorderen Ende 202 entspricht in diesem Beispiel 2/3 der Schnurstärke Sa, hier 1 mm.

**Figur 10** zeigt beispielhaft ein erstes Verbindungsteil 100, das in das Verbindungsteil 200 aus Figur 9a gesteckt bzw. gefügt werden kann. Es umfasst einen Körper 106, der sich entlang einer Längsachse L erstreckt, mit einem vorderen Ende 102 und einem hinteren Ende 104, mit einer Außenfläche 110, mit einer Fläche 112 und einer Innenfläche 140. Zwischen dem vorderen Ende 102 und dem hinteren Ende 104 erstreckt sich eine Öffnung 138. Am hinteren Ende 104 befindet sich eine Fase 142, die das Einfügen des Verbindungsteils 100 in die Öffnung 238 des Verbindungsteils 200 erleichtert.

Die Außenfläche 112 kann zur Zentrierung radial zur Längsachse L dienen, wenn das Verbindungsteil beispielsweise in das in der Figur 9a gezeigte Verbindungsteil 200 eingesetzt wird.

Das Verbindungsteil 100 hat im Inneren entlang der Längsachse L eine durchgehende Öffnung 138 mit einer Innenfläche 140. Durch diese Öffnung 138 kann im eingebauten Zustand ein Fluid strömen.

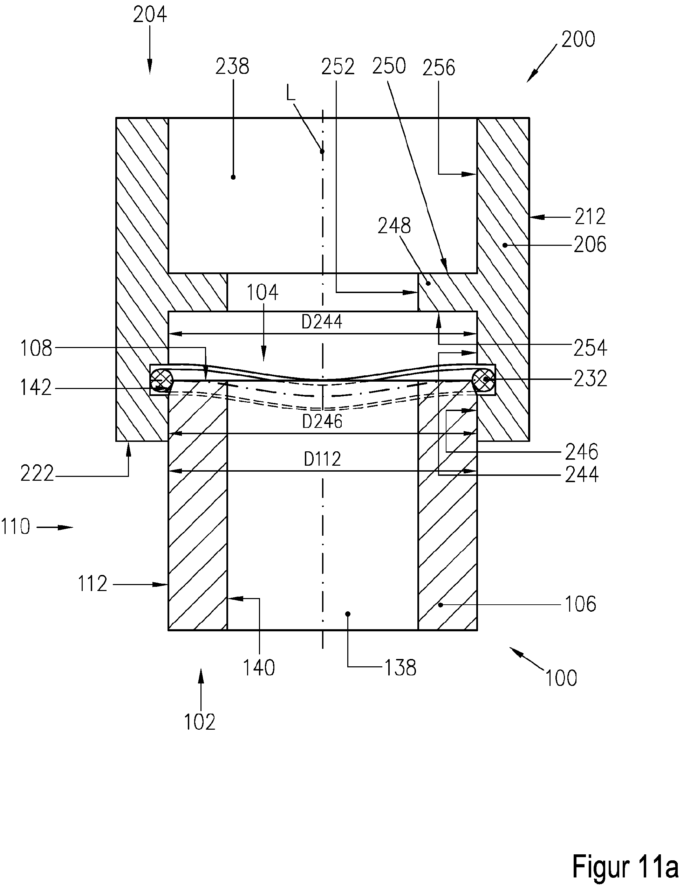

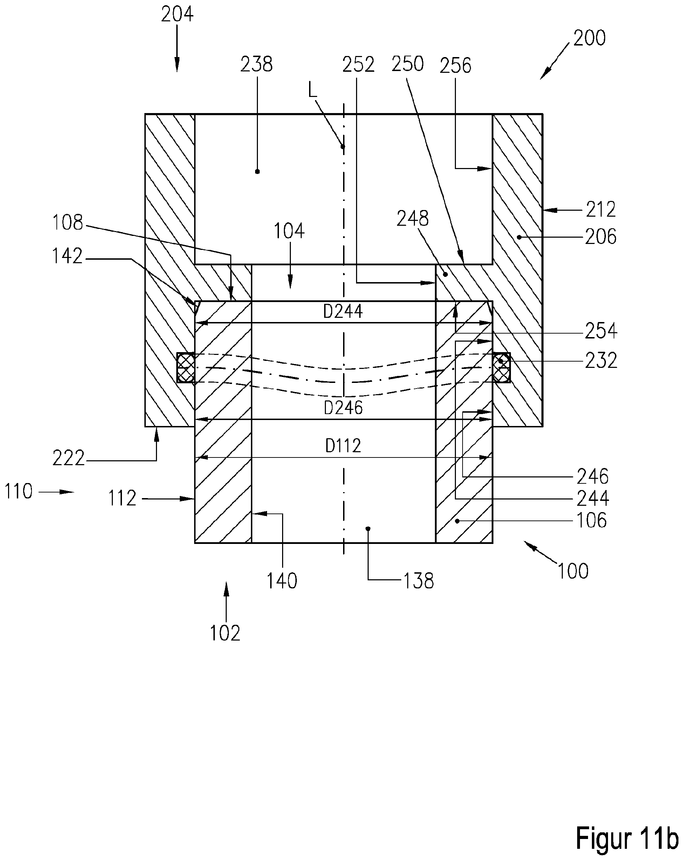

Die **Figuren 11a** **und** **11b** zeigen beispielhaft die Verbindung aus dem ersten Verbindungsteil 100 aus Figur 10 und dem zweiten Verbindungsteil 200 aus Figur 9a in unterschiedlich gefügten Zuständen.

In **Figur 11a** beginnt gerade eine Berührung des O-Rings 232 mit der Oberfläche der Fase 142 an zwei Stellen (links und rechts zu sehen). Es muss nicht gleich zu Beginn des Fügens der O-Ring 232 auf seinem gesamten Umfang verformt werden, sondern hier beginnt es an zwei Stellen, die auf dem Umfang gegenüberliegend angeordnet, und je nach Fügezustand erfolgt die Verformung über den gesamten Umfang nach und nach, die Stellen "wandern" dann auf dem Umfang entlang. Somit wird die benötigte Kraft reduziert und das Ineinanderstecken erleichtert. Vorteil gegenüber den in den Figuren 8a und 8b gezeigten Figuren ist, dass durch das Auftreffen des O-Rings auf die Fase 142 an zwei Stellen die Gefahr des Verkantens reduziert wird.

Vorteilhaft gegen das Verkanten ist der Beginn des Verformens zumindest an drei Stellen gleichzeitig.

Nachteil ist, dass mit wachsender Zahl der Berührungspunkte zu Beginn des Fügens wieder mehr Kraft für das Fügen benötigt wird.

**Figur 11b** zeigt beispielhaft die vollständig gefügten bzw. ineinander gesteckten Verbindungsteile 100 und 200. Die Verbindungsstelle bzw. -linie ist durch das Ineinanderstecken des ersten Verbindungsteils 100 in das zweite Verbindungsteil 200 und den O-Ring 232 in Kombination mit der Außenfläche 112 für ein Fluid, das durch die Innenöffnungen 138 und 238 strömen kann, dicht. Die Verbindungsteile 100 und 200 werden radial zur Längsachse L über eine enge Tolerierung der Innenfläche 246 mit einem Durchmesser D246 zur Außenfläche 112 mit einem Außendurchmesser D112 ausgerichtet.

Als Toleranz ist hier beispielhaft eine Passung H7/h6 für D246 und D112 nach DIN ISO 286 gewählt.

Die axiale Ausrichtung zur Längsachse L der Verbindungsteile zueinander erfolgt durch eine Berührung der Fläche 108 am hinteren Ende 104 des ersten Verbindungsteils 100 und der Fläche 254 des Flansches 248 des zweiten Verbindungsteils 200.

Somit sind ein einfaches Fügen und eine eindeutige axiale und radiale Positionierung mit geringer Toleranz bei gleichzeitig dichter Verbindung möglich.

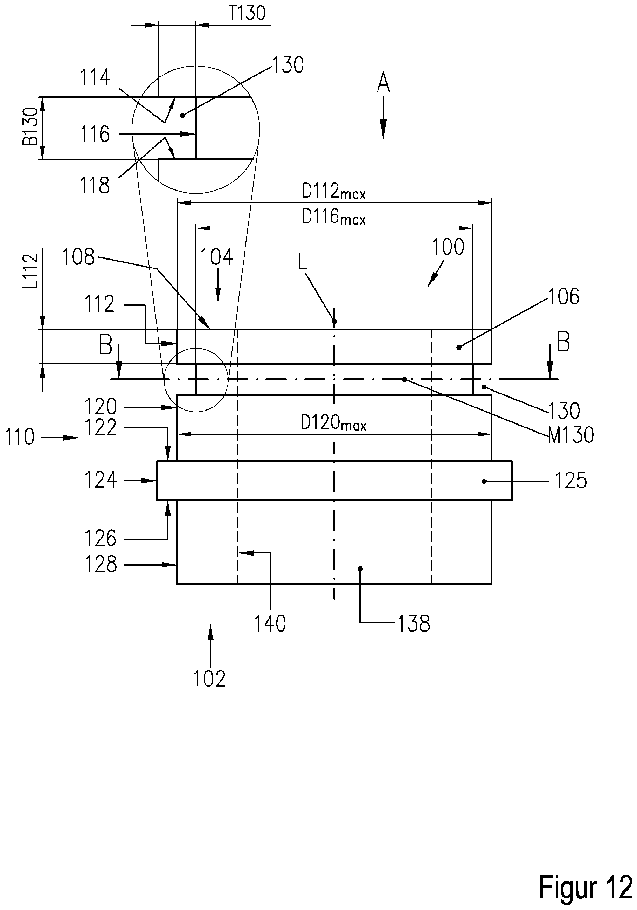

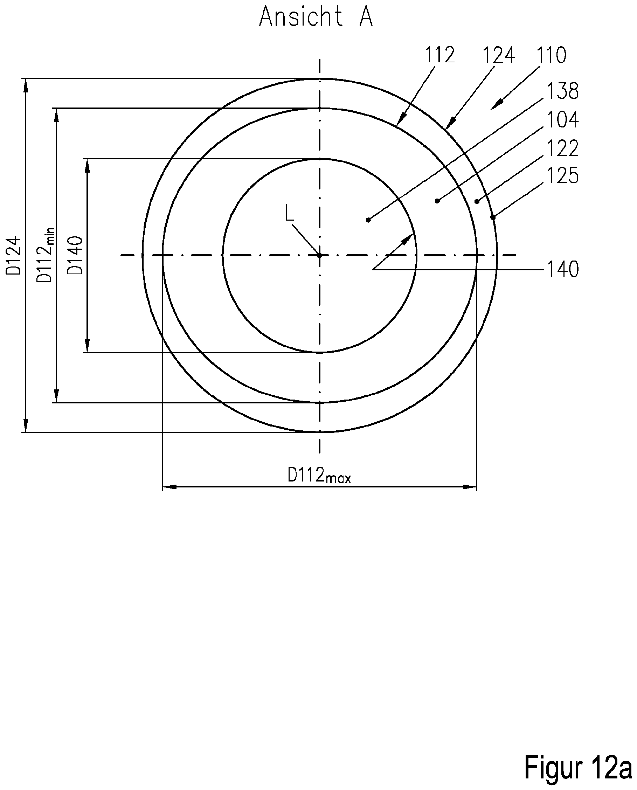

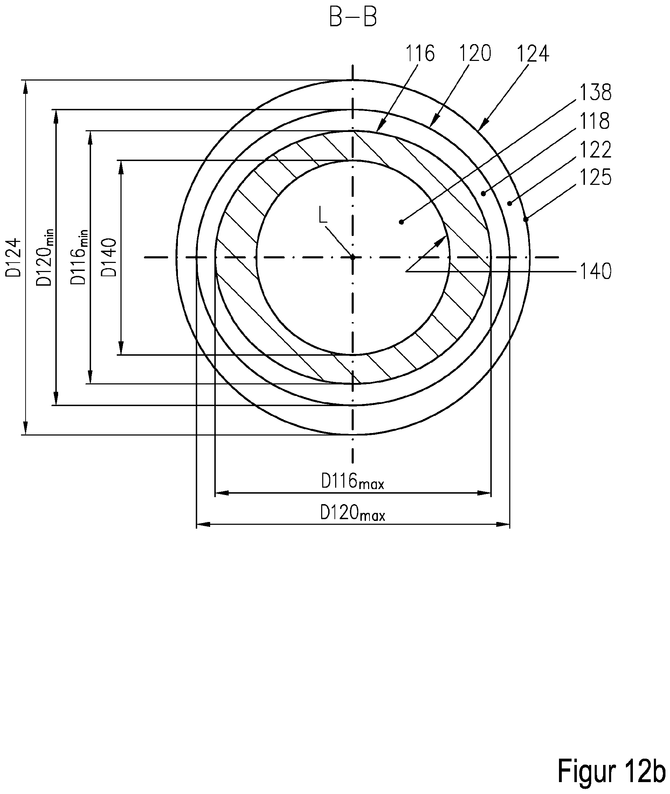

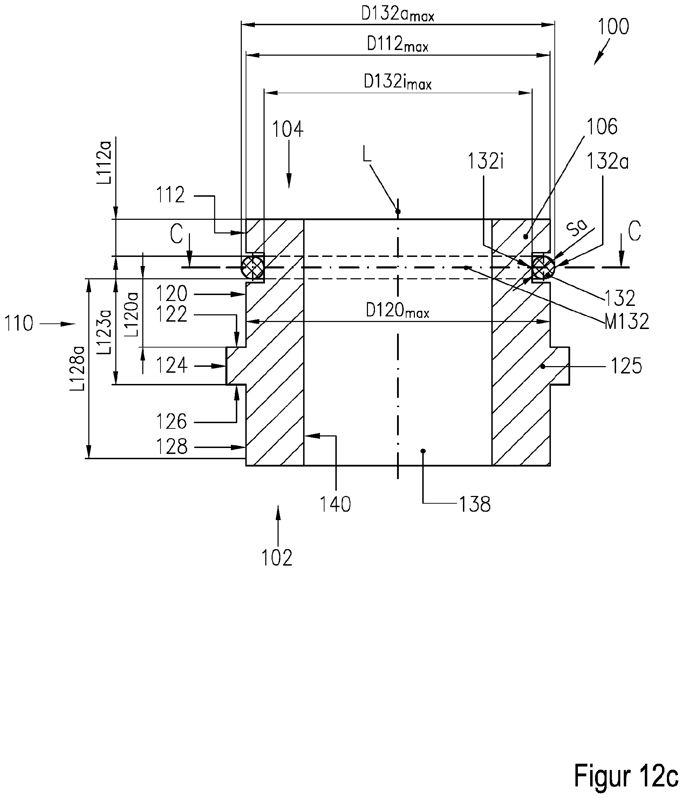

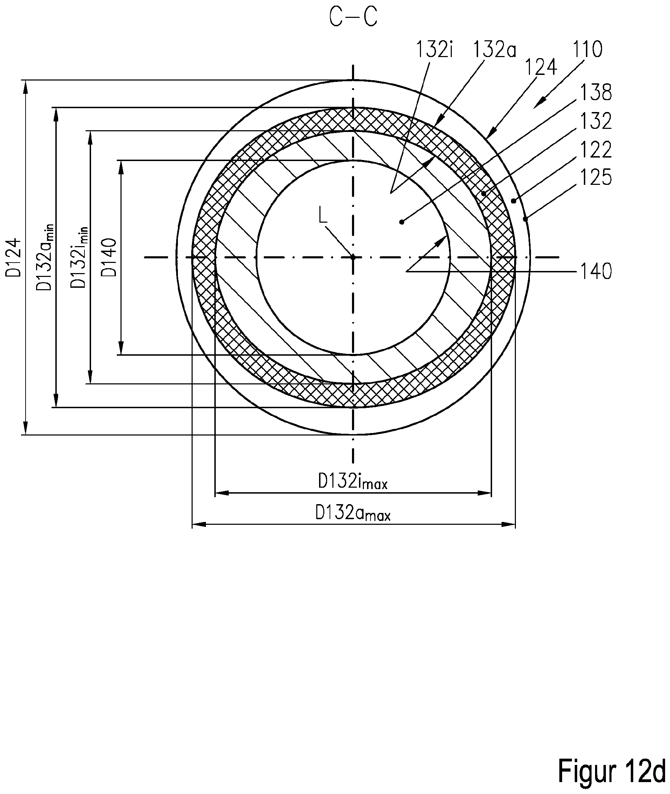

**Figur 12** zeigt ein erstes Verbindungsteil 100, umfassend einen Körper 106, der sich entlang einer Längsachse L erstreckt, mit einem vorderen Ende 102 und einem hinteren Ende 104, mit einer Außenfläche 110, die mehrere Flächen 108, 112, 114, 116, 118, 120, 122, 124, 126 und 128 umfasst.

Die Außenfläche 110 weist eine umlaufende Nut 130 auf. Die Nut wird begrenzt durch seitliche Flächen 114 (zum hinteren Ende 104 gewandt) und 118 (zum vorderen Ende gewandt) sowie einen Nutboden 116. Die Nut 130 hat eine Nutbreite B130 und eine Nuttiefe T130 und ist geeignet, einen O-Ring oder einen Profilring aufzunehmen. Die Nut 130 erstreckt sich über den Umfang. Es können unterschiedliche Nutformen, wie sie beispielhaft in den Figuren 1a bis 1c dargestellt sind, vorhanden sein.

Weiterhin befindet sich auf der Außenfläche 110 ein Flansch 125, der durch die Flächen 122, 124 und 126 begrenzt wird.

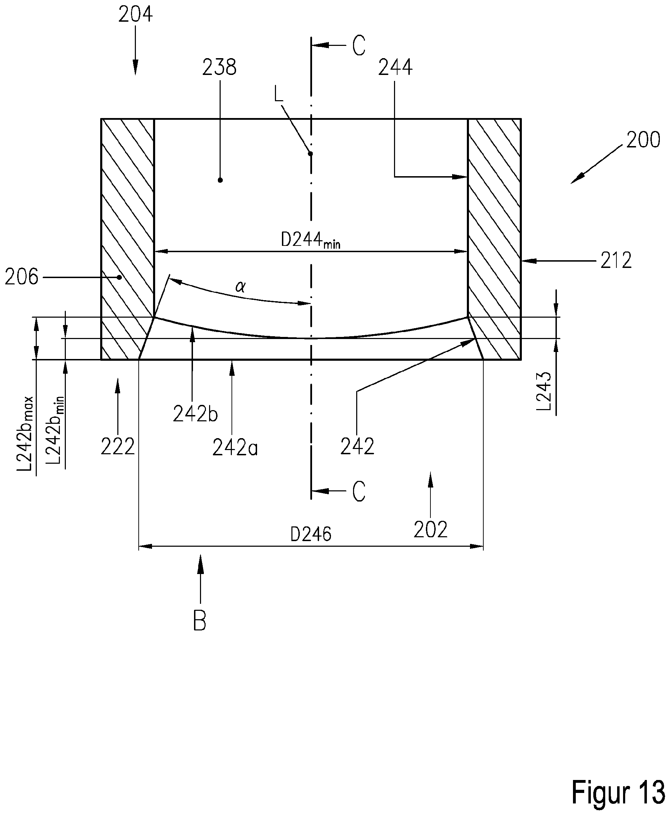

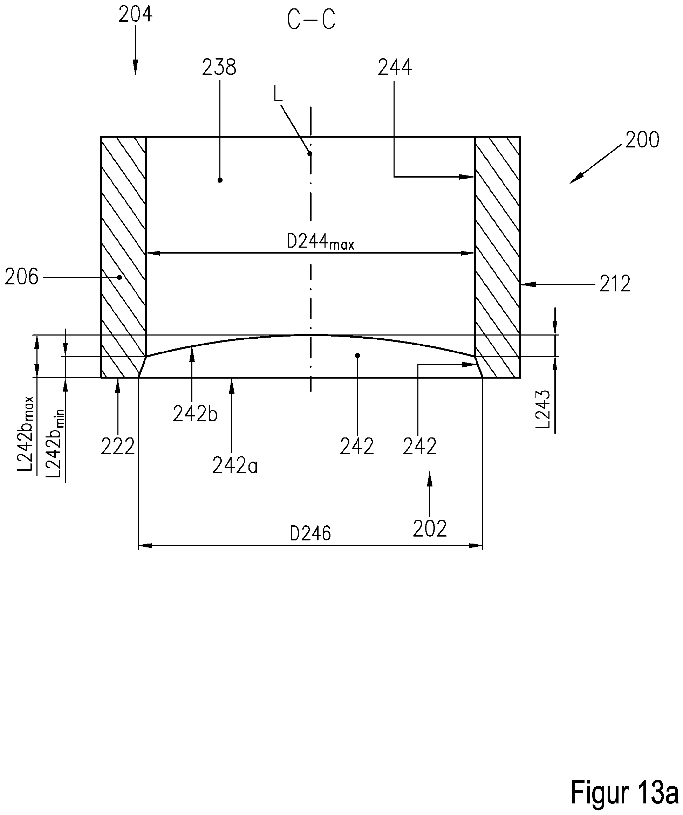

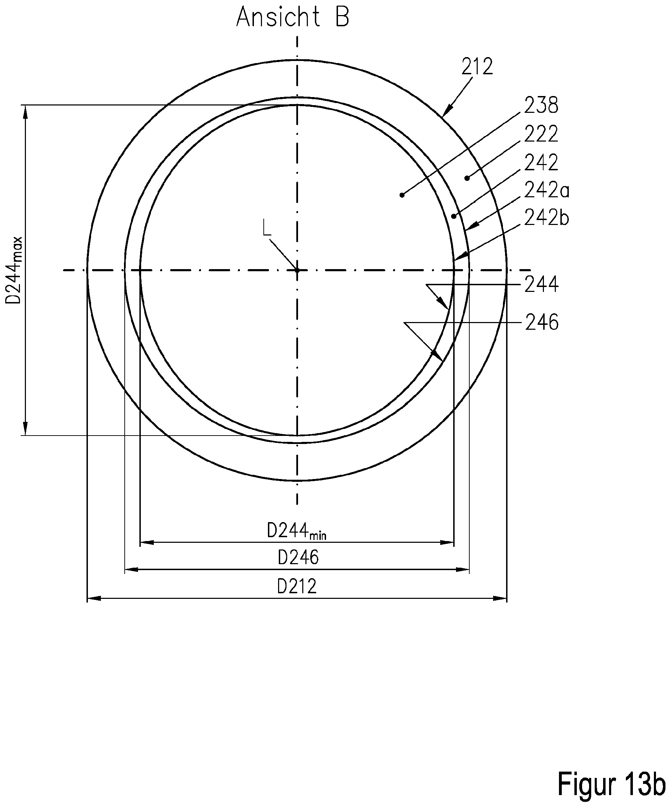

Die Fläche 122 des Flansches 125 kann als axialer Anschlag bzw. zur Positionierung axial zur Längsachse L beispielsweise in dem in der Figur 13 gezeigten Verbindungsteil (200) dienen.

Die Außenflächen 112 und 120 können zur Zentrierung radial zur Längsachse L dienen, wenn das Verbindungsteil 100 beispielhaft in das in der Figur 13 gezeigte Verbindungsteil 200 eingesetzt wird.

Das Verbindungsteil 100 hat im Inneren entlang der Längsachse L eine durchgehende Öffnung 138 mit einer Innenfläche 140. Durch diese Öffnung 138 kann im eingebauten Zustand ein Fluid strömen.

Das hintere Ende 104 hat eine Außenfläche 108.

Die **Figur 12a** zeigt die Ansicht A, also die Ansicht vom hinteren Ende 104 her gesehen, des Verbindungsteils 100 aus Figur 12. Von der Außenfläche 110 sind die Konturen der Fläche 124 des Flansches 125 und der Fläche 112 beispielhaft dargestellt. Von der Innenfläche 140 ist ebenfalls die Kontur beispielhaft dargestellt. Weiterhin ist die Fläche 122 des Flansches 125 beispielhaft gezeigt. Die Kontur des Flansches 125 bzw. der Fläche 124 ist ein Kreis mit einem Durchmesser D124. Die Kontur der Innenfläche 140 ist ebenfalls ein Kreis mit einem Durchmesser D140. Sie könnten aber auch eine andere nahezu beliebige Form haben.

Die Kontur der Fläche 112 hat in Richtung senkrecht zur Längsachse L einen sich durch die Längsachse hindurch erstreckenden kleinsten Abstand D112ₘᵢₙ und größten Abstand D112ₘₐₓ. Die sich durch die Längsachse L und senkrecht zur Längsachse L erstreckenden Abstände D₁₁₂ (= radiale Abstände) zwischen den gegenüberliegenden Konturabschnitten der Fläche 112 sind also entlang des Umfanges nicht konstant. Die Abstände verändern sich auf dem Umfang. Der größte Abstand D112ₘₐₓ ist auch in Figur 12 gezeigt. Die Kontur ist beispielhaft elliptisch.

Die **Figur 12b** zeigt den Schnitt B-B des Verbindungsteils aus Figur 12. Von der Außenfläche 110 sind die Konturen der Fläche 124 des Flansches 125, der Fläche 120 und der Fläche des Nutbodens 116 dargestellt. Von der Innenfläche 140 ist ebenfalls die Kontur dargestellt. Weiterhin ist die Fläche 122 des Flansches 125 gezeigt. Die Kontur des Flansches 125 bzw. der Fläche 124 ist ein Kreis mit einem Durchmesser D124. Die Kontur der Innenfläche 140 ist ebenfalls ein Kreis mit einem Durchmesser D140. Sie könnten aber auch eine andere nahezu beliebige Form haben.

Die Kontur der Fläche 120 hat in Richtung senkrecht zur Längsachse L einen sich durch die Längsachse hindurch erstreckenden kleinsten Abstand D120ₘᵢₙ und größten Abstand D120ₘₐₓ. Die Kontur der Fläche des Nutbodens 116 hat in Richtung senkrecht zur Längsachse L einen sich durch die Längsachse hindurch erstreckenden kleinsten Abstand D116ₘᵢₙ und größten Abstand D116ₘₐₓ.

Die sich durch die Längsachse L und senkrecht zur Längsachse L erstreckenden Abstände D120 und D116 zwischen den gegenüberliegenden Konturabschnitten der Flächen 120 und 116 sind also entlang des Umfanges nicht konstant. Die Abstände verändern sich hier auf dem Umfang. Die maximalen Abstände D116ₘₐₓ und D120ₘₐₓ sind auch in Figur 12 gezeigt.

Im gezeigten Beispiel beträgt der Durchmesser D124=24mm und der Durchmesser D140=12 mm. Die kleinsten Abstände D112ₘᵢₙ und D120 ₘᵢₙ betragen in diesem Beispiel 20 mm und die größten Abstände D112ₘₐₓ und D120ₘₐₓ betragen in diesem Beispiel 21 mm. Die Differenz zwischen dem kleinsten und dem größten Abstand beträgt also 1 mm und der größte Abstand ist 5% größer als der kleinste Abstand. Der kleinste Abstand D116ₘᵢₙ beträgt in diesem Beispiel 18 mm und der größte Abstand D116ₘₐₓ beträgt in diesem Beispiel 19 mm, die Differenz zwischen dem kleinsten und dem größten Abstand beträgt also 1 mm und der größte Abstand ist ca. 5,5 % größer als der kleinste Abstand.

**Figur 12c** zeigt das Verbindungsteil aus Figur 12 mit einem O-Ring 132 in der Nut (130).

Der O-Ring 132 hat in diesem Beispiel eine Schnurstärke Sa von 1,5 mm. In der Mitte der Schnur befindet sich eine virtuelle Mittellinie M132. Der O-Ring 132 erstreckt sich über den Umfang in der Nut 130. Die Nuttiefe T130 beträgt in diesem Beispiel 1 mm und die Nutbreite B130 beträgt 2 mm.

Die zur Längsachse L gerichtete Innenseite des O-Rings 132 befindet sich mit seiner innersten Fläche 132i am Nutboden 116. Die Außenseite des O-Rings 132 ragt mit der äußersten Fläche 132a über die Außenflächen 112 und 120 hinaus.

Die **Figur 12d** zeigt den Schnitt C-C des Verbindungsteils aus Figur 12c vom hinteren Ende 104 her gesehen. Die Ansicht zeigt also auch einen Schnitt durch den O-Ring 132.

Von der Außenfläche 110 sind die Konturen der Fläche 124 des Flansches 125 dargestellt. Von der Innenfläche 140 ist ebenfalls die Kontur dargestellt. Weiterhin ist die Fläche 122 des Flansches 125 gezeigt. Die Kontur des Flansches 125 bzw. der Fläche 124 ist ein Kreis mit einem Durchmesser D124. Die Kontur der Innenfläche 140 ist ebenfalls ein Kreis mit einem Durchmesser D140. Sie könnten aber auch eine nahezu beliebige andere Form haben.

Die Kontur der innersten Fläche 132i des O-Rings 132 hat in Richtung senkrecht zur Längsachse L einen sich durch die Längsachse hindurch erstreckenden kleinsten Abstand D132iₘᵢₙ und größten Abstand D132iₘₐₓ.

Die Kontur der äußersten Fläche 132a des O-Rings 132 hat in Richtung senkrecht zur Längsachse L einen sich durch die Längsachse hindurch erstreckenden einen kleinsten Abstand D132aₘᵢₙ und größten Abstand D132aₘₐₓ.

Die sich durch die Längsachse L und senkrecht zur Längsachse L erstreckenden Abstände D132i und D132a zwischen den gegenüberliegenden Konturabschnitten der Flächen 132i und 132a des O-Rings 132 sind also entlang des Umfanges nicht konstant. Die Abstände verändern sich hier auf dem Umfang. Die größten Abstände D132iₘₐₓ und D132aₘₐₓ sind auch in Figur 12c gezeigt.

Der kleinste Abstand D132iₘᵢₙ beträgt in diesem Beispiel 18 mm und der größte Abstand D132iₘₐₓ beträgt in diesem Beispiel 19 mm, die Differenz zwischen dem kleinsten und dem größten Abstand beträgt also 1 mm und der größte Abstand ist ca. 5,5 % größer als der kleinste Abstand. Da die Schnurstärke Sa des O-Rings in diesem Beispiel 1,5 mm beträgt, ist die Differenz mit 1 mm gleich 2/3 der Schnurstärke Sa.

Der kleinste Abstand D132aₘᵢₙ beträgt in diesem Beispiel 21 mm und der größte Abstand D132aₘₐₓ beträgt in diesem Beispiel 22 mm, die Differenz zwischen dem kleinsten und dem größten Abstand beträgt also 1 mm und der größte Abstand ist ca. 4,7 % größer als der kleinste Abstand. Da die Schnurstärke Sa des O-Rings in diesem Beispiel 1,5 mm beträgt, ist die Differenz mit 1 mm gleich 2/3 der Schnurstärke Sa.

Die Konturen der Außenflächen 112 und 120 können auch eine Kreisform mit einem entlang des Umfangs konstanten Durchmesser D112 und D120 haben, es muss also nicht einen maximalen und einen minimalen Abstand geben. Es ist dann jedoch Bedingung, dass der sich durch die Längsachse L und senkrecht zur Längsachse L erstreckende kleinste Abstand D132aₘᵢₙ zwischen den gegenüberliegenden Konturabschnitten der Flächen 132a des O-Rings größer ist als die beiden Durchmesser D112 und D120.

**Figur 13** zeigt eine geschnittene Ansicht eines beispielhaften zweiten Verbindungsteils 200, in das beispielsweise das Verbindungsteil 100 aus Figur 12c gesteckt bzw. gefügt werden kann. Es umfasst einen Körper 206, der sich entlang einer Längsachse L erstreckt, mit einem vorderen Ende 202 und einem hinteren Ende 204, mit einer Außenfläche 212 und Innenflächen 242 und 244. Zwischen dem vorderen Ende 202 und dem hinteren Ende 204 erstreckt sich eine Öffnung 238. Am vorderen Ende 202 befindet sich eine Fläche 222, die als Anschlagfläche für die Anschlagfläche 122 des Verbindungsteils 100 aus Figur 12c dient.

Die Öffnung 238 hat vom vorderen Ende 202 her gesehen einen zweiten Abschnitt mit der Innenfläche 242 und einen dritten Abschnitt mit der Innenfläche 244. Im Übergang von der Außenfläche 222 zur Innenfläche 242 ist eine Körperkante 242a ausgebildet. Im Übergang von der Innenfläche 242 zur Innenfläche 244 ist zumindest auf einem Teilumfang eine Körperkante 242b ausgebildet. Die Körperkanten 242a und 242b können beispielsweise abgerundet, bspw. mit einem Radius versehen sein. Zumindest über einen Teilumfang ist sie in diesem Beispiel als Fase, also schräg zur Längsachse und hier beispielsweise mit einem zwischen der Längsachse L und der Fläche 242 eingeschlossenen Winkel α von 20° zur Längsachse ausgebildet. Die Körperkante 242b hat zum vorderen Ende 202 parallel zur Längsachse L unterschiedlich große Abstände L242b. Der größte Abstand ist mit L242bₘₐₓ und der kleinste Abstand mit L242bₘᵢₙ bezeichnet. Die Innenfläche 242 der Fase weist so entlang des Umfangs unterschiedliche Abstände zwischen den Körperkanten 242a und 242b sowohl parallel zur Längsachse L als auch parallel zur Fläche 242 auf.

Die **Figur 13a** zeigt die geschnittene Ansicht C-C des gleichen Verbindungsteils 200, die zur Ansicht in Figur 13 um die Längsachse L um 90° gedreht ist. Sie soll nochmals die Ausbildung der Fläche 242 verdeutlichen, ansonsten gilt die Beschreibung von Figur 13.

Die **Figur 13b** zeigt die Ansicht B des zweiten Verbindungsteils 200 aus Figur 13, also vom vorderen Ende 202 her gesehen. Dabei sind die Außenkontur der Außenfläche 212 und die Innenkonturen der Innenflächen 242, 244 und 246 sowie die Körperkanten 242a und 242b zu sehen. Die Außenkontur 212 ist in diesem Beispiel ein Kreis mit einem Durchmesser D212, sie könnte aber auch eine andere Form haben.

In der Zusammenschau der **Figuren 13****,** **13a** **und** **13b** wird nachfolgend die Gestaltung der Öffnung 238 beschrieben.

Die Innenkontur des ersten Abschnitts mit der Innenfläche 246, die nur aus der Körperkante 242a besteht, ist ein Kreis mit einem Durchmesser D246. Die Innenkontur des dritten Abschnitts mit der Innenfläche 244 hat in Richtung senkrecht zur Längsachse L einen sich durch die Längsachse L hindurch erstreckenden kleinsten Abstand D244ₘᵢₙ, der in Figur 13 und 13b gezeigt ist, und einen größten Abstand D244ₘₐₓ, der in Figur 13a und 13b gezeigt ist. Der zweite Abschnitt, der den Übergang zwischen dem ersten und dem dritten Abschnitt bildet, zeigt zumindest über einen Teilbereich des Umfangs eine Fase mit der Innenfläche 242, wie in Figur 13 und 13b gezeigt. Der kleinste Abstand D244ₘᵢₙ ist kleiner als der Durchmesser D246. Der größte Abstand D244ₘₐₓ ist hier gleich dem Durchmesser D246, wie in Figur 13a und 13b gezeigt, könnte aber auch kleiner als D246 sein.

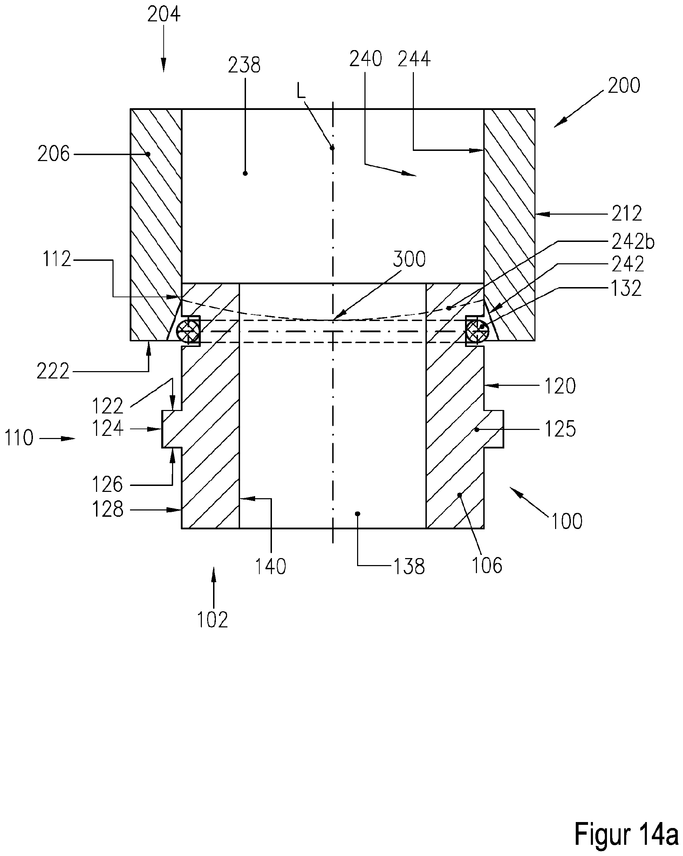

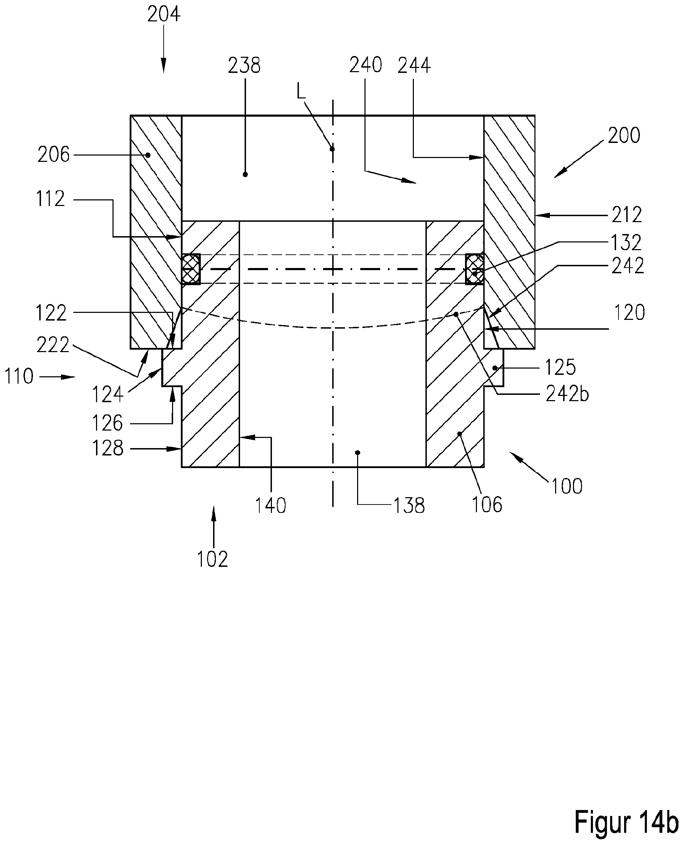

Im gezeigten Beispiel beträgt der Durchmesser D246 = 23 mm, der größte Abstand D244ₘₐₓ 21,2 mm und der kleinste Abstand D244ₘᵢₙ = 20,2 mm. Die Differenz zwischen dem größten Abstand D244ₘₐₓ und dem kleinsten Abstand D244ₘᵢₙ beträgt somit 1 mm und knapp 5%. Damit beträgt für die Differenz L243 zwischen dem maximalen Abstand L242bₘₐₓ und dem minimalen Abstand L242bₘᵢₙ hier 1,1 mm. Die **Figuren 14a** **und14b** zeigen beispielhaft die Verbindung aus dem ersten Verbindungsteil 100 aus Figur 12c und dem zweiten Verbindungsteil 200 aus Figur 13 in unterschiedlich gefügten Zuständen.

In **Figur 14a** beginnt gerade die Berührung des O-Rings 132 mit der Innenfläche 242 der Fase und mit der Körperkante 242b zunächst nur an zwei Stellen 300, die auf dem Umfang gegenüberliegend angeordnet sind, also in diesem Beispiel nur auf einem Teilumfang. Es muss nicht gleich zu Beginn des Fügens der O-Ring 132 auf seinem gesamten Umfang verformt werden, sondern es beginnt zunächst an zwei Stellen, also auf einem Teilumfang und je nach Fügezustand erfolgt die Verformung über den gesamten Umfang nach und nach. Somit wird die benötigte Kraft reduziert und das Ineinanderstecken erleichtert.

**Figur 14b** zeigt die vollständig gefügten bzw. ineineinander gesteckten Verbindungsteile 100 und 200. Die Verbindungsstelle bzw. -linie ist durch das Ineinanderstecken des ersten Verbindungsteils 100 in das zweite Verbindungsteil 200 und den O-Ring 132 in Kombination mit der Innenfläche 240 für ein Fluid, das durch die Innenöffnungen 138 und 238 strömen kann, dicht. Die Verbindungsteile 100 und 200 werden radial zur Längsachse L über eine enge Tolerierung, beispielsweise eine Passung H7/h6 oder H7/h7 nach DIN ISO 286, der Innenfläche 244 zur Außenfläche 112 ausgerichtet. Die axiale Ausrichtung zur Längsachse L der Verbindungsteile 100 und 200 zueinander erfolgt durch eine Berührung der Fläche 122 des ersten Verbindungsteils 100 und der Fläche 222 des zweiten Verbindungsteils 200.

Somit sind ein einfaches Fügen und eine eindeutige axiale und radiale Positionierung zur Längsachse L mit geringer Toleranz bei gleichzeitig dichter Verbindung der Verbindungsteile 100 und 200 möglich.

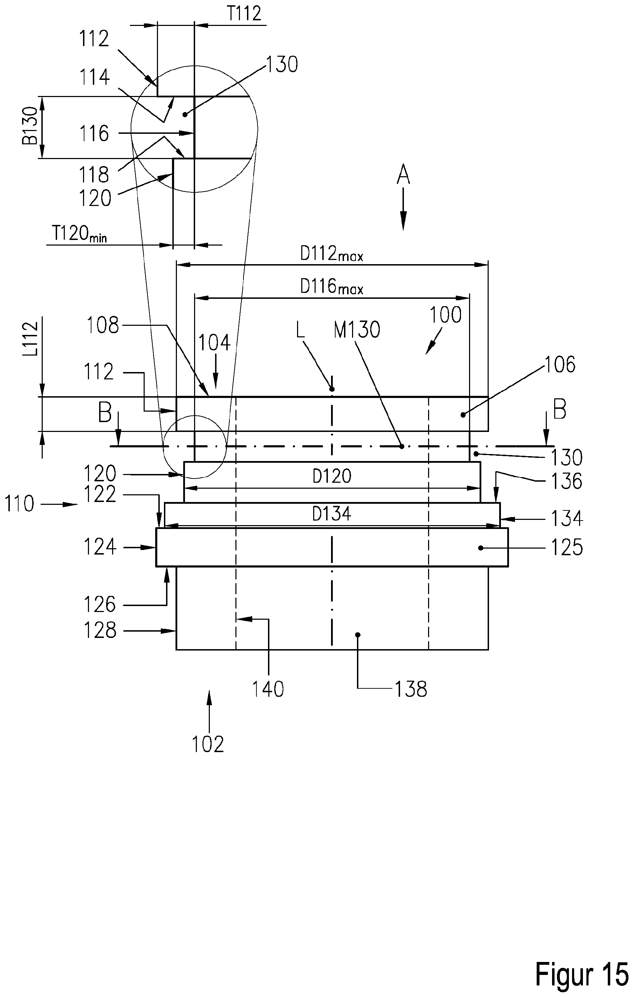

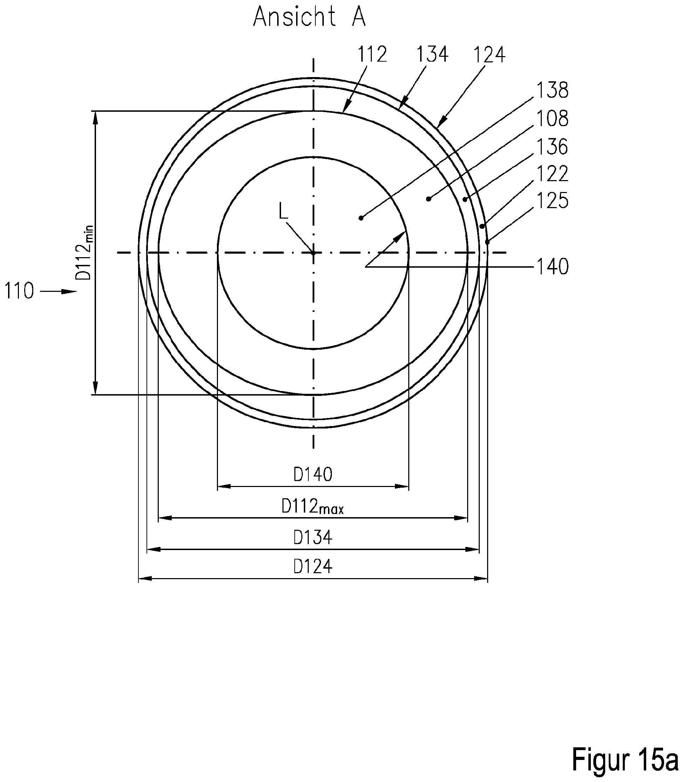

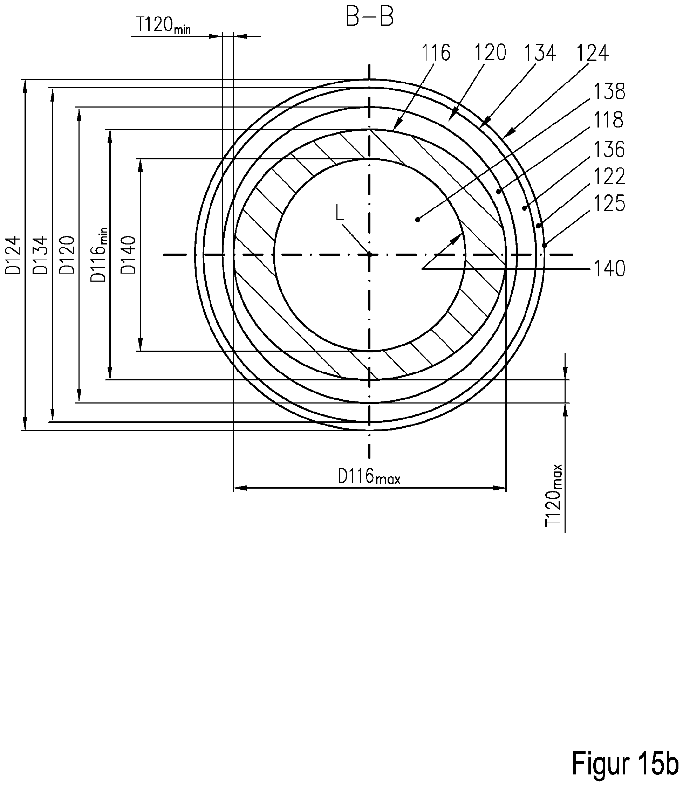

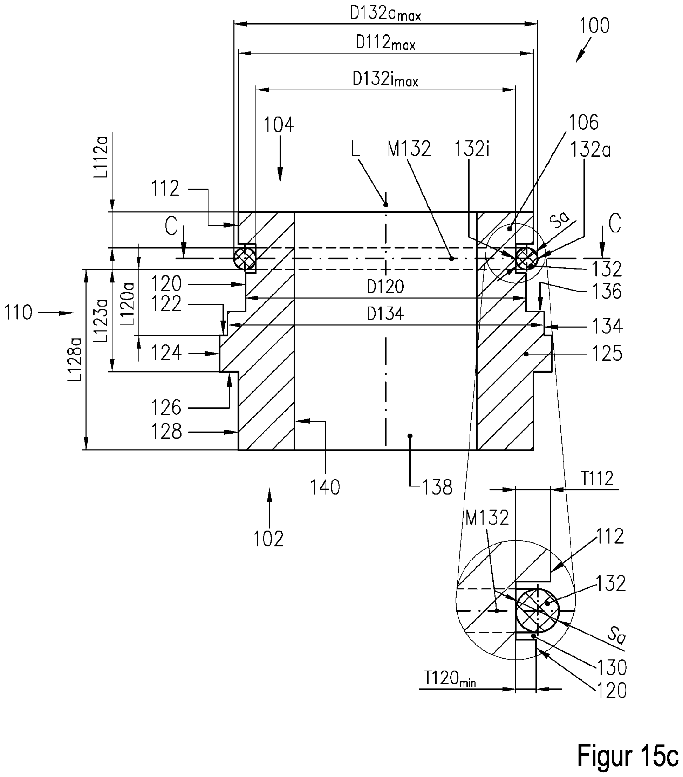

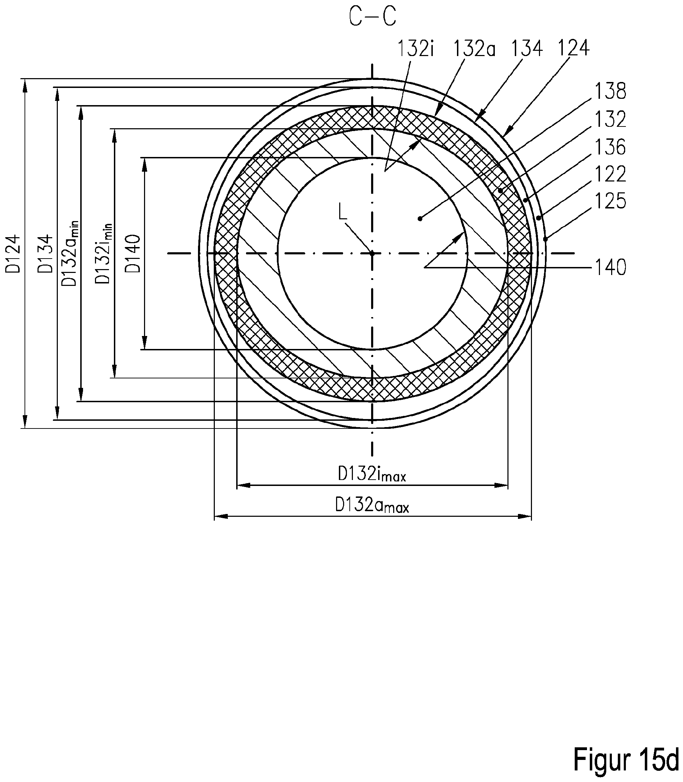

**Figur 15** zeigt ein erstes Verbindungsteil 100 umfassend einen Körper 106, der sich entlang einer Längsachse L erstreckt, mit einem vorderen Ende 102 und einem hinteren Ende 104, mit einer Außenfläche 110, die mehrere Flächen 112, 114, 116, 118, 120, 122, 124, 126, 128, 134 und 136 umfasst.

Die Außenfläche 110 weist eine umlaufende Nut 130 auf. Die Nut wird begrenzt durch seitliche Flächen 114 und 118 sowie einen Nutboden 116. Die Nut 130 hat eine Nutbreite B130 und eine Nuttiefe, die geeignet ist, einen O-Ring oder einen Profilring aufzunehmen. Die Nut 130 erstreckt sich über den Umfang. Es können unterschiedliche Nutformen, wie sie beispielhaft in den Figuren 1a bis 1c dargestellt sind, vorhanden sein.

Weiterhin befindet sich auf der Außenfläche 110 ein Flansch 125, der durch Flächen 122, 124 und 126 begrenzt wird.

Weiterhin befindet auf der Außenfläche 110 eine Außenfläche 134. Der Abschnitt mit der Außenfläche 134 hat einen Durchmesser D134, der größer ist als der Durchmesser D120 des Abschnitts mit der Außenfläche 120.

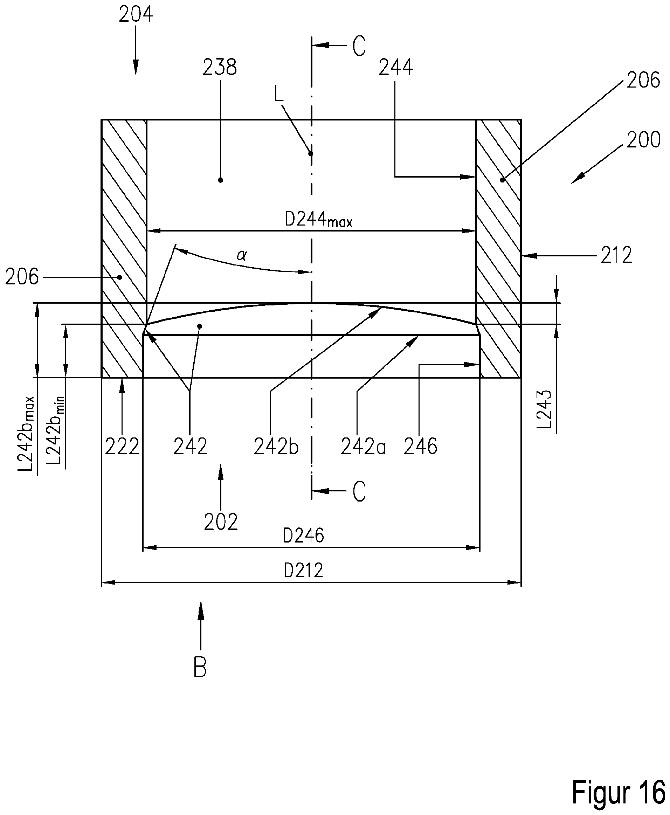

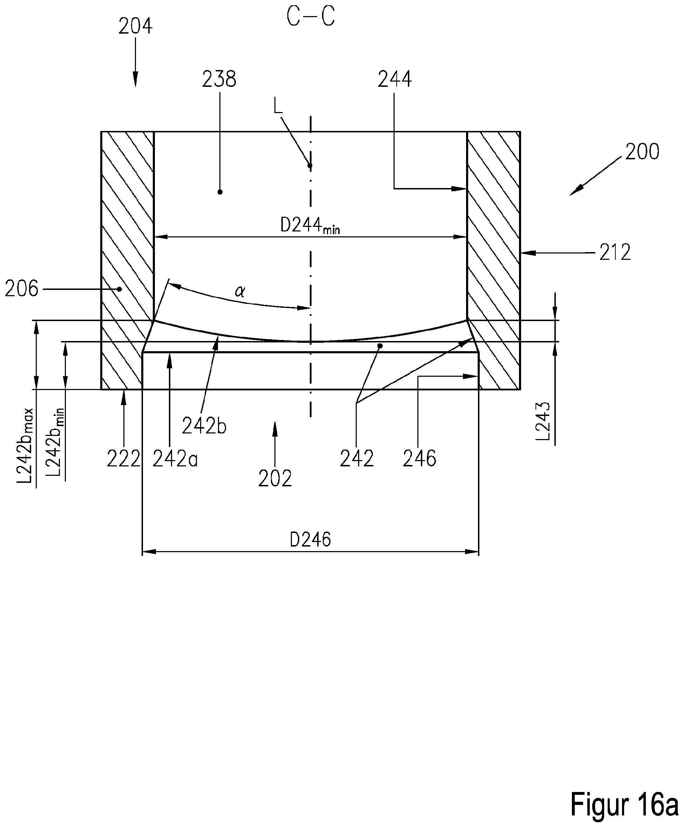

Die Außenfläche 134 dient zur Zentrierung radial zur Längsachse L, wenn das Verbindungsteil beispielsweise in das in der Figur 16a gezeigte Verbindungsteil 200 eingesetzt wird.

Die Fläche 122 des Flansches 125 kann als axialer Anschlag bzw. zur Positionierung axial zur Längsachse L beispielsweise in dem in der Figur 16a gezeigten Verbindungsteil 200 dienen.

Das Verbindungsteil 100 hat im Inneren entlang der Längsachse L eine durchgehende Öffnung 138 mit einer Innenfläche 140. Durch diese Öffnung 138 kann im eingebauten Zustand ein Fluid strömen.

Das hintere Ende 104 hat eine Außenfläche 108.

Die **Figur 15a** zeigt die Ansicht A, also die Ansicht vom hinteren Ende 104 her gesehen, des Verbindungsteils 100 aus Figur 15. Von der Außenfläche 110 sind die Konturen der Fläche 124 des Flansches 125, der Fläche 112 und der Fläche 134, die als Zentrierfläche fungiert, dargestellt. Von der Innenfläche 140 ist ebenfalls die Kontur dargestellt. Weiterhin sind die Fläche 122 des Flansches 125 und die Fläche 136 gezeigt. Weiterhin ist die Fläche 108 des hinteren Endes 104 gezeigt.

Die Kontur der Fläche 124 ist ein Kreis mit einem Durchmesser D124. Die Kontur der Fläche 134 ist ein Kreis mit einem Durchmesser D134. Die Kontur der Innenfläche 140 ist ebenfalls ein Kreis mit einem Durchmesser D140. Die Konturen können aber auch eine andere nahezu beliebige Form haben.

Die Kontur der Fläche 112 hat in Richtung senkrecht zur Längsachse L einen sich durch die Längsachse hindurch erstreckenden kleinsten Abstand D112ₘᵢₙ und größten Abstand D112ₘₐₓ. Die sich durch die Längsachse L und senkrecht zur Längsachse L erstreckenden Abstände D112 zwischen den gegenüberliegenden Konturabschnitten der Fläche 112 sind also entlang des Umfanges nicht konstant. Die Abstände verändern sich auf dem Umfang. Der größte Abstand D112ₘₐₓ ist auch in Figur 15 gezeigt.

Die **Figur 15b** zeigt den Schnitt B-B des Verbindungsteils 100 aus Figur 15. Von der Außenfläche 110 sind die Konturen der Fläche 124 des Flansches 125, der Fläche 120, der Fläche 134 und der Fläche des Nutbodens 116 dargestellt. Von der Innenfläche 140 ist ebenfalls die Kontur dargestellt. Weiterhin ist die Fläche 122 des Flansches 125 gezeigt. Ebenso ist die Fläche 136 gezeigt. Die Kontur der Fläche 124 ist ein Kreis mit einem Durchmesser D124, die Kontur der Fläche 134 ist ein Kreis mit einem Durchmesser D134 und die Kontur der Fläche 120 ebenfalls ein Kreis mit einem Durchmesser D120. Die Kontur der Innenfläche 140 ist ebenfalls ein Kreis mit einem Durchmesser D140. Sie können aber auch eine andere nahezu beliebige Form haben. Wichtig ist, dass der größte sich senkrecht zur Längsachse erstreckende Abstand zwischen der Längsachse L und einem oder mehreren Punkten oder Abschnitten der Kontur der Fläche 134 größer ist als der größte sich senkrecht zur Längsachse erstreckende Abstand zwischen der Längsachse L und einem oder mehreren Punkten oder Abschnitten der Kontur der Fläche 120.

Die Kontur der Fläche des Nutbodens 116 hat in Richtung senkrecht zur Längsachse L einen sich durch die Längsachse hindurch erstreckenden kleinsten Abstand D116ₘᵢₙ und größten Abstand D116ₘₐₓ.

Die sich durch die Längsachse L und senkrecht zur Längsachse L erstreckenden Abstände D116 zwischen den gegenüberliegenden Konturabschnitten der Flächen 116 sind also entlang des Umfanges nicht konstant. Die Abstände verändern sich hier auf dem Umfang. Der maximale Abstand D116ₘₐₓ ist auch in Figur 15 gezeigt.

Im gezeigten Beispiel beträgt der Durchmesser D124=24 mm, der Durchmesser D140=12 mm, der Durchmesser D120=20 mm und der Durchmesser D 134 = 23 mm. Der Durchmesser D134 ist besonders eng toleriert beispielsweise mit einer Passung h6 (-13 bis 0 µm) oder h7 (-21 bis 0 µm)nach DIN ISO 286. Der kleinste Abstand D116ₘᵢₙ beträgt in diesem Beispiel 18 mm und der größte Abstand D116ₘₐₓ beträgt hier 19 mm, die Differenz zwischen dem kleinsten und dem größten Abstand beträgt also 1 mm und der größte Abstand ist ca. 5,5 % größer als der kleinste Abstand.

Der kleinste Abstand D112ₘᵢₙ beträgt in diesem Beispiel 20 mm und der größte Abstand D112ₘₐₓ beträgt in diesem Beispiel 21 mm, die Differenz zwischen dem kleinsten und dem größten Abstand beträgt also 1 mm und der größte Abstand ist 5 % größer als der kleinste Abstand.

Die Nuttiefe T112, d.h. der Abstand zwischen dem Nutboden 116 und der Fläche 112 senkrecht zur Längsachse L oder entlang der seitlichen Begrenzungsfläche 114 der Nut 130, beträgt in diesem Beispiel konstant 1 mm [T112=(D112ₘᵢₙ-D116ₘᵢₙ)/2 und T112=(D112ₘₐₓ-D116ₘₐₓ)/2]. Der kleinste Abstand zwischen dem Nutboden 116 und der Fläche 120 senkrecht zur Längsachse L oder entlang der seitlichen Begrenzungsfläche 114 der Nut 130 T120ₘᵢₙ beträgt in diesem Beispiel 0,5 mm [T120ₘᵢₙ=(D120-D116ₘₐₓ)/2] und größte Abstand T120ₘₐₓ beträgt in diesem Beispiel 1 mm [T120ₘₐₓ=(D120-D116ₘᵢₙ)/2].

Auf einer Seite der Nut, in diesem Beispiel auf der Seite der Fläche 118, weist die Nut unterschiedliche sich axial zur Längsachse L erstreckende Abstände zwischen dem Nutboden 116 und der Fläche 120 entlang des Umfangs auf.

Der Durchmesser D120 muss größer als der kleinste Abstand D116ₘᵢₙ und kleiner als der größte Abstand D112ₘₐₓ oder gleich diesem sein **[D116ₘᵢₙ < D120 < = D112ₘₐₓ].**

**Figur 15c** zeigt das Verbindungsteil 100 aus Figur 15 mit einem O-Ring 132 in der Nut 130.

Der O-Ring 132 hat eine Schnurstärke Sa von beispielsweise 1,5 mm. In der Mitte der Schnur befindet sich eine virtuelle Mittellinie M132. Der O-Ring 132 erstreckt sich über den Umfang in der Nut 130.

Die zur Längsachse L gerichtete Innenseite des O-Rings 132, befindet sich mit seiner innersten Fläche 132i am Nutboden 116. Die Außenseite des O-Rings 132 ragt mit der äußersten Fläche 132a über die Außenflächen 112 und 120 hinaus.

Die **Figur 15d** zeigt den Schnitt C-C des Verbindungsteils aus Figur 15c vom hinteren Ende 104 her gesehen. Die Ansicht zeigt also auch einen Schnitt durch den O-Ring 132.

Von der Außenfläche 110 sind die Konturen der Fläche 124 des Flansches 125 und der Fläche 134 dargestellt. Von der Innenfläche 140 ist ebenfalls die Kontur dargestellt. Weiterhin sind die Fläche 122 des Flansches 125 und die Fläche 136 gezeigt. Die Kontur der Fläche 124 ist ein Kreis mit einem Durchmesser D124, die Kontur der Fläche 134 ist ein Kreis mit einem Durchmesser D134. Die Kontur der Innenfläche 140 ist ebenfalls ein Kreis mit einem Durchmesser D140. Sie können aber auch eine andere nahezu beliebige Form haben.

Die Kontur der innersten Fläche 132i des O-Rings 132 hat in Richtung senkrecht zur Längsachse L einen sich durch die Längsachse L hindurch erstreckenden kleinsten Abstand D132iₘᵢₙ und größten Abstand D132iₘₐₓ.

Die Kontur der äußersten Fläche 132a des O-Rings 132 hat in Richtung senkrecht zur Längsachse L einen sich durch die Längsachse L hindurch erstreckenden kleinsten Abstand D132aₘᵢₙ und größten Abstand D132aₘₐₓ.

Der kleinste Abstand D132iₘᵢₙ der innersten Fläche 132i beträgt in diesem Beispiel 18 mm und der größte Abstand D132iₘₐₓ der innersten Fläche 132i beträgt in diesem Beispiel 19 mm, die Differenz zwischen dem kleinsten und dem größten Abstand beträgt also 1 mm und der größte Abstand ist ca. 5,5 % größer als der kleinste Abstand. Da die Schnurstärke Sa des O-Rings in diesem Beispiel 1,5 mm beträgt, ist die Differenz mit 1 mm 2/3 der Schnurstärke Sa.

Der kleinste Abstand D132aₘᵢₙ der äußersten Fläche 132a beträgt in diesem Beispiel 21 mm und der größte Abstand D132aₘₐₓ der äußersten Fläche 132a beträgt in diesem Beispiel 22 mm, die Differenz zwischen dem kleinsten und dem größten Abstand beträgt also 1 mm und der größte Abstand ist ca. 4,7 % größer als der kleinste Abstand. Da die Schnurstärke Sa des O-Rings in diesem Beispiel 1,5 mm beträgt, ist die Differenz mit 1 mm 2/3 der Schnurstärke Sa.

Der sich durch die Längsachse und senkrecht zur Längsachse L erstreckende kleinste Abstand D132aₘᵢₙ zwischen den gegenüberliegenden Konturabschnitten der Flächen 132a des O-Rings muss größer als der Durchmesser D120 sein.

Der sich durch die Längsachse und senkrecht zur Längsachse L erstreckende größte Abstand D132aₘₐₓ zwischen den gegenüberliegenden Konturabschnitten der Flächen 132a des O-Rings muss größer als der größte Abstand D112ₘₐₓ sein.

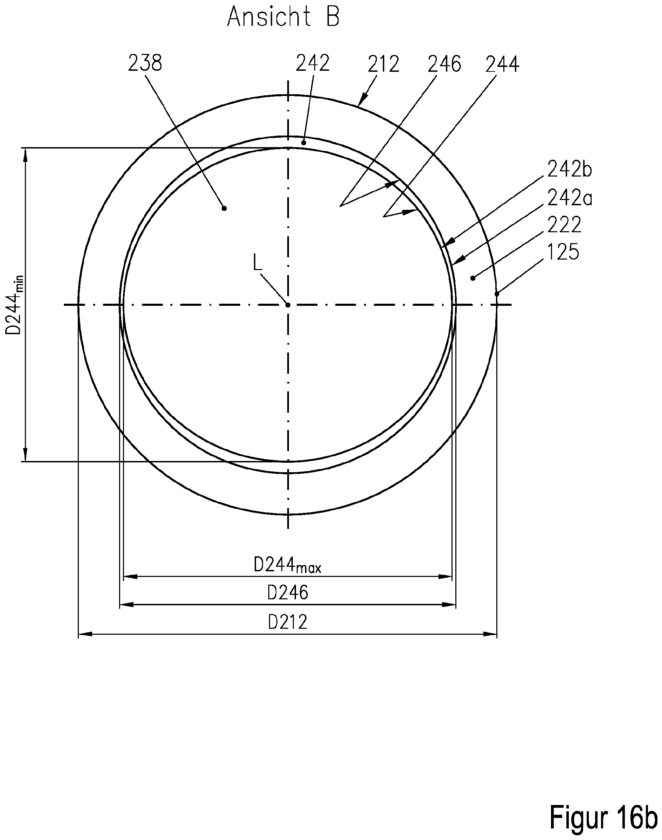

**Figur 16** zeigt beispielhaft eine geschnittene Ansicht eines zweiten Verbindungsteils 200, in das beispielsweise das Verbindungsteil 100 aus Figur 15c gesteckt bzw. gefügt werden kann. Es umfasst einen Körper 206, der sich entlang einer Längsachse L erstreckt, mit einem vorderen Ende 202 und einem hinteren Ende 204, mit einer Außenfläche 212 und Innenflächen 242, 244 und 246. Zwischen dem vorderen Ende 202 und dem hinteren Ende 204 erstreckt sich eine Öffnung 238. Am vorderen Ende 202 befindet sich eine Fläche 222, die als Anschlagfläche für die Anschlagfläche 122 des Verbindungsteils 100 aus Figur 15 dient.

Die Öffnung 238 hat vom vorderen Ende 202 her gesehen einen ersten Abschnitt mit der Innenfläche 246, einen zweiten Abschnitt mit der Innenfläche 242 und einen dritten Abschnitt mit der Innenfläche 244. Im Übergang von der Innenfläche 246 zur Innenfläche 242 ist eine Körperkante 242a ausgebildet. Im Übergang von der Innenfläche 242 zur Innenfläche 244 ist in diesem Beispiel auf dem gesamten Umfang eine Körperkante 242b ausgebildet. Die Körperkanten 242a und 242b können abgerundet, bspw. mit einem Radius versehen sein. Die Innenfläche 242 befindet sich also zwischen den Innenflächen 246 und 244. Auf dem gesamten Umfang ist beispielsweise eine Fase, also schräg zur Längsachse L und hier beispielsweise mit einem zwischen der Längsachse L und der Fläche 242 eingeschlossenen Winkel α von 20° zur Längsachse ausgebildet und realisiert den Übergang zwischen dem ersten Abschnitt mit der Innenfläche 246 und dem dritten Abschnitt mit der Innenfläche 244. Die Körperkante 242b hat zum vorderen Ende 202 parallel zur Längsachse L unterschiedlich große Abstände L242b. Der größte Abstand ist mit L242bₘₐₓ und der kleinste Abstand mit L242bₘᵢₙ bezeichnet. Die Innenfläche 242 der Fase weist so entlang des Umfangs unterschiedliche Abstände zwischen den Körperkanten 242a und 242b sowohl parallel zur Längsachse L als auch parallel zur Fläche 242 auf. Die Abstände der Körperkanten 242b zum vorderen Ende 202 parallel zur Längsachse sind größer als der Abstand der Körperkante 242a zum vorderen Ende 202.

Die **Figur 16a** zeigt die geschnittene Ansicht C-C des gleichen Verbindungsteils 200, die zur Ansicht in Figur 16 um die Längsachse L um 90° gedreht ist. Sie soll nochmals die Ausbildung der Fläche 242 verdeutlichen, ansonsten gilt die Beschreibung von Figur 16.

Die **Figur 16b** zeigt die Ansicht B des zweiten Verbindungsteils 200 aus Figur 16, also vom vorderen Ende 202 her gesehen. Dabei sind die Außenkontur der Außenfläche 212 und die Innenkonturen der Innenflächen 242, 244 und 246 sowie die Körperkanten 242a und 242b zu sehen. Die Außenkontur 212 ist ein Kreis mit einem Durchmesser D212, könnte aber auch eine andere Form haben. Es ist zu erkennen, dass sich die Innenfläche 242 der Fase in diesem Ausführungsbeispiel über den kompletten Umfang erstreckt.

In der Zusammenschau der **Figuren 16****,** **16a** **und** **16b** wird nachfolgendend die Gestaltung der Öffnung 238 beschrieben.

Die Innenkontur des ersten Abschnitts mit der Innenfläche 246 ist ein Kreis mit einem Durchmesser D246. Der Innenkontur des dritten Abschnitts mit der Innenfläche 244 hat in Richtung senkrecht zur Längsachse L einen sich durch die Längsachse hindurch erstreckenden kleinsten Abstand D244ₘᵢₙ, der in Figur 16a und 16b gezeigt ist und größten Abstand D244ₘₐₓ, der in Figur 16 und 16b gezeigt ist. Der zweite Abschnitt, der den Übergang zwischen dem ersten und dem dritten Abschnitt bildet, zeigt hier über den gesamten Umfang eine Fase mit der Innenfläche 242, wie in den Figuren 16 ,16a und 16b gezeigt. Der größte Abstand D244ₘₐₓ ist hier kleiner als der Durchmesser D246, wie in Figur 16 und 16b gezeigt.

Im gezeigten Beispiel beträgt der Durchmesser D246 = 23 mm, der größte Abstand D244ₘₐₓ 21,2 mm und der kleinste Abstand D244ₘᵢₙ = 20,2 mm. Die Differenz zwischen dem größten Abstand D244ₘₐₓ und dem kleinsten Abstand D244ₘᵢₙ beträgt somit 1 mm und damit knapp 5% des größten Abstandes.

Damit beträgt die Differenz zwischen dem maximalen Abstand L242bₘₐₓ und dem minimalen Abstand L242bₘᵢₙ in diesem Beispiel 1,1 mm.

Der Durchmesser D246 ist besonders eng toleriert beispielsweise mit einer Passung H₇ (0 bis +21µm) nach DIN ISO 286. Hierdurch wird eine radiale Ausrichtung bzw. Zentrierung zur Längsachse L zwischen dem ersten Verbindungsteil 100 und dem zweiten Verbindungsteil 200 realisiert. Die Außenfläche 134 des ersten Verbindungsteils 100 und die Innenfläche 246 des zweiten Verbindungsteils 200 sind in einem eng tolerierten Abstand zueinander angeordnet und berühren sich zumindest teilweise.

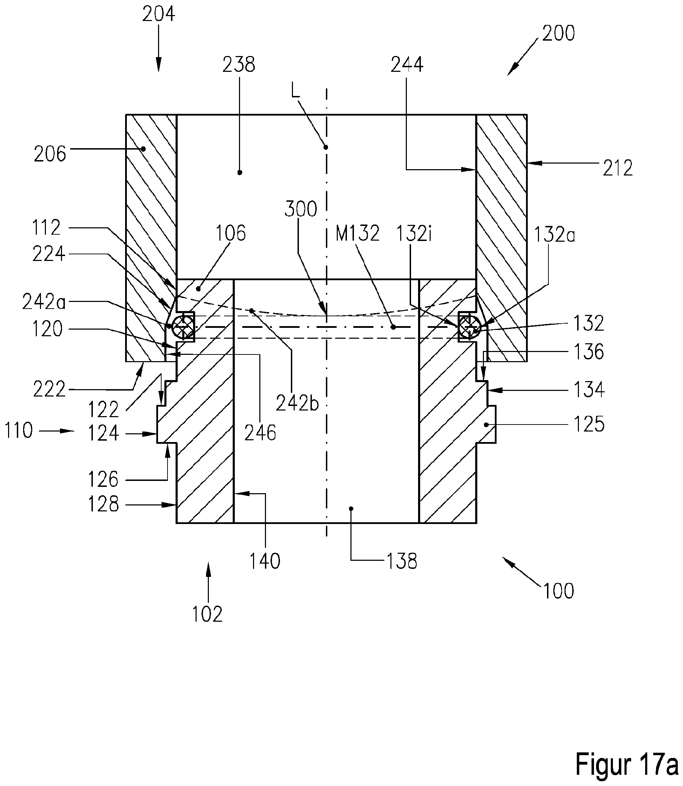

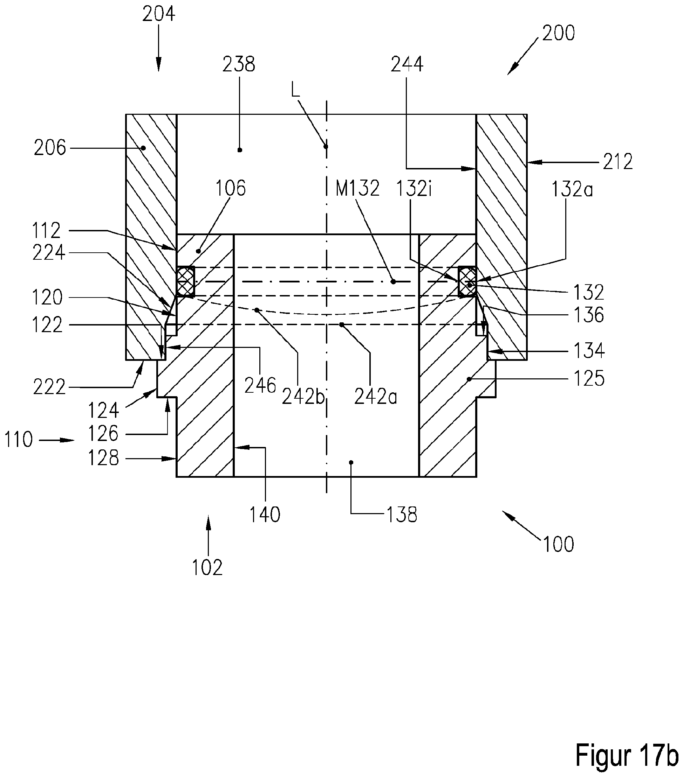

Die **Figuren 17a** **und** **17b** zeigen beispielhaft die Verbindung aus dem ersten Verbindungsteil 100 aus Figur 15 bzw. 15c und dem zweiten Verbindungsteil 200 aus Figur 16 in unterschiedlich gefügten Zuständen.

In **Figur 17a** beginnt gerade eine Berührung des O-Rings 132 mit der Innenfläche 242 der Fase 242 und mit der Körperkante 242b zunächst nur an zwei Stellen 300. Es muss nicht gleich zu Beginn des Fügens der O-Ring 132 auf seinem gesamten Umfang verformt werden, sondern es beginnt zunächst an zwei Stellen, also auf einem Teilumfang und je nach Fügezustand erfolgt die Verformung über den gesamten Umfang nach und nach. Somit wird die benötigte Kraft reduziert und das Ineinanderstecken erleichtert.

**Figur 17b** zeigt die vollständig gefügten bzw. ineinander gesteckten Verbindungsteile 100 und 200. Die Verbindungsstelle bzw. -linie ist durch das Ineinanderstecken des ersten Verbindungsteils 100 in das zweite Verbindungsteil 200 und den O-Ring 132 in Kombination mit der Innenfläche 240 für ein Fluid, das durch die Innenöffnungen 138 und 238 strömen kann, dicht. Die Verbindungsteile 100 und 200 werden radial zur Längsachse L über eine enge Tolerierung, z. B. eine Passung h6/H7, nach DIN ISO 286, der Innenfläche 246 mit dem Durchmesser D246 (H7, von 0 bis +21µm) zur Außenfläche 134 mit dem Durchmesser D134 (h6, von -13 bis 0 µm) ausgerichtet. Es ist beispielsweise auch eine Passung h7/H7 nach DIN ISO 286, der Innenfläche 246 mit dem Durchmesser D246 (H7, von 0 bis +21µm) zur Außenfläche 134 mit dem Durchmesser D134 (h7, von -21 bis 0 µm) möglich. Die axiale Ausrichtung zur Längsachse L der Verbindungsteile 100 und 200 zueinander erfolgt durch die Berührung der Fläche 122 des ersten Verbindungsteile 100 und der Fläche 222 des zweiten Verbindungsteils 200.

Somit sind ein einfaches Fügen und eine eindeutige axiale und radiale Positionierung mit geringer Toleranz bei gleichzeitig dichter Verbindung möglich.

Zusätzlich ist durch die Gestaltung der Außenkontur der Fläche 112 (Außenfläche) des Verbindungsteils 100 mit dem größte Abstand D112ₘₐₓ und dem minimalen Abstand D112 ₘᵢₙ und die Gestaltung der Kontur der Fläche (Innenfläche) 244 mit dem maximalen Abstand D244ₘₐₓ und dem minimalen Abstand D244 ₘᵢₙ auch eine Positionierung entlang des Umfangs möglich. Im gezeigten Beispiel gibt es genau zwei um 180° rotatorisch um die Längsachse L versetzte Positionen, in denen die Verbindungsteile ineinander gefügt bzw. gesteckt werden können, nämlich dort, wo die Flächen 112 und 244 mit ihren D112ₘₐₓ und D244ₘₐₓ sowie D112ₘᵢₙ und D244ₘᵢₙ zueinander gegenüberliegend angeordnet sind.

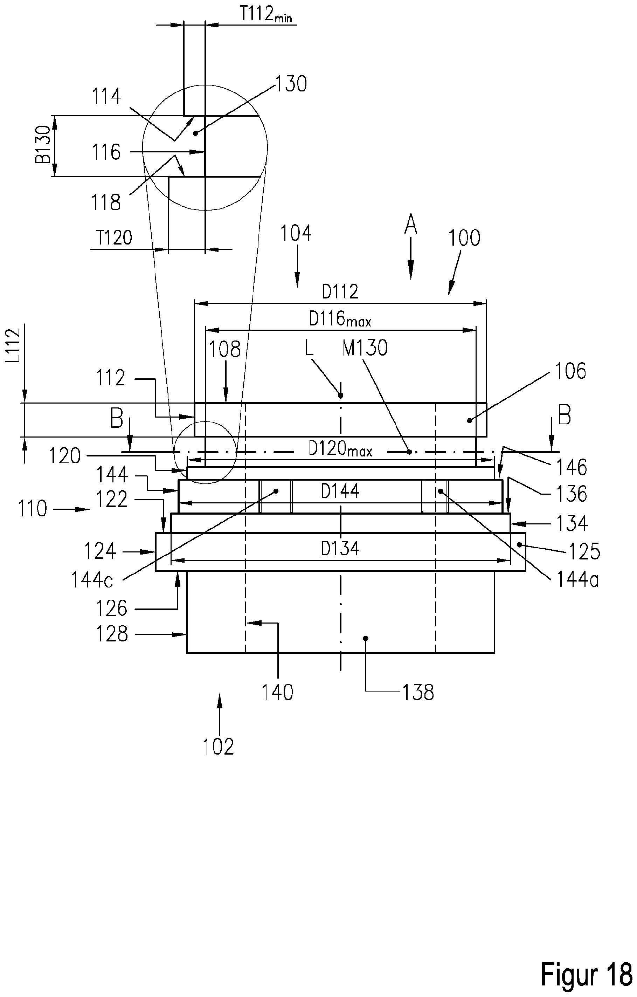

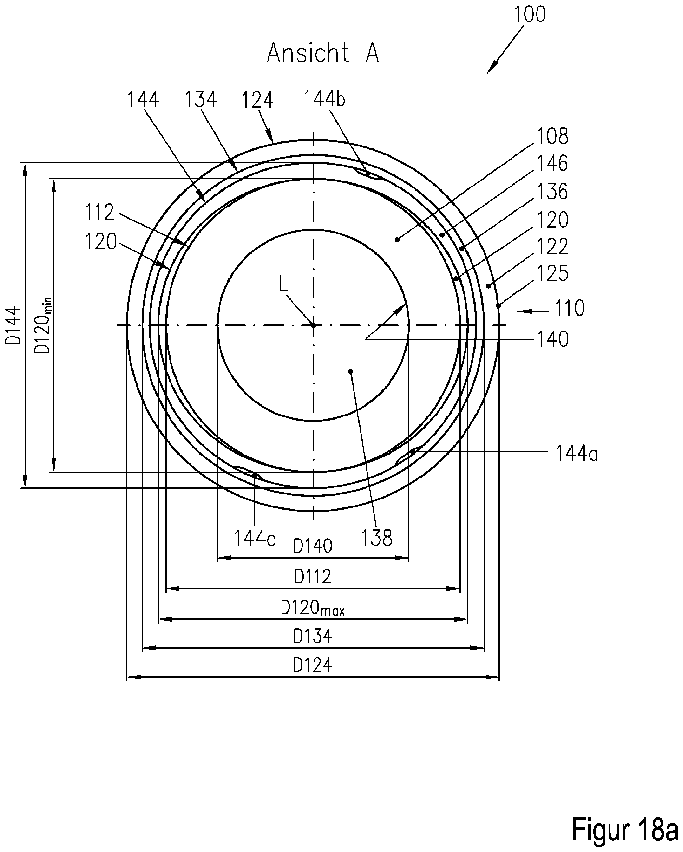

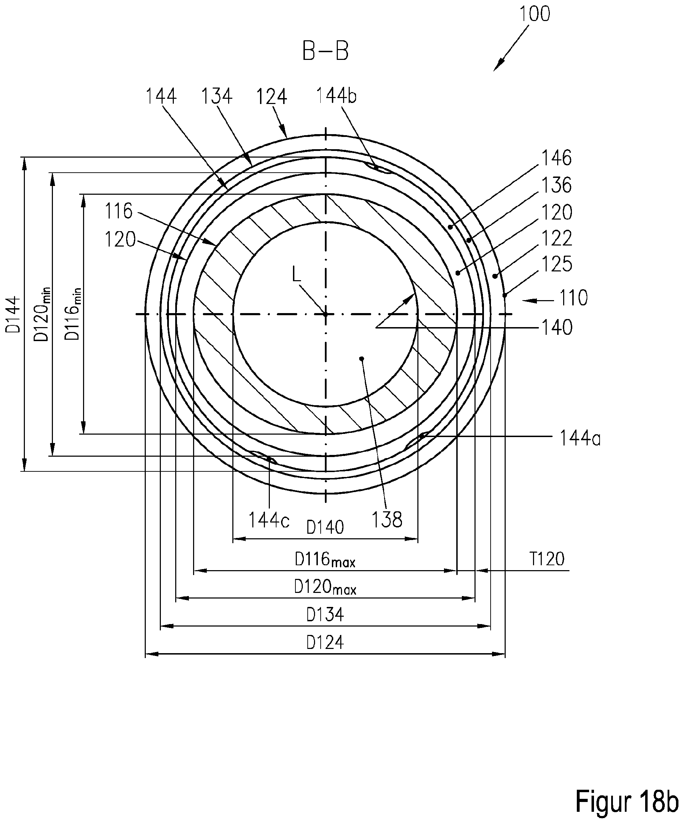

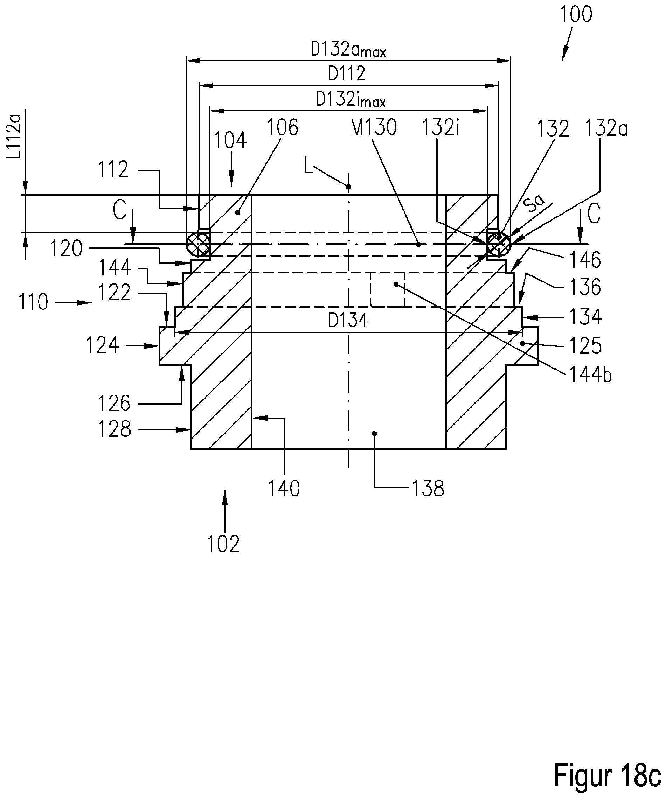

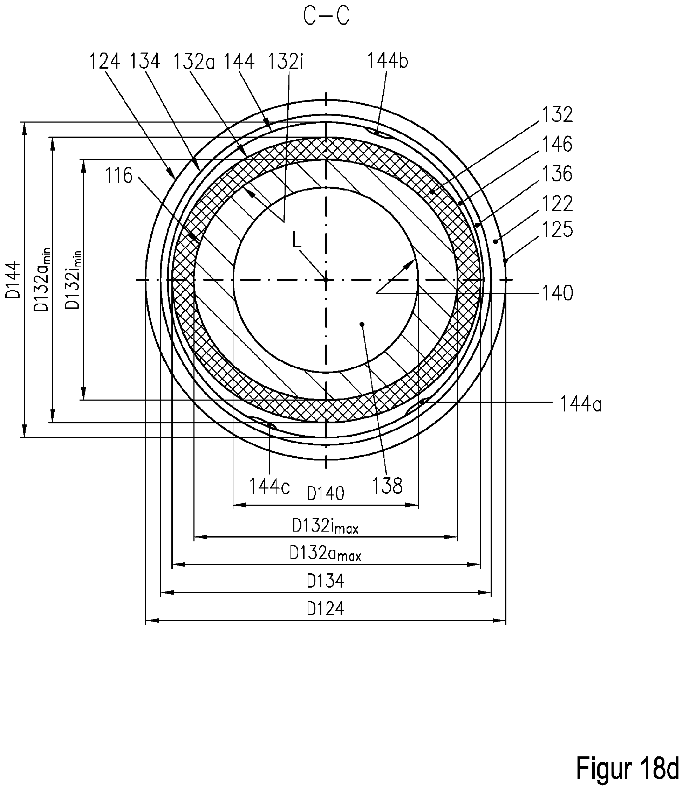

**Figur 18** zeigt ein erstes Verbindungsteil 100, umfassend einen Körper 106, der sich entlang einer Längsachse L erstreckt, mit einem vorderen Ende 102 und einem hinteren Ende 104, mit einer Außenfläche 110, die mehrere Flächen 112, 114, 116, 118, 120, 122, 124, 126, 128, 134, 136, 144 und 146 umfasst.

Die Außenfläche 110 weist eine umlaufende Nut 130 auf. Die Nut wird begrenzt durch seitliche Flächen 114 und 118 sowie einen Nutboden 116. Die Nut 130 hat eine Nutbreite B130 und eine Nuttiefe, die geeignet ist, einen O-Ring oder einen Profilring aufzunehmen. Die Nut 130 erstreckt sich über den Umfang. Es können unterschiedliche Nutformen, wie sie beispielhaft in den Figuren 1a bis 1c dargestellt sind, vorhanden sein.

Weiterhin befindet sich auf der Außenfläche 110 ein Flansch 125, der durch die Flächen 122, 124 und 126 begrenzt wird.

Auf der Außenfläche 110 befindet sich eine Fläche 144, die sich zwischen der Fläche 120 und der Außenfläche 134 befindet. Der Abschnitt mit der Fläche 144 hat einen Durchmesser D144, der größer ist als der sich in Richtung senkrecht zur Längsachse L durch die Längsachse L hindurch erstreckende größte Abstand D120ₘₐₓ der Fläche 120.

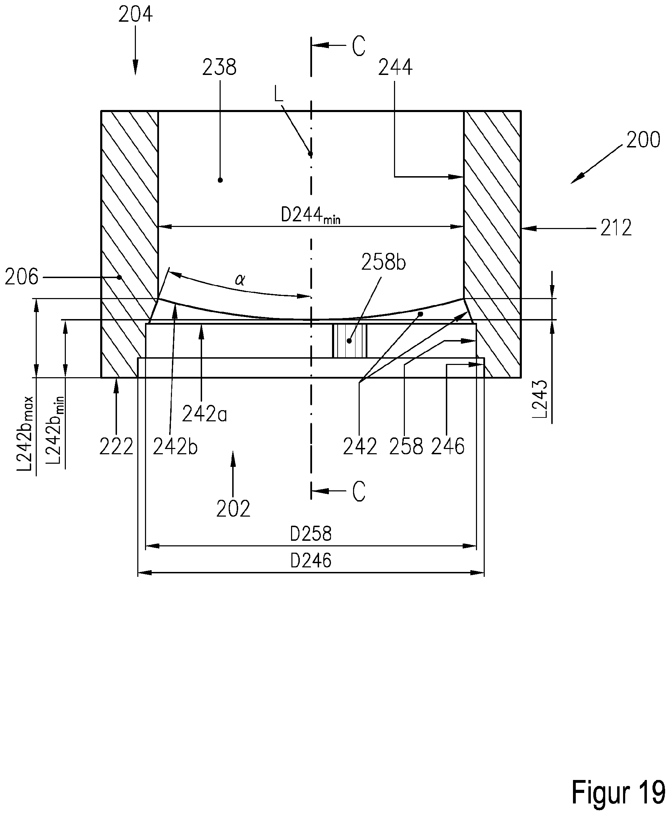

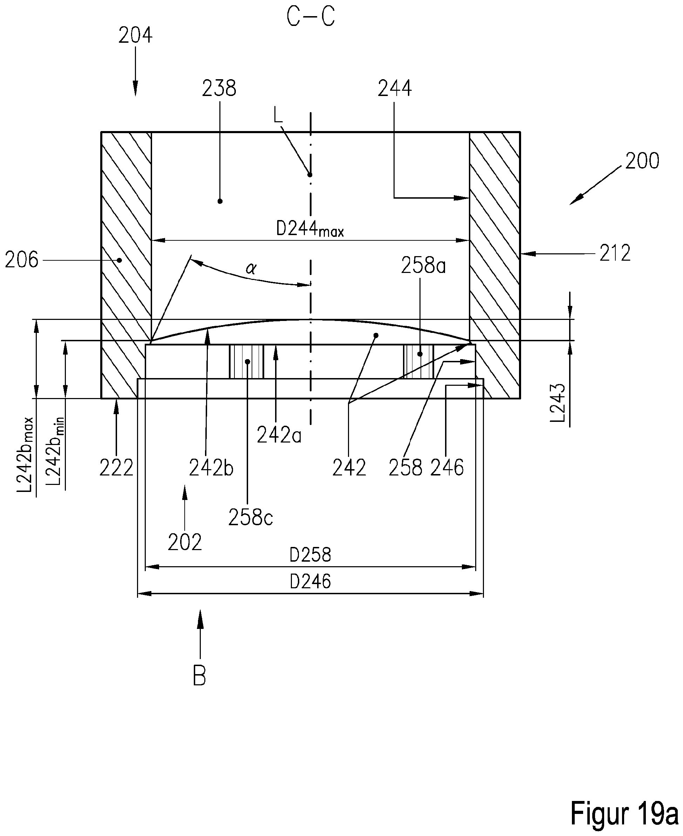

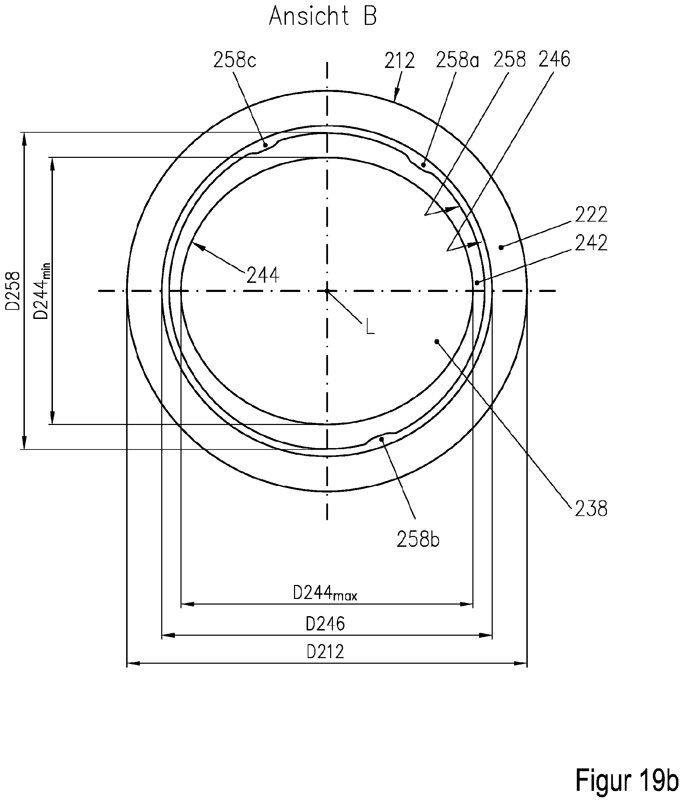

In der Außenfläche 144 befinden sich drei Nuten bzw. Vertiefungen 144a, 144b und 144c, wobei in dieser Ansicht nur 2 Nuten sichtbar sind. Die Nuten erstrecken sich parallel zur Längsachse L. Diese sichern beispielweise im Zusammenspiel mit den Nasen des Verbindungsteils 200 aus Figur 19 die Positionierung rotatorisch zur Längsachse L entlang des Umfangs der Verbindungsteile zueinander.

Weiterhin befinden sich auf der Außenfläche 110 eine Fläche 134, die als Zentrierfläche fungiert, und eine Fläche 136. Der Abschnitt mit der Fläche 134 hat einen Durchmesser D134, der größer ist als der größte Abstand D120ₘₐₓ der Fläche 120 und größer als der Durchmesser D144 des Abschnitts der Fläche 144.

Die Fläche 134 dient zur Zentrierung radial zur Längsachse L, wenn das Verbindungsteil 100 beispielsweise in das in der Figur 19a gezeigte Verbindungsteil 200 eingesetzt wird.

Die Anschlagfläche 122 dient als axialer Anschlag bzw. zur Positionierung axial zur Längsachse L beispielsweise in dem in der Figur 19a gezeigten Verbindungsteil 200.

Das Verbindungsteil 100 hat im Inneren entlang der Längsachse L eine durchgehende Öffnung 138 mit einer Innenfläche 140. Durch diese Öffnung 138 kann im eingebauten Zustand ein Fluid strömen.

Die **Figur 18a** zeigt die Ansicht A, also die Ansicht vom hinteren Ende 104 her gesehen, des Verbindungsteils aus Figur 18. Von der Außenfläche 110 sind die Konturen der Fläche 124 des Flansches 125, der Fläche 120, der Fläche 112, der Fläche 144 und der Fläche 134, die als Zentrierfläche fungiert, dargestellt. Von der Innenfläche 140 ist ebenfalls die Kontur dargestellt. Weiterhin sind die Fläche 122 des Flansches 125, die Fläche 146 und die Fläche 136 gezeigt. Die Kontur der Fläche 124 ist ein Kreis mit einem Durchmesser D124. Die Kontur der Fläche 112 ist ebenfalls ein Kreis mit einem Durchmesser D112. Die Kontur der Außenfläche 144 ist ebenfalls ein Kreis und hat hier beispielhaft drei Nuten 144a, 144b und 144c. Die Kontur der Fläche 134 ist ein Kreis mit einem Durchmesser D134. Die Kontur der Innenfläche 140 ist ebenfalls ein Kreis mit einem Durchmesser D140. Die Konturen können aber auch eine andere nahezu beliebige Form haben.

Die Kontur der Fläche 120 hat in Richtung senkrecht zur Längsachse L einen sich durch die Längsachse hindurch erstreckenden einen kleinsten Abstand D120ₘᵢₙ und einen größten Abstand D120ₘₐₓ.

Die **Figur 18b** zeigt den Schnitt B-B des Verbindungsteils aus Figur 18. Von der Außenfläche 110 sind die Konturen der Fläche 124 des Flansches 125, der Fläche 120, der Fläche 144, der Fläche 134 und der Fläche des Nutbodens 116 dargestellt. Von der Innenfläche 140 ist ebenfalls die Kontur dargestellt. Weiterhin ist die Fläche 122 des Flansches 125 gezeigt. Ebenso sind die Flächen 136 und 146 gezeigt. Die Kontur der Fläche 124 ist ein Kreis mit einem Durchmesser D124, die Kontur der Fläche 134 ist ein Kreis mit einem Durchmesser D134. Die Kontur der Außenfläche 144 ist ebenfalls ein Kreis und hat hier beispielhaft drei Nuten 144a, 144b und 144c. Die Kontur der Innenfläche 140 ist ebenfalls ein Kreis mit einem Durchmesser D140. Sie können aber auch eine andere nahezu beliebige Form haben.

Wichtig ist, dass der größte sich senkrecht zur Längsachse erstreckende Abstand zwischen der Längsachse L und einem oder mehreren Punkten oder Abschnitten der Kontur der Fläche 134 größer ist als der größte sich senkrecht zur Längsachse erstreckende Abstand zwischen der Längsachse L und einem oder mehreren Punkten oder Abschnitten der Kontur der Flächen 112, 120 und 144.

Die Kontur der Fläche 120 hat in Richtung senkrecht zur Längsachse L einen sich durch die Längsachse hindurch erstreckenden einen kleinsten Abstand D120ₘᵢₙ und größten Abstand D120ₘₐₓ. In diesem Beispiel beträgt der kleinste Abstand D120ₘᵢₙ 20 mm und der größte Abstand D120ₘₐₓ = 21 mm. Die Kontur der Fläche des Nutbodens 116 hat in Richtung senkrecht zur Längsachse L einen sich durch die Längsachse hindurch erstreckenden kleinsten Abstand D116ₘᵢₙ und größten Abstand D116ₘₐₓ.

Im gezeigten Beispiel beträgt der Durchmesser D112 = 20 mm, der Durchmesser D124 = 24mm, der Durchmesser D140 = 12 mm, der Durchmesser D144 = 23 mm und der Durchmesser D 134 = 23,5 mm.

Damit ist D134 > D144 > D120ₘₐₓ > D112.

Der Durchmesser D134 ist besonders eng toleriert beispielsweise mit einer Passung h6 (-13 bis 0 µm) oder h7 (-21 bis 0 µm) nach DIN ISO 286. Der kleinste Abstand D116ₘᵢₙ beträgt in diesem Beispiel 18 mm und der größte Abstand D116ₘₐₓ beträgt in diesem Beispiel 19 mm, die Differenz zwischen dem kleinsten und dem größten Abstand beträgt also 1 mm und der größte Abstand ist ca. 5,5 % größer als der kleinste Abstand.

Die Nuttiefe T120, d.h. der Abstand zwischen dem Nutboden 116 und der Fläche 120 senkrecht zur Längsachse L oder entlang der seitlichen Begrenzungsfläche 118 der Nut (130) beträgt in diesem Beispiel konstant 1 mm [T120=(D120ₘᵢₙ-D116ₘᵢₙ)/2 und T120=(D120ₘₐₓ-D116ₘₐₓ)/2].

Der minimale Abstand zwischen dem Nutboden 116 und der Fläche 112 senkrecht zur Längsachse L oder entlang der seitlichen Begrenzungsfläche 114 der Nut 130 beträgt in diesem Beispiel 0,5 mm [T112ₘᵢₙ=(D112-D116ₘₐₓ)/2] und größte Abstand T112ₘₐₓ beträgt 1mm [[T112ₘₐₓ=(D112-D116ₘᵢₙ)/2].

Auf einer Seite der Nut, hier auf der Seite der Fläche 114, weist die Nut 130 unterschiedliche sich axial zur Längsachse L erstreckende Abstände T112 zwischen dem Nutboden 116 und der Fläche 112 entlang des Umfangs auf.

Der größte Abstand D120ₘₐₓ muss größer als der größte Abstand D116ₘₐₓ und als der Durchmesser D112 sein und dieser muss größer als der größte Abstand D116ₘₐₓ sein. **[D120ₘₐₓ** > **D112** > **D116ₘₐₓ].**

**Figur 18c** zeigt beispielhaft das Verbindungsteil 100 aus Figur 18 mit einem O-Ring 132 in der Nut 130.

Der O-Ring 132 hat in diesem Beispiel eine Schnurstärke Sa von 1,5 mm. In der Mitte der Schnur befindet sich eine virtuelle Mittellinie M132. Der O-Ring 132 erstreckt sich über den Umfang in der Nut 130. Die zur Längsachse L gerichtete Innenseite des O-Rings, befindet sich mit seiner innersten Fläche 132i am Nutboden 116. Die Außenseite des O-Rings 132 ragt mit der äußersten Fläche 132a über die Außenflächen 112 und 120 hinaus. Die Außenseite des O-Rings 132 ragt mit seiner äußersten Fläche 132a nicht über die Außenflächen 144 und 134 hinaus. Es ist vorteilhaft, wenn er ebenfalls nicht über die Böden der Nuten 144a, 144b und 144c hinausragt.

Die **Figur 18d** zeigt den Schnitt C-C des Verbindungsteils 100 aus Figur 18c vom hinteren Ende 104 her gesehen. Die Ansicht zeigt also auch einen Schnitt durch den O-Ring 132.

Von der Außenfläche 110 sind die Konturen der Fläche 124 des Flansches 125, der Fläche 134 und der Fläche 144 dargestellt. Von der Innenfläche 140 ist ebenfalls die Kontur dargestellt. Weiterhin ist die Fläche 122 des Flansches 125 und die Fläche 136 gezeigt. Die Kontur der Fläche 124 ist ein Kreis mit einem Durchmesser D124, die Kontur der Fläche 134 ist ein Kreis mit einem Durchmesser D134. Die Kontur der Außenfläche 144 ist ebenfalls ein Kreis und hat hier beispielhaft drei Nuten 144a, 144b und 144c. Die Kontur der Innenfläche 140 ist ebenfalls ein Kreis mit einem Durchmesser D140. Sie können aber auch eine andere nahezu beliebige Form haben.

Die Kontur der innersten Fläche 132i des O-Rings 132 hat in Richtung senkrecht zur Längsachse L einen sich durch die Längsachse hindurch erstreckenden kleinsten Abstand D132iₘᵢₙ und größten Abstand D132iₘₐₓ.

Die Kontur der äußersten Fläche 132a des Rundrings 132 hat in Richtung senkrecht zur Längsachse L einen sich durch die Längsachse hindurch erstreckenden kleinsten Abstand D132aₘᵢₙ und größten Abstand D132aₘₐₓ.

Der kleinste Abstand D132iₘᵢₙ beträgt in diesem Beispiel 18 mm und größten Abstand D132iₘₐₓ beträgt in diesem Beispiel 19 mm, die Differenz zwischen dem kleinsten und dem größten Abstand beträgt also 1 mm und der größte Abstand ist ca. 5,5 % größer als der kleinste Abstand. Da die Schnurstärke Sa des O-Rings 1,5 mm beträgt, ist die Differenz mit 1 mm 2/3 der Schnurstärke Sa.

Der kleinste Abstand D132aₘᵢₙ beträgt in diesem Beispiel 21 mm und der größte Abstand D132aₘₐₓ beträgt in diesem Beispiel 22 mm, die Differenz zwischen dem kleinsten und dem größten Abstand beträgt also 1 mm und der größte Abstand ist ca. 4,7 % größer als der kleinste Abstand. Da die Schnurstärke Sa des O-Rings in diesem Beispiel 1,5 mm beträgt, ist die Differenz mit 1 mm 2/3 der Schnurstärke Sa.

Wie in Figur 18 beschrieben, betragen der kleinste Abstand D120ₘᵢₙ 20 mm und ist damit kleiner als kleinste Abstand D132aₘᵢₙ mit 21 mm und der größte Abstand D120ₘₐₓ = 21 mm ist kleiner als der größte Abstand D132aₘₐₓ mit 22 mm.

**Figur 19** zeigt eine geschnittene Ansicht eines zweiten Verbindungsteils 200, in das beispielsweise das Verbindungsteil 100 aus Figur 18c gesteckt bzw. gefügt werden kann. Es umfasst einen Körper 206, der sich entlang einer Längsachse L erstreckt, mit einem vorderen Ende 202 und einem hinteren Ende 204, mit einer Außenfläche 212 und den Innenflächen 242, 244, 246 und 258. Zwischen dem vorderen Ende 202 und dem hinteren Ende 204 erstreckt sich eine Öffnung 238. Am vorderen Ende 202 befindet sich eine Fläche 222, die als Anschlagfläche für die Anschlagfläche 122 des Verbindungsteils 100 aus Figur 18 dient.

Die Öffnung 238 hat vom vorderen Ende 202 her gesehen einen ersten Abschnitt mit der Innenfläche 246, einen vierten Abschnitt mit der Innenfläche 258, einen zweiten Abschnitt mit der Innenfläche 242 und einen dritten Abschnitt mit der Innenfläche 244. Im Übergang von der Innenfläche 258 zur Innenfläche 242 ist eine Körperkante 242a ausgebildet. Im Übergang von der Innenfläche 242 zur Innenfläche 244 ist in diesem Beispiel auf dem gesamten Umfang eine Körperkante 242b ausgebildet. Die Körperkanten 242a und 242b können beispielsweise abgerundet, bspw. mit einem Radius versehen sein. Die Innenfläche 242 befindet sich also zwischen den Innenflächen 258 und 244. Auf dem gesamten Umfang ist beispielsweise eine Fase, also schräg zur Längsachse L und hier beispielsweise mit einem zwischen der Längsachse L und der Fläche 242 eingeschlossenen Winkel α von 20° zur Längsachse ausgebildet und realisiert den Übergang zwischen dem vierten Abschnitt mit der Innenfläche 258 und dem dritten Abschnitt mit der Innenfläche 244. Die Körperkante 242b hat zum vorderen Ende 202 parallel zur Längsachse L unterschiedlich große Abstände L242b, der größte Abstand ist mit L242bₘₐₓ und der kleinste Abstand mit L242bₘᵢₙ bezeichnet. Die Innenfläche 242 der Fase weist so entlang des Umfangs unterschiedliche Abstände zwischen den Körperkanten 242a und 242b sowohl parallel zur Längsachse L als auch parallel zur Fläche 242 auf. Die Abstände der Körperkanten 242b zum vorderen Ende 202 parallel zur Längsachse L sind größer als der Abstand der Körperkante 242a zum vorderen Ende 202.

Auf der Innenfläche des zweiten Abschnitts befinden sich beispielsweise drei Nasen oder Vorsprünge 258a, 258b und 258c. In dieser Figur ist nur der Vorsprung 258b zu sehen.

Die **Figur 19a** zeigt die geschnittene Ansicht C-C des gleichen Verbindungsteils 200, die zur Ansicht in Figur 19 um die Längsachse L um 90° gedreht ist. Sie soll nochmals die Ausbildung der Fläche 242 verdeutlichen, ansonsten gilt die Beschreibung von Figur 19. Ebenfalls sind hier auf der Innenfläche 258 die Vorsprünge 258a und 258c zu sehen.

Die **Figur 19b** zeigt die Ansicht B des zweiten Verbindungsteils aus Figur 19a, also vom vorderen Ende 202 her gesehen. Dabei sind die Außenkontur der Außenfläche 212 und die Innenkonturen der Innenflächen 242, 244, 246 und 258 mit den Vorsprüngen 258a, 258b und 258c sowie die Körperkanten 242a und 242b zu sehen. Die Außenkontur 212 ist ein Kreis mit einem Durchmesser D212, könnte aber auch eine andere Form haben. Es ist zu erkennen, dass sich die Innenfläche 242 der Fase in diesem Ausführungsbeispiel über den kompletten Umfang erstreckt.

In der Zusammenschau der **Figuren 19****,** **19a** **und** **19b** wird nachfolgendend die Gestaltung der Öffnung 238 beschrieben.

Die Innenkontur des ersten Abschnitts mit der Innenfläche 246 ist ein Kreis mit einem Durchmesser D246. Die Innenkontur des vierten Abschnitts mit der Innenfläche 258 ist ein Kreis mit einem Durchmesser D258 mit den Vorsprüngen bzw. Nasen 258a, 258b und 258c, die entlang des Umfangs der Innenfläche so verteilt und gestaltet sind, dass sie beim Zusammenstecken und im zusammengesteckten Zustand mit dem Verbindungsteil 100 mit den Nuten bzw. Vertiefungen 144a, 144b und 144c in Eingriff stehen. Die Innenkontur des dritten Abschnitts mit der Innenfläche 244 hat in Richtung senkrecht zur Längsachse L einen sich durch die Längsachse hindurch erstreckenden kleinsten Abstand D244ₘᵢₙ, der in Figur 19 und 19b gezeigt ist, und größten Abstand D244ₘₐₓ, der in Figur 19a und 19b gezeigt ist. Der zweite Abschnitt, der den Übergang zwischen dem vierten und dem dritten Abschnitt bildet, zeigt hier über den gesamten Umfang eine Fase mit der Innenfläche 242, wie in den Figuren 19, 19a und 19b gezeigt. Der größte Abstand D244ₘₐₓ ist hier kleiner als der Durchmesser D246, wie in Figur 19a und 19b gezeigt.

Im gezeigten Beispiel beträgt der Durchmesser D246 = 23 mm, der größte Abstand D244ₘₐₓ 21,2 mm und der kleinste Abstand D244ₘᵢₙ = 20,2 mm. Die Differenz zwischen dem größten Abstand D244ₘₐₓ und dem kleinsten Abstand D244ₘᵢₙ beträgt somit 1 mm und damit knapp 5% des größten Abstandes.

Damit beträgt die Differenz L243 zwischen dem maximalen Abstand L242bₘₐₓ und dem minimalen Abstand L242bₘᵢₙ hier 1,1 mm.

Der Durchmesser D246 ist besonders eng toleriert beispielsweise mit einer Passung H₇ (0 bis +21µm) nach DIN ISO 286. Hierdurch wird die radiale Ausrichtung bzw. Zentrierung zur Längsachse L zwischen dem ersten Verbindungsteil (100) und dem zweiten Verbindungsteil 200 realisiert. Die Außenfläche 134 des ersten Verbindungsteils 100 und die Innenfläche 246 des zweiten Verbindungsteils 200 sind in einem eng tolerierten Abstand zueinander angeordnet und berühren sich zumindest teilweise.

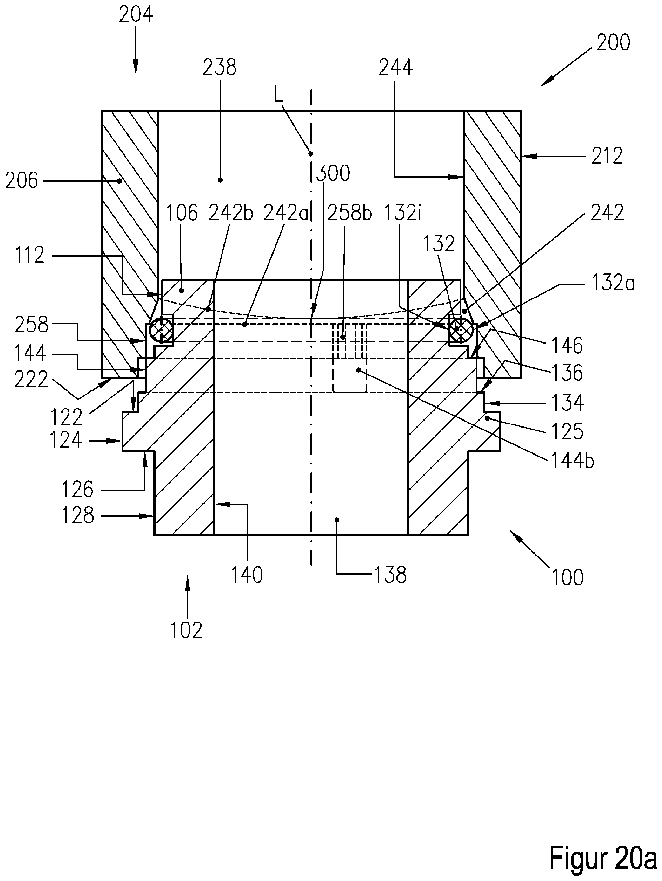

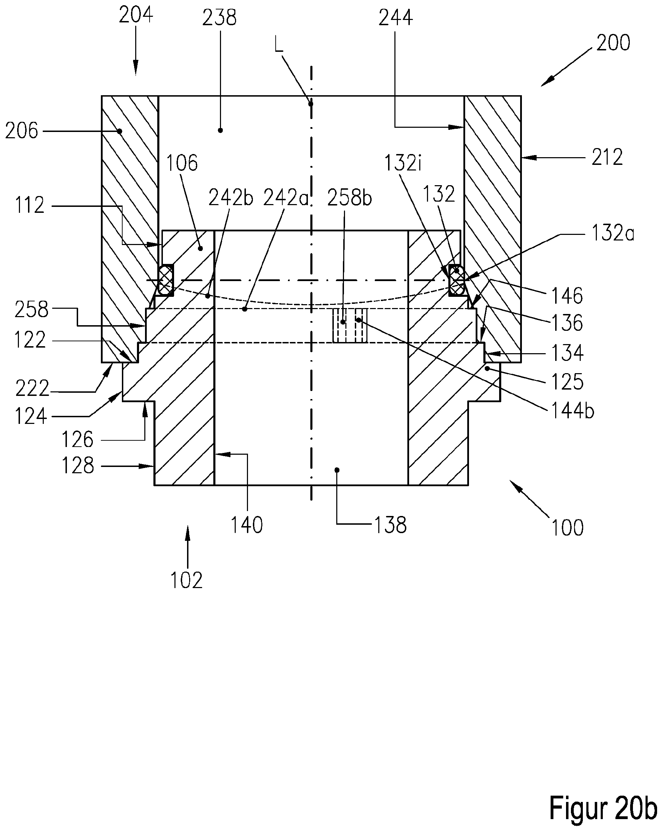

Die **Figuren 20a** **und** **20b** zeigen beispielhaft die Verbindung aus dem ersten Verbindungsteil 100 aus Figur 18c und dem zweiten Verbindungsteil 200 aus Figur 19 in unterschiedlich gefügten Zuständen. Die Verbindungsteile sind so ineinandergesteckt, dass die Nuten bzw. Vertiefungen 144a, 144b und 144c mit den Nasen bzw. Vorsprüngen 258a, 258b und 258c korrespondieren und miteinander in Eingriff stehen. Das erste und das zweite Verbindungsteil 100 und 200 können nur in einer Lage rotatorisch zur Längsachse L ineinander gesteckt bzw. gefügt werden, nämlich dann, wenn die Nuten bzw. Vertiefungen mit den Nasen bzw. Vorsprünge korrespondieren und miteinander in Eingriff stehen. In diesem Beispiel sind jeweils drei Vorsprünge und Vertiefungen dargestellt. Es ist besonders vorteilhaft, eine Anordnung wie DE 20 2007 005 316 A1 beschrieben, zu wählen. In den Figuren 20a und 20b ist beispielhaft eine Vertiefung 258b und ein Vorsprung 144b, die miteinander in Eingriff stehen, also gegenüberliegend angeordnet sind, gezeigt.

In **Figur 20a** beginnt gerade die Berührung des O-Rings (132) mit der Innenfläche 242 der Fase 242 und mit der Körperkante 242b zunächst nur an zwei Stellen 300. Es muss nicht gleich zu Beginn des Fügens der O-Ring 132 auf seinem gesamten Umfang verformt werden, sondern beginnt zunächst an zwei Stellen, also auf einem Teilumfang und je nach Fügezustand erfolgt die Verformung über den gesamten Umfang nach und nach. Somit wird die benötigte Kraft reduziert und das Ineinanderstecken erleichtert.

**Figur 20b** zeigt die vollständig gefügten bzw. ineinander gesteckten Verbindungsteile 100 und 200. Die Verbindungsstelle bzw. linie ist durch das Ineinanderstecken des ersten Verbindungsteils 100 in das zweite Verbindungsteil 200 und den O-Ring 132 in Kombination mit der Innenfläche 244 für ein Fluid, das durch die Innenöffnungen 138 und 238 strömen kann, dicht. Die Verbindungsteile werden radial zur Längsachse L über eine enge Tolerierung, z. B. eine Passung h6/H7, nach DIN ISO 286 der Innenfläche 246 mit dem Durchmesser D246 (H7, von 0 bis +21µm) zur Außenfläche 134 mit dem Durchmesser D134 (h6, von -13 bis 0 µm) oder h7 ( von -21 bis 0 µm) ausgerichtet. Die axiale Ausrichtung zur Längsachse L der Verbindungsteile zueinander erfolgt durch die Berührung der Fläche 122 des ersten Verbindungsteile 100 und der Fläche 222 des zweiten Verbindungsteils 200.

Somit sind ein einfaches Fügen und eine eindeutige axiale und radiale Positionierung zur Längsachse L mit geringer Toleranz bei gleichzeitig dichter Verbindung möglich.

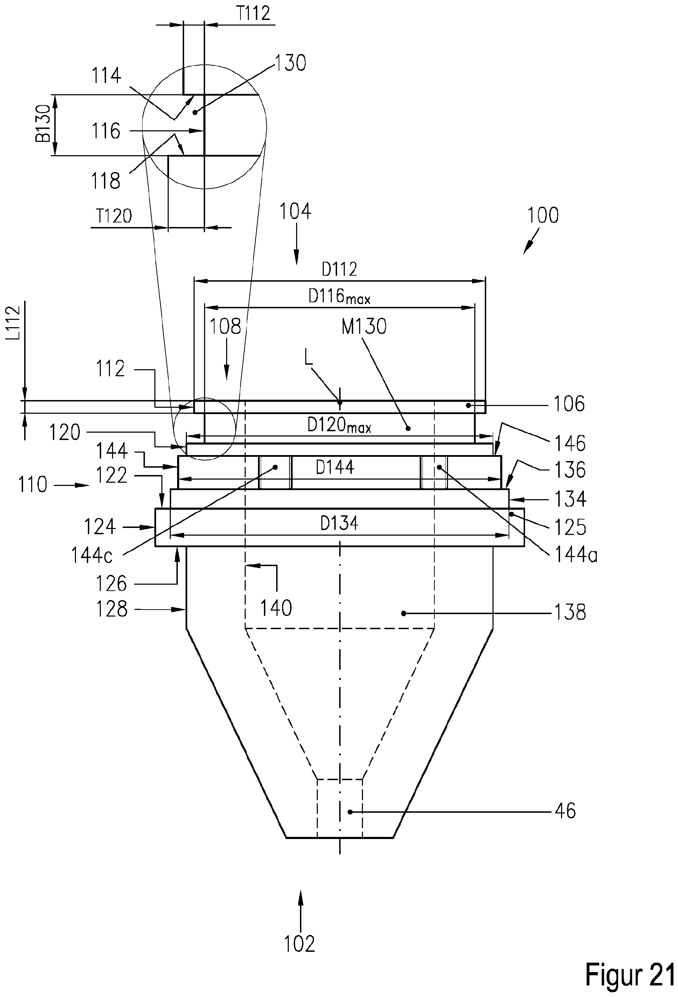

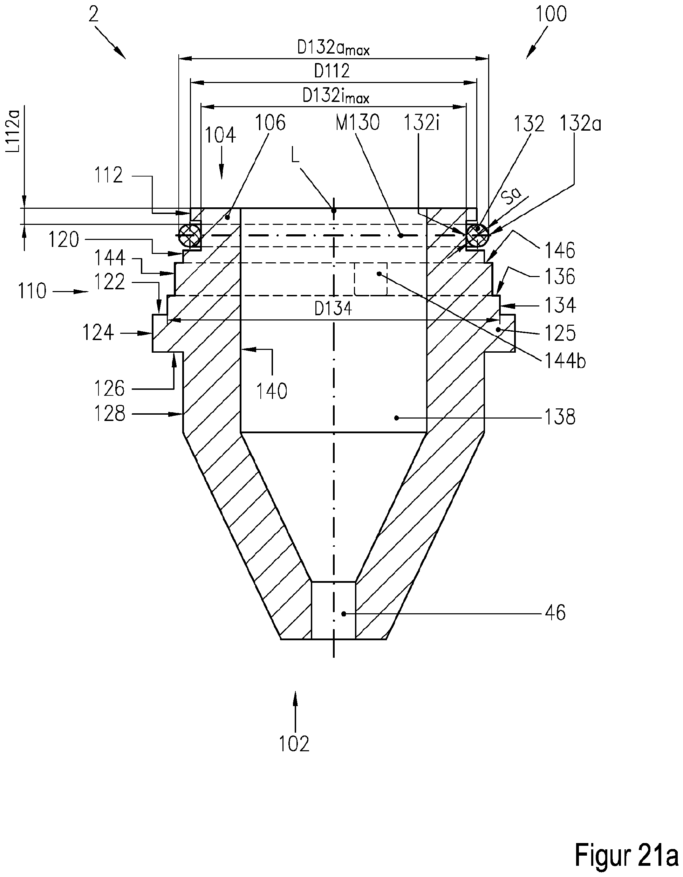

**Figur 21** zeigt beispielhaft eine Düse 2 für einen Plasmabrenner, die die Merkmale des Verbindungsteils 100 aus der Figur 18 aufweist. Die Düse hat am vorderen Ende eine Düsenbohrung oder einen Düsenkanal 46, der einen Plasmastrahl einschnürt. Das Plasmagas, das für die Erzeugung des Plasmastahls ionisiert wird, ist das Fluid, das durch den Innenraum 138 strömt. Der Plasmastahl selbst strömt zumindest durch einen Teilabschnitt dieses Innenraums 138, bevor er durch den Düsenkanal 46 ausströmt. In diesem Beispiel weist die Düse die Merkmale des Verbindungsteils 100 aus Figur 18 auf. Es sind natürlich auch alle anderen in den vorherigen Figuren gezeigten Ausführungsbeispiele möglich.

Hier ist ein Merkmal dargestellt, um die Baugröße der Düse möglichst gering zu lassen. Die Länge L112 zwischen der zum hinteren Ende 104 gerichteten Begrenzung 114 der Nut 130 bis zum hinteren Ende 104 mit der Fläche 108 ist kleiner als die Nutbreite B130. Sie beträgt in diesem Fall nur 40% der Nutbreite B130.

**Figur 21a** zeigt beispielhaft die gleiche Düse 2 mit einem O-Ring 132 in der Nut 130. In diesem Beispiel weist die Düse 2 die Merkmale des Verbindungsteils 100 aus Figur 18c auf. Es sind natürlich auch alle anderen in den vorherigen Figuren gezeigten Ausführungsbeispiele möglich.

Hier ist ein weiteres Merkmal dargestellt, um die Baugröße der Düse möglichst gering zu lassen. Die Länge L112a zwischen der zum hinteren Ende 104 gewandten Fläche des O-Rings 130 bis zum hinteren Ende 104 mit der Fläche 108 ist kleiner als die Nutbreite B130. Sie beträgt in diesem Beispiel nur die Hälfte der Nutbreite B130.

Solch eine Düse 2 mit den erfindungsgemäßen in den Ansprüchen definierten Merkmalen kann auch beispielsweise in einem Laserbearbeitungskopf eingesetzt werden.

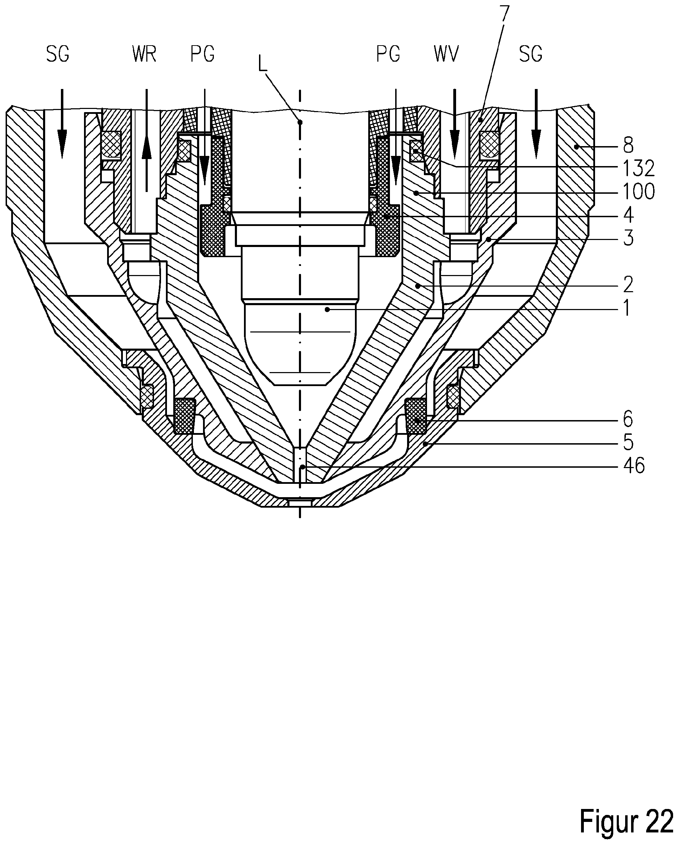

**Figur 22** zeigt wesentliche Bestandteile eines Plasmabrennerkopfes. Dies sind zumindest eine Elektrode 1, eine Düse 2, einei Düsenaufnahme 7 und eine Gasführung 4. Die Elektrode ist im inneren Hohlraum der Düse 2 angeordnet. Zwischen der Elektrode 1 und der Düse 2 befindet sich eine Gasführung 4 für das Plasmagas PG, das durch die Gasführung 4, dann den Raum zwischen Elektrode 1 und Düse 2 und letztlich aus der Düsenöffnung strömt. Die Düse 2 in die Düsenaufnahme 7 gesteckt. In diesem Fall kann die Düse 2 die Merkmale des Verbindungsteils 100 aufweisen, es sind alle in den vorherigen Figuren gezeigten Varianten möglich. Die Düsenaufnahme 7 kann die Merkmale des Verbindungsteils 200 aufweisen. Auch hier sind alle in den vorherigen Figuren gezeigten Varianten möglich.

Es ist ebenso möglich, dass die Düse 2 die Merkmale des zweiten Verbindungsteils 200 und die Düsenaufnahme 7 des ersten Verbindungsteils 100 aufweist.

Da eine Düse durch den Betrieb des Plasmabrenners stark verschleißt, ist ein Wechsel der Düse oft notwendig. Deshalb erleichtern die Vorteile der Erfindung, nämlich die Reduzierung der benötigten Kraft beim Fügen, die gute Ausrichtung parallel und radial zur Längsachse L der Verbindungsteile zueinander und je nach Ausführungsform die Positionierung rotatorisch zur Längsachse L entlang des Umfangs der Verbindungsteile zueinander, einzeln oder in beliebiger Kombination das Wechseln der Düse.

Außerdem wird eine sichere Abdichtung zwischen dem Innenraum der Düse 2 und dem Raum außerhalb der Düsenaufnahme 7 erreicht.

Der hier gezeigte Plasmabrennerkopf verfügt außer über den genannten Bestandteilen noch über eine Düsenkappe 3, die die Düse 2 fixiert, eine Schutzkappe 5, eine Gasführung 6, die sich zwischen der Schutzkappe 5 und der Düsenkappe 3 befindet und diese voneinander isoliert, sowie die Schutzkappenhalterung 8, die die Schutzkappe hält. Das Sekundärgas SG strömt durch Öffnungen (nicht dargestellt) der Gasführung 6, dann durch den Raum zwischen Düsenkappe 3 und Düsenschutzkappe 5 und letztlich aus der vorderen Öffnung der Düsenschutzkappe 5. Es gibt auch die Möglichkeit, dass die Düse 2 und Düsenkappe 3 aus einem Teil bestehen. Ebenso gibt es Plasmalichtbogenbrennerköpfe, die ohne Sekundärgas betrieben werden. Diese haben dann in der Regel keine Düsenschutzkappe und keine Düsenschutzkappenhalterung. Es handelt sich bei dem gezeigten Ausführungsbeispiel um einen wassergekühlten Plasmabrennerkopf. Die Kühlflüssigkeit strömt über den Kühlflüssigkeitsvorlauf WV durch den Düsenhalter 7, durchströmt den Raum 10 zwischen Düsenhalter 7 und Düse 2, in den Raum zwischen Düse 2 und Düsenkappe 3, bevor es durch den Kühlflüssigkeitsrücklauf WR wieder zurück strömt.

Die gezeigten Bestandteile, insbesondere nachfolgende Verschleißteile wie die Elektrode 1, die Gasführungen 4 und 6, die Düsenkappe 3, die Düsenschutzkappe 5, die Düsenaufnahme 7 und die Schutzkappenhalterung 8 können über die erfindungsgemäßen in den Ansprüchen definierten Merkmale verfügen. Aber auch andere Bestandteile des Plasmabrennerkopfes und des gesamten Plasmabrenners, in dem Verbindungen zwischen zwei oder mehreren Teilen realisiert werden müssen, beispielsweise bei einem Schnellwechselbrenner zwischen einem Plasmabrennerkopf und einem Plasmabrennerschaft, wie er in DE 10 2006 038 134 A1 beschrieben ist, können mit diesen Merkmalen ausgestattet werden.

In der vorangehenden Beschreibung wurde auf Verbindungsteile und Verschleißteile für einen Plasmabrennerkopf abgestellt. Bei dem Plasmabrennerkopf kann es sich um einen Plasmabrennerschneidkopf oder Plasmaschweißbrennerkopf handeln.

Die Beschreibung soll aber in analoger Weise auch für Verbindungsteile und Verschleißteile zur Laserbearbeitung, z. B. zum Laserschneiden oder Laserschweißen und damit für einen Laserschneidkopf bzw. einen Laserschweißkopf gelten.

Die Beschreibung soll aber in analoger Weise auch für Verbindungsteile und Verschleißteile zur Plasma-Laser-Bearbeitung, z. B. zum Plasma-Laser-Schneiden oder Plasma-Laser-Schweißen und damit für einen Plasma-Laser-Schneidkopf bzw. einen Plasma-Laser-Schweißkopf gelten.

### Bezugszeichenliste

- 1: Elektrode
- 2: Düse
- 3: Düsenkappe
- 4: Gasführung Plasmagas PG
- 5: Schutzkappe
- 6: Gasführung Sekundärgas SG
- 7: Düsenhalter
- 8: Schutzkappenhalterung
- 46: Düsenbohrung, Düsenkanal
- 100: erstes Verbindungsteil
- 102: vorderes Ende
- 104: hinteres Ende
- 106: Körper
- 108: Fläche
- 110: Außenfläche
- 112: Fläche
- 114: Fläche, seitliche Fläche, seitliche Begrenzungsfläche der Nut 130
- 116: Fläche, Nutboden
- 118: Fläche, seitliche Begrenzungsfläche der Nut 130
- 120: Fläche, Außenfläche
- 122: Fläche124 Fläche125 Flansch
- 126: Fläche128 Fläche, Außenfläche
- 130: Nut
- 132: O-Ring
- 132a: äußerste Fläche des O-Rings
- 132i: innerste Fläche des O-Rings
- 134: Fläche, Außenfläche, Zentrierfläche
- 136: Fläche, Außenfläche
- 138: Öffnung
- 140: Innenfläche
- 142: Fase
- 144: Fläche, Außenfläche
- 144a, 144b, 144c: Vertiefung, Nut
- 146: Fläche
- 200: zweites Verbindungsteil
- 202: vorderes Ende
- 204: hinteres Ende
- 206: Körper
- 212: Außenfläche
- 214: Fläche, seitliche Begrenzungsfläche der Nut 230
- 216: Fläche, Nutboden
- 218: Fläche, seitliche Begrenzungsfläche der Nut 230
- 222: Fläche, Anschlagfläche
- 230: Nut
- 232: O-Ring
- 238: Öffnung
- 240: Innenfläche, Zentrierfläche
- 242: Innenfläche, Fase
- 242a: Körperkante
- 242b: Körperkante
- 244: Fläche, Innenfläche
- 246: Innenfläche, Zentrierfläche
- 248: Flansch
- 250: Fläche, Innenfläche
- 252: Fläche, Innenfläche
- 254: Fläche, Innenfläche
- 256: Fläche, Innenfläche
- 258: Fläche, Innenfläche
- 258a, 258b, 258c: Vorsprünge, Nasen
- 300: Berührungsstelle
- B130: Nutbreite
- D112: Abstand, Durchmesser
- D112max: größter Abstand
- D112min: kleinster Abstand
- D116: Abstand
- D116max: größter Abstand
- D116min: kleinster Abstand
- D120: Abstand, Durchmesser
- D120max: größter Abstand
- D120min: kleinster Abstand
- D124: Durchmesser
- D132a: Abstand
- D132amax: größter Anstand
- D132amin: kleinster Abstand
- D132i: Abstand
- D132imax: größter Anstand
- D132imin: kleinster Abstand
- D134: Durchmesser
- D240: Durchmesser
- D244: Abstand
- D244max: größter Abstand
- D244ₘᵢₙ: kleinster Abstand
- D246: Durchmesser
- F: virtueller Fixpunkt
- L: Längsachse
- L112: Abstand
- L112ₘₐₓ: maximaler Abstand
- L112ₘᵢₙ: minimaler Abstand
- L112a: Abstand
- L112aₘₐₓ: maximaler Abstand
- L112aₘᵢₙ: minimaler Abstand
- L116: Abstand
- L116ₘₐₓ: maximaler Abstand
- L120: Abstand
- L120ₘₐₓ: maximaler Abstand
- L120ₘᵢₙ: minimaler Abstand
- L120a: Abstand
- L120aₘₐₓ: maximaler Abstand
- L120aₘᵢₙ: minimaler Abstand
- L124: Abstand
- L124ₘₐₓ: maximaler Abstand
- L124ₘᵢₙ: minimaler Abstand
- L124a: Abstand
- L124aₘₐₓ: maximaler Abstand
- L124aₘᵢₙ: minimaler Abstand
- L128: Abstand
- L128ₘₐₓ: maximaler Abstand
- L128ₘᵢₙ: minimaler Abstand
- L128a: Abstand
- L128aₘₐₓ: maximaler Abstand
- L128aₘᵢₙ: minimaler Abstand
- L212: Abstand
- L212ₘₐₓ: maximaler Abstand
- L212ₘᵢₙ: minimaler Abstand
- L216: Abstand
- L216ₘₐₓ: maximaler Abstand
- L220: Abstand
- L220ₘₐₓ: maximaler Anstand
- L220ₘᵢₙ: minimaler Abstand
- L224: Abstand
- L224ₘₐₓ: maximaler Anstand
- L224ₘᵢₙ: minimaler Abstand
- L228: Abstand
- L228ₘₐₓ: maximaler Anstand
- L228ₘᵢₙ: minimaler Abstand
- L228a: Abstand
- L228aₘₐₓ: maximaler Anstand
- L228aₘᵢₙ: minimaler Abstand
- L242: Abstand
- L242bmax: maximaler Abstand
- L242bmin: minimaler Abstand
- L243: Abstand
- M130: Virtuelle Mittellinie der Nut 130
- M132: virtuelle Mittellinie der Schnur des O-Rings oder Profilrings
- Sa: Schnurstärke
- T112: Abstand, Nuttiefe
- T112max: größter Abstand
- T112min: kleinster Abstand
- T120: Abstand, Nuttiefe
- T120max: größter Abstand
- T120min: kleinster Abstand
- T130: Nuttiefe
- α: Winkel

## Patentansprüche

1. Verbindungsteil (100; 200) für einen Bearbeitungskopf zur thermischen Materialbearbeitung, umfassend einen Körper (106; 206), der sich entlang einer Längsachse L erstreckt, mit einer Außenfläche (110; 112; 120; 212) und einer Innenfläche (140; 240; 244) mit einem vorderen Ende (102; 202) und einem hinteren Ende (104; 204), wobei die Außenfläche (110) und/oder die Innenfläche (240) zumindest eine sich in Umfangsrichtung erstreckende Nut (130; 230) mit einer Nuttiefe (T130; T112; T120; T230) für das Aufnehmen eines O-Rings (132, 232) oder eines Profilrings aufweist,
**dadurch gekennzeichnet, dass**
der Nutboden (116 bzw. 216) der Nut (130 bzw. 230) entlang des Umfangs unterschiedliche sich durch die Längsachse L und senkrecht zur Längsachse L erstreckende Abstände D116 zwischen den gegenüberliegenden Abschnitten des Nutbodens (116 bzw. 210) der Nut (130 bzw. 230) aufweist und/oder wobei zumindest eine Außenfläche (112 und/oder 120) entlang des Umfangs unterschiedliche sich durch die Längsachse L und senkrecht zur Längsachse L erstreckende Abstände D112, D120 zwischen den gegenüberliegenden Abschnitten der Außenfläche (112, 120) aufweist und/oder wobei zumindest eine Innenfläche (244) entlang des Umfangs unterschiedliche sich durch die Längsachse L und senkrecht zur Längsachse L erstreckende Abstände (D244) zwischen den gegenüberliegenden Abschnitten der Innenfläche (244) aufweist.

2. Verbindungsteil (100;200) nach Anspruch 1, wobei der sich durch die Längsachse L und senkrecht zur Längsachse L erstreckende Abstand (D116) zwischen den gegenüberliegenden Abschnitten des Nutbodens (116; 216) mindestens einen kleinsten Abstand (D116ₘᵢₙ) und mindestens einen größten Abstand (D116ₘₐₓ) aufweist
und/ oder
wobei der sich durch die Längsachse L und senkrecht zur Längsachse L erstreckende Abstand (D112; D120) zwischen den gegenüberliegenden Abschnitten der Außenfläche (112; 120) mindestens einen kleinsten Abstand D112ₘᵢₙ, D120ₘᵢₙ und mindestens einen größten Abstand (D112ₘₐₓ; D120ₘₐₓ) aufweist
und/ oder
wobei der sich durch die Längsachse L und senkrecht zur Längsachse L erstreckende Abstand (D244) zwischen den gegenüberliegenden Abschnitten der Innenfläche (244) mindestens einen kleinsten Abstand (D244ₘᵢₙ) und mindestens einen größten Abstand (D244ₘₐₓ) aufweist
und
die Differenz zwischen dem jeweiligen größten und kleinsten Abstand (D116ₘₐₓ-D116ₘᵢₙ; D112ₘₐₓ-D112ₘᵢₙ; D120ₘₐₓ-D120ₘᵢₙ) und/oder (D244ₘₐₓ-D244ₘᵢₙ) mindestens ¼ , bevorzugter ½ , und/oder höchstens das 2-fache, bevorzugter das 1,5-fache der Nutbreite (B130; B230) der Nut (130; 230) beträgt und/ oder
mindestens ¼ , bevorzugter ½ , und/oder höchstens das 2-fache, bevorzugter das 1,5-fache der Nuttiefe (T130 T230) der Nut (130; 230) beträgt und/ oder
mindestens 0,4 mm, besser 0,5 mm
und/ oder
höchstens 3 mm, besser 2,5 mm beträgt.

3. Verbindungsteil (100; 200)nach einem der Ansprüche 1 oder 2, wobei sich die parallel zur Längsachse L erstreckende Länge (L112; L212) zwischen der zum hinteren Ende (104, 204) gerichteten Begrenzung (114; 214) der Nut (130; 230) bis zum hinteren Ende 104, 204 mit der Fläche 108 kleiner als, bevorzugter kleiner als die Hälfte, noch bevorzugter kleiner als 2/5 der Nutbreite (B130; B230) der Nut (130, 230) ist.

4. Verbindungsteil (100; 200) nach einem der Ansprüche 1 bis 3, wobei zumindest auf einer Seite der Nut die seitliche Begrenzungsfläche (114; 118: 214; 218) unterschiedliche sich axial zur Längsachse L erstreckende Abstände (T112 und T120) zwischen dem Nutboden (116; 216) und der Fläche (112; 120; 244; 246) aufweist.

5. Verbindungsteil (100; 200) für einen Bearbeitungskopf zur thermischen Materialbearbeitung, umfassend einen Körper (106; 206) der sich entlang einer Längsachse L erstreckt, mit einer Außenfläche (110; 112; 120; 212) und/oder Innenfläche (140; 240; 244) mit einem vorderen Ende (102; 202) und einem hinteren Ende (104; 204), wobei die Außenfläche (110) und/oder die Innenfläche (240) zumindest eine sich in Umfangsrichtung erstreckende Nut (130; 230) mit einer Nutbreite (B130, B230) und einer Nuttiefe (T130; T112; T120; T230) mit einem O-Ring (132; 232) oder Profilring mit einer Schnurstärke Sa aufweist,
**dadurch gekennzeichnet dass**,
die innerste zur Längsachse L gerichtete Fläche (132i) des O-Rings (132; 232) entlang des Umfangs unterschiedliche sich durch die Längsachse L und senkrecht zur Längsachse L erstreckende Abstände (D132i) zwischen den gegenüberliegenden Abschnitten der innersten Fläche (132i) des O-Rings aufweist
und/oder
wobei die äußerste Fläche (132a) des O-Rings (132, 232) entlang des Umfangs unterschiedliche sich durch die Längsachse L und senkrecht zur Längsachse L erstreckende Abstände (D132a) zwischen den gegenüberliegenden Abschnitten der äußersten Fläche (132a) des O-Rings aufweist.

6. Verbindungsteil (100; 200) nach Anspruch 5, wobei der sich durch die Längsachse L und senkrecht zur Längsachse L erstreckende Abstand (D132i) mindestens einen kleinsten Abstand (D132iₘᵢₙ) und mindestens einen größten Abstand (D132iₘₐₓ) aufweist
und/ oder
wobei der sich durch die Längsachse L und senkrecht zur Längsachse L erstreckende Abstand (D132a) mindestens einen kleinsten Abstand (D132aₘᵢₙ), und mindestens einen größten Abstand (D132aₘₐₓ) aufweist
und
die Differenz zwischen dem jeweiligen größten Abstand und dem kleinsten Abstand (D132iₘₐₓ-D132iₘᵢₙ, D132aₘₐₓ-D132aₘᵢₙ),
mindestens ¼ , bevorzugter ½ der Nutbreite B130, B230 und/oder
höchstens das 2-fache, bevorzugter das 1,5-fache der Nutbreite (B130 ; B230) und/oder
mindestens ¼ , bevorzugter ½ der Nuttiefe (T130; T112; T120; T230) der Nut (130; 230)
und/oder
höchstens das 2-fache, bevorzugter das 1,5-fache der Nuttiefe (T130; T112; T120; T230) der Nut (130; 230) beträgt
und/oder
mindestens ein Drittel, bevorzugter mindestens die Hälfte der Schnurstärke Sa oder des Durchmessers der Schnur
und/oder
mindestens ein Drittel, bevorzugter mindestens die Hälfte der sich maximal in Längsachse L erstreckenden Breite des O-Rings (132, 232) oder Profilrings (132; 232)
und/oder
mindestens 0,4 mm, besser 0,5 mm
und/oder
maximal dem doppelten, bevorzugter maximal dem 1,5 fachen, am bevorzugtesten maximal der Schnurstärke oder des Durchmessers der Schnur und/oder
maximal der doppelten, bevorzugter maximal der 1,5 fachen, am bevorzugtesten maximal der sich maximal in Längsachse erstreckenden Breite des O-Rings(132; 232) oder Profilrings (132; 232)
und/oder
maximal 3 mm, bevorzugter 2,5 mm beträgt.

7. Verbindungsteil (100) nach einem der Ansprüche 5 bis 6, wobei zumindest eine weitere Außenfläche (144) vorhanden ist, die über die äußerste Fläche (132a) des O-Rings herausragt und über Vertiefungen/Nuten (144a; 144b; 144c) verfügt.

8. Verbindungsteil (100) nach Anspruch 7, wobei die äußerste Fläche 132a des O-Rings (132) nicht über den tiefsten Abschnitt der Vertiefungen/Nuten (144a, 144b, 144c) herausragt.

9. Verbindungsteil nach einem der Ansprüche 1 bis 8, wobei es sich um ein Verschleißteil, insbesondere eine Elektrode, eine Düse, eine Kappe, eine Schutzkappe, eine Düsenschutzkappe, eine Schutzkappenhalterung eine Gasführung, ein Isolierteil oder eine Kombination daraus oder eine Verschleißteilhalterung dafür, handelt.

10. Verbindungsteil nach einem der Ansprüche 1 bis 8, wobei es sich um eine Fügestelle für einen Plasmabrennerkopf, einen Plasmabrennerschaft, eine Laserkopf oder einen Plasma-Laser-Kopf oder um einen Bestandteil der Fügestelle zwischen einem Plasmabrennerkopf und einem Brennerschaft oder einem Laserkopf und einem Laserschaft oder einen Plasma-Laser-Kopf und einen Plasma-Laser-Schaft handelt.

## Claims

1. Connecting part (100; 200) for a processing head for thermal material processing, comprising a body (106; 206) that extends along a longitudinal axis L, with an outer face (110; 112; 120; 212) and an inner face (140; 240; 244) with a front end (102; 202) and a rear end (104; 204), wherein the outer face (110) and/or the inner face (240) have/has at least one slot (130; 230), extending in the circumferential direction, with a slot depth (T130; T112; T120; T230) for receiving an O-ring (132, 232) or a profile ring,
**characterized in that**
the slot bottom (116 and 216) of the slot (130 and 230) exhibits, around the circumference, different distances (D116), extending through the longitudinal axis L and perpendicularly to the longitudinal axis L, between the opposite portions of the slot bottom (116 and 210) of the slot (130 and 230) and/or
wherein at least one outer face (112 and/or 120) exhibits, around the circumference, different distances (D112, D120), extending through the longitudinal axis L and perpendicularly to the longitudinal axis L, between the opposite portions of the outer face (112, 120) and/or wherein at least one inner face (244) exhibits, around the circumference, different distances (D244), extending through the longitudinal axis L and perpendicularly to the longitudinal axis L, between the opposite portions of the inner face (244).

2. Connecting part (100; 200) according to Claim 1, wherein the distance (D116), extending through the longitudinal axis L and perpendicularly to the longitudinal axis L, between the opposite portions of the slot bottom (116; 216) exhibits at least one smallest distance (D116ₘᵢₙ) and at least one largest distance (D116ₘₐₓ)
and/or
wherein the distance (D112; D120), extending through the longitudinal axis L and perpendicularly to the longitudinal axis L, between the opposite portions of the outer face (112; 120) exhibits at least one smallest distance (D112ₘᵢₙ, D120ₘᵢₙ) and at least one largest distance (D112ₘₐₓ; D120ₘₐₓ)
and/or
wherein the distance (D244), extending through the longitudinal axis L and perpendicularly to the longitudinal axis L, between the opposite portions of the inner face (244) exhibits at least one smallest distance (D244ₘᵢₙ) and at least one largest distance (D244ₘₐₓ)
and
the difference between the largest and smallest distance (D116ₘₐₓ-D116ₘᵢₙ; D112ₘₐₓ-D112ₘᵢₙ; D120ₘₐₓ-D120ₘᵢₙ) and/or (D244ₘₐₓ-D244ₘᵢₙ) in each case amounts to at least ¼, more preferably ½, and/or at most 2 times, more preferably 1.5 times the slot width (B130; B230) of the slot (130; 230) and/or
at least ¼, more preferably ½, and/or at most 2 times, more preferably 1.5 times the slot depth (T130, T230) of the slot (130; 230)
and/or
at least 0.4 mm, better still 0.5 mm
and/or
at most 3 mm, better still 2.5 mm.

3. Connecting part (100; 200) according to either of Claims 1 and 2, wherein the length (L112; L212), extending parallel to the longitudinal axis L, between the boundary (114; 214), directed towards the rear end (104, 204), of the slot (130; 230) and the rear end (104, 204) with the face (108) is less than, more preferably less than half, even more preferably less than 2/5 of the slot width (B130; B230) of the slot (130, 230).

4. Connecting part (100; 200) according to one of Claims 1 to 3, wherein, at least on one side of the slot, the lateral boundary face (114; 118: 214; 218) exhibits different distances (T112 and T120), extending axially with respect to the longitudinal axis L, between the slot bottom (116; 216) and the face (112; 120; 244; 246).

5. Connecting part (100; 200) for a processing head for thermal material processing, comprising a body (106; 206) that extends along a longitudinal axis L, with an outer face (110; 112; 120; 212) and/or inner face (140; 240; 244) with a front end (102; 202) and a rear end (104; 204), wherein the outer face (110) and/or the inner face (240) have/has at least one slot (130; 230), extending in the circumferential direction, with a slot width (B130, B230) and a slot depth (T130; T112; T120; T230) with an O-ring (132; 232) or profile ring with a cord size Sa,
**characterized in that**
the innermost face (132i), directed towards the longitudinal axis L, of the O-ring (132; 232) exhibits, around the circumference, different distances (D132i), extending through the longitudinal axis L and perpendicularly to the longitudinal axis L, between the opposite portions of the innermost face (132i) of the O-ring
and/or
wherein the outermost face (132a) of the O-ring (132, 232) exhibits, around the circumference, different distances (D132a), extending through the longitudinal axis L and perpendicularly to the longitudinal axis L, between the opposite portions of the outermost face (132a) of the O-ring.

6. Connecting part (100; 200) according to Claim 5, wherein the distance (D132i) extending through the longitudinal axis L and perpendicularly to the longitudinal axis L exhibits at least one smallest distance (D132iₘᵢₙ) and at least one largest distance (D132iₘₐₓ)
and/or
wherein the distance (D132a) extending through the longitudinal axis L and perpendicularly to the longitudinal axis L exhibits at least one smallest distance (D132aₘᵢₙ) and at least one largest distance (D132aₘₐₓ)
and
the difference between the largest distance and the smallest distance (D132iₘₐₓ-D132iₘᵢₙ, D132aₘₐₓ-D132aₘᵢₙ) in each case
amounts to at least ¼, more preferably ½ of the slot width (B130, B230)
and/or
at most 2 times, more preferably 1.5 times the slot width (B130; B230)
and/or
at least ¼, more preferably ½ of the slot depth (T130; T112; T120; T230) of the slot (130; 230) and/or
at most 2 times, more preferably 1.5 times the slot depth (T130; T112; T120; T230) of the slot (130; 230) and/or
at least one third, more preferably at least half of the cord size Sa or of the diameter of the cord and/or
at least one third, more preferably at least half of the width, extending at most along the longitudinal axis L, of the O-ring (132, 232) or profile ring (132; 232) and/or
at least 0.4 mm, better still 0.5 mm
and/or
at most twice, more preferably at most 1.5 times, most preferably at most the cord size or the diameter of the cord
and/or
at most twice, more preferably at most 1.5 times, most preferably at most the width, extending at most along the longitudinal axis, of the O-ring (132; 232) or profile ring (132; 232)
and/or
at most 3 mm, more preferably 2.5 mm.

7. Connecting part (100) according to either of Claims 5 and 6, wherein there is at least one further outer face (144), which protrudes beyond the outermost face (132a) of the O-ring and has recesses/slots (144a; 144b; 144c).

8. Connecting part (100) according to Claim 7, wherein the outermost face (132a) of the O-ring (132) does not protrude beyond the deepest portion of the recesses/slots (144a, 144b, 144c).

9. Connecting part according to one of Claims 1 to 8, wherein it is a wearing part, in particular an electrode, a nozzle, a cap, a protective cap, a nozzle protective cap, a protective-cap mount, a gas guide, an insulating part or a combination thereof or a wearing-part mount therefor.

10. Connecting part according to one of Claims 1 to 8, wherein it is a joint for a plasma torch head, a plasma torch shaft, a laser head or a plasma laser head, or a constituent of the joint between a plasma torch head and a torch shaft or a laser head and a laser shaft or a plasma laser head and a plasma laser shaft.

## Revendications

1. Pièce de liaison (100 ; 200) pour une tête de traitement destinée à un traitement thermique de matériau, comprenant un corps (106 ; 206) qui s'étend le long d'un axe longitudinal L, avec une surface extérieure (110 ; 112 ; 120 ; 212) et une surface intérieure (140 ; 240 ; 244) ayant une extrémité avant (102 ; 202) et une extrémité arrière (104 ; 204), la surface extérieure (110) et/ou la surface intérieure (240) présentant au moins une rainure (130 ; 230) qui s'étend circonférentiellement et qui a une profondeur de rainure (T130 ; T112 ; T120 ; T230) destinée à recevoir un joint torique (132, 232) ou un anneau profilé,
**caractérisée en ce que**
le fond (116 ou 216) de la rainure (130 ou 230) présente, le long de la circonférence, des distances D116 différentes s'étendant à travers l'axe longitudinal L et perpendiculairement à l'axe longitudinal L entre les parties opposées du fond (116 ou 210) de la rainure (130 ou 230) et/ou
au moins une surface extérieure (112 et/ou 120) présente, le long de la circonférence, des distances (D112, D120) différentes, qui s'étendent à travers l'axe longitudinal L et perpendiculairement à l'axe longitudinal L, entre les parties opposées de la surface extérieure (112, 120), et/ou
au moins une surface intérieure (244) présente, le long de la circonférence, des distances (D244) différentes, qui s'étendent à travers l'axe longitudinal L et perpendiculairement à l'axe longitudinal L, entre les parties opposées de la surface intérieure (244).

2. Pièce de liaison (100 ; 200) selon la revendication 1, dans laquelle la distance (D116) qui s'étend à travers l'axe longitudinal L et perpendiculairement à l'axe longitudinal L, entre les parties opposées du fond de la rainure (116 ; 216), présente au moins une plus petite distance (D116ₘᵢₙ) et au moins une plus grande distance (D116ₘₐₓ),
et/ou
dans laquelle la distance (D112 ; D120) s'étendant à travers l'axe longitudinal L et perpendiculairement à l'axe longitudinal L entre les parties opposées de la surface extérieure (112 ; 120) présente au moins une plus petite distance (D112ₘᵢₙ, D120ₘᵢₙ) et au moins une plus grande distance (D112ₘₐₓ ; D120ₘₐₓ),
et/ou
dans laquelle la distance (D244) s'étendant à travers l'axe longitudinal L et perpendiculairement à l'axe longitudinal L entre les parties opposées de la surface intérieure (244) présente au moins une plus petite distance (D244ₘᵢₙ) et au moins une plus grande distance (D244ₘₐₓ),
et
la différence entre les distances respectives la plus grande et la plus petite (D116ₘₐₓ-D116ₘᵢₙ ; D112ₘₐₓ-D112ₘᵢₙ ; D120ₘₐₓ-D120ₘᵢₙ) et/ou (D244ₘₐₓ-D244ₘᵢₙ) est d'au moins ¼, de préférence de ½, et/ou au plus de 2 fois, de préférence d'1,5 fois, la largeur de rainure (B130 ; B230) de la rainure (130 ; 230),
et/ou
est d'au moins ¼, de préférence de ½, et/ou au plus de 2 fois, de préférence d'1,5 fois, la profondeur de rainure (T130 T230) de la rainure (130 ; 230),
et/ou
au moins de 0,4 mm, de préférence 0,5 mm,
et/ou
d'au maximum 3 mm, de préférence de 2,5 mm.

3. Pièce de liaison (100 ; 200) selon l'une des revendications 1 ou 2, dans laquelle la longueur (L112 ; L212), s'étendant parallèlement à l'axe longitudinal L entre la limite (114 ; 214) de la rainure (130 ; 230) dirigée vers l'extrémité arrière (104, 204) et l'extrémité arrière (104, 204) avec la surface (108), est inférieure à la largeur de rainure (B130 ; B230) de la rainure (130, 230), de préférence inférieure à la moitié, de préférence encore inférieure aux 2/5, de cette largeur.

4. Pièce de liaison (100 ; 200) selon l'une des revendications 1 à 3, dans laquelle, sur au moins un côté de la rainure, la surface de délimitation latérale (114 ; 118 ; 214 ; 218) présente des distances (T112 et T120) différentes, s'étendant axialement par rapport à l'axe longitudinal, entre le fond de la rainure (116 ; 216) et la surface (112 ; 120 ; 244 ; 246).

5. Pièce de liaison (100 ; 200) pour une tête de traitement pour le traitement thermique de matériaux, comprenant un corps (106 ; 206) qui s'étend le long d'un axe longitudinal L, avec une surface extérieure (110 ; 112 ; 120 ; 212) et/ou une surface intérieure (140 ; 240 ; 244) ayant une extrémité avant (102 ; 202) et une extrémité arrière (104 ; 204), la surface extérieure (110) et/ou la surface intérieure (240) présentant au moins une rainure (130 ; 230) s'étendant circonférentiellement avec une largeur de rainure (B130, B230) et une profondeur de rainure (T130 ; T112 ; T120 ; T230) avec un joint torique (132 ; 232) ou un anneau profilé ayant une épaisseur de cordon Sa,
**caractérisée en ce que**
la surface la plus intérieure (132i) du joint torique (132 ; 232) dirigée vers l'axe longitudinal L présente, le long de la circonférence, des distances (D132i) différentes, s'étendant à travers l'axe longitudinal L et perpendiculairement à l'axe longitudinal L entre les parties opposées de la surface la plus intérieure (132i) du joint torique,
et/ou
la surface la plus extérieure (132a) du joint torique (132, 232) présente, le long de la circonférence, des distances (D132a) différentes s'étendant à travers l'axe longitudinal L et perpendiculairement à l'axe longitudinal L entre les parties opposées de la surface la plus extérieure (132a) du joint torique.

6. Pièce de liaison (100 ; 200) selon la revendication 5, dans laquelle la distance (D132i) s'étendant à travers l'axe longitudinal L et perpendiculairement à l'axe longitudinal L présente au moins une plus petite distance (D132iₘᵢₙ) et au moins une plus grande distance (D132iₘₐₓ),
et/ou
la distance (D132a) s'étendant à travers l'axe longitudinal L et perpendiculairement à l'axe longitudinal L présente au moins une plus petite distance (D132aₘᵢₙ), et au moins une plus grande distance (D132aₘₐₓ),
et
la différence entre la plus grande distance respective et la plus petite distance (D132iₘₐₓ-D132iₘᵢₙ, D132aₘₐₓ-D132aₘᵢₙ),
est d'au moins ¼, de préférence de ½, de la largeur de la rainure B130, B230,
et/ou
est d'au plus 2 fois, de préférence de 1,5 fois, la largeur de la rainure (B130 ; B230),
et/ou
est d'au moins ¼, de préférence de ½, de la profondeur de rainure (T130 ; T112 ; T120 ; T230) de la rainure (130 ; 230),
et/ou
est au plus de 2 fois, de préférence de 1,5 fois, la profondeur de rainure (T130 ; T112 ; T120 ; T230) de la rainure (130 ; 230),
et/ou
est d'au moins un tiers, de préférence d'au moins la moitié, de l'épaisseur Sa ou du diamètre du cordon, et/ou
est d'au moins un tiers, de préférence d'au moins la moitié, de la largeur maximale du joint torique (132, 232) ou de l'anneau profilé (132 ; 232) s'étendant dans l'axe longitudinal L,
et/ou
au moins de 0,4 mm, de préférence 0,5 mm,
et/ou
est au maximum le double, de préférence au maximum 1,5 fois, de préférence au maximum l'épaisseur ou le diamètre du cordon,
et/ou
est au maximum le double, de préférence au maximum 1,5 fois, de préférence au maximum la largeur maximale du joint torique (132 ; 232) ou de l'anneau profilé (132 ; 232) s'étendant dans l'axe longitudinal,
et/ou
est au maximum de 3 mm, de préférence de 2,5 mm.

7. Pièce de liaison (100) selon l'une des revendications 5 à 6, dans laquelle il existe au moins une autre surface extérieure (144) qui fait saillie de la surface la plus extérieure (132a) du joint torique et qui présente des évidements/rainures (144a ; 144b ; 144c).

8. Pièce de liaison (100) selon la revendication 7, dans laquelle la surface la plus extérieure 132a du joint torique (132) ne fait pas saillie au-delà de la partie la plus profonde des évidements/rainures (144a, 144b, 144c).

9. Pièce de liaison selon l'une des revendications 1 à 8, qui est une pièce d'usure, notamment d'une électrode, une buse, un capuchon, un capuchon de protection, un capuchon de protection de buse, un support de capuchon de protection, un guide de gaz, une pièce isolante ou une combinaison de ceux-ci ou un support de pièce d'usure pour ceux-ci.

10. Pièce de liaison selon l'une des revendications 1 à 8, qui est une zone d'assemblage d'une tête de torche à plasma, une tige de torche à plasma, une tête de laser ou une tête de laser à plasma, ou un composant de la zone d'assemblage entre une tête de torche à plasma et une tige de torche ou entre une tête de laser et une tige de laser ou entre une tête de laser à plasma et une tige de laser à plasma.
